# EUROPEAN PATENT APPLICATION

(11) **EP 4 844 730 A1**
(43) Date of publication of application: **25.11.2026**
(21) Application number: 26179447.3
(22) Date of filing: 19.05.2026
(51) Int. Cl.: G08G 3/00, G06Q 10/00, G08G 3/02

(54) **SYSTEM AND METHOD FOR RISK-DRIVEN CONTROL OF SENSING ASSETS FOR MARITIME SITUATIONAL AWARENESS**

(30) Priority: 19.05.2025 US 202563807979 P; 27.08.2025 US 202563871232 P; 18.05.2026 US 202619680578
(71) Applicant: Ubotica Technologies Limited, Dublin D11 KXN4 (IE)
(72) Inventor: RIJLAARSDAM, David, Dublin D11 KXN4 (IE); DUNNE, Aubrey, Dublin D11 KXN4 (IE)
(74) Representative: FRKelly

(57) **Abstract**

Systems and methods for controlling sensing assets to generate iterative maritime situational awareness for a maritime geographic area. A processing system may receive maritime monitoring inputs for a current monitoring iteration, including configuration information, maritime risk-indicator data, asset-availability data, asset-constraint data, and prior fused maritime intelligence. The processing system may generate a spatiotemporal risk map having spatiotemporal cells with risk values and transform selected spatiotemporal cells into observation entries. The processing system may generate an enhanced observation schedule by assigning selected observation entries to scheduled observation actions, including tasking actions for taskable sensing assets and retrieval actions for observation data from non-tasked sensing assets. The processing system may cause execution of the scheduled observation actions, obtain observation output, retrieve contextual maritime data, generate current fused maritime intelligence, and update the spatiotemporal risk map for a subsequent monitoring iteration.

## Description

### RELATED APPLICATIONS

This application claims the benefit of priority to U.S. Provisional Patent Application No. 63/807,979 entitled "System and Method for Improving Maritime Situational Awareness" filed on May 19, 2025 and U.S. Provisional Patent Application No. 63/871,232 entitled "System and Method for Improving Maritime Situational Awareness" filed on August 27, 2025.

### BACKGROUND

Maritime situational awareness involves acquisition, processing, and distribution of information concerning maritime geographic areas, vessels, maritime infrastructure, ports, coastal zones, shipping lanes, exclusive economic zones, offshore installations, undersea infrastructure, and other maritime features or events. Computer systems used in maritime monitoring may process geospatial data, temporal data, sensor data, identity data, route data, environmental data, and operator-defined monitoring parameters associated with maritime features or maritime events.

Maritime monitoring may involve large geographic regions and moving features whose positions, identities, behaviors, and risk characteristics vary over time. Information associated with maritime monitoring may be represented using coordinate systems, tracks, routes, zones, grids, tiles, cells, time windows, observation windows, or other spatial, temporal, or spatiotemporal data structures. Outputs of maritime monitoring systems may be provided as maps, reports, alerts, schedules, tasking requests, observation records, data feeds, or decision-support information.

Maritime observations may be obtained from heterogeneous sensing assets and information sources. Examples of sensing assets include satellite-based sensors, high-altitude platform sensors, airborne sensors, unmanned aerial vehicles, unmanned surface vehicles, unmanned underwater vehicles, autonomous buoys, coastal sensors, port sensors, cameras, radar systems, radio-frequency collectors, acoustic sensors, and other remote or local sensing platforms. Examples of sensing modalities include electro-optical imagery, visible-spectrum imagery, multispectral imagery, hyperspectral imagery, synthetic aperture radar imagery, thermal imagery, radio-frequency observations, radar observations, acoustic observations, and transponder-based observations.

Sensing assets and sensing modalities may be associated with technical parameters such as spatial coverage, swath, revisit timing, pointing capability, sensing resolution, weather sensitivity, daylight dependency, tasking availability, tasking latency, observation latency, delivery latency, downlink availability, onboard processing capability, communications bandwidth, operating cost, access constraints, and operator permissions. Data associated with sensing assets may be accessed through asset-control interfaces, tasking interfaces, repository interfaces, application programming interfaces, communication links, operator portals, or other computer-implemented interfaces.

Maritime monitoring information may also include contextual maritime data from sources other than a scheduled sensing asset. Examples of contextual maritime data include Automatic Identification System data, vessel registry data, vessel ownership data, voyage data, port-call data, manifest data, sanctions-related data, route information, weather data, oceanographic data, bathymetric data, historical track data, infrastructure-location data, social-media information, open-source intelligence, radio-frequency intelligence, and user-supplied information. Computer-implemented processing may be used to correlate, filter, classify, geolocate, transform, or fuse such heterogeneous information.

Computer systems for maritime monitoring may include cloud computing resources, edge computing resources, onboard processors, ground-station systems, databases, data repositories, machine-learning processors, computer-vision processors, signal-processing processors, communications interfaces, tasking interfaces, user interfaces, and decision-support systems. Such systems may operate over distributed networks and may exchange data with sensing assets, asset operators, external data providers, and end-user systems.

### SUMMARY

Various aspects include methods of controlling sensing assets to generate iterative maritime situational awareness for a maritime geographic area, the method which may include generating, from maritime monitoring inputs, a spatiotemporal risk map which may include a plurality of spatiotemporal cells for the maritime geographic area, generating, from the spatiotemporal risk map, a plurality of observation entries by transforming selected spatiotemporal cells of the plurality of spatiotemporal cells into the plurality of observation entries based on risk values associated with the selected spatiotemporal cells, generating an enhanced observation schedule by transforming the plurality of observation entries, asset-availability data for a plurality of sensing assets, and asset-constraint data for the plurality of sensing assets into assignments of selected observation entries of the plurality of observation entries to respective scheduled observation actions, and causing execution of the respective scheduled observation actions in accordance with the enhanced observation schedule.

In some aspects, the received maritime monitoring inputs include at least one or more of configuration information for the maritime geographic area, maritime risk-indicator data from one or more external data sources, the asset-availability data for the plurality of sensing assets, the asset-constraint data for the plurality of sensing assets, and prior fused maritime intelligence generated during a preceding monitoring iteration. In some aspects, each spatiotemporal cell of the plurality of spatiotemporal cells may include at least one or more a spatial coordinate, a temporal coordinate, and a risk value, each observation entry of the plurality of observation entries identifies a corresponding selected spatiotemporal cell of the selected spatiotemporal cells, and each scheduled observation action of the respective scheduled observation actions may include a tasking action for a taskable sensing asset of the plurality of sensing assets, or a retrieval action for observation data from a non-tasked sensing asset of the plurality of sensing assets.

Some aspects may further include obtaining, through one or more sensing-asset interfaces, observation output for the selected observation entries, retrieving contextual maritime data from one or more external data sources for the selected observation entries, generating current fused maritime intelligence by transforming the observation output and the contextual maritime data into an intelligence record, and generating an updated spatiotemporal risk map for a subsequent monitoring iteration from the spatiotemporal risk map and the current fused maritime intelligence. Some aspects may further include retrieving the contextual maritime data within a spatial search window and a temporal search window associated with the selected observation entries, and aligning the contextual maritime data with the observation output through temporal interpolation, spatial interpolation, coordinate transformation, uncertainty modeling, source-confidence weighting, stale-data filtering, or duplicate-message removal. Some aspects may further include matching sensor-derived vessel information included in the observation output with automatic-identification-system vessel information included in the contextual maritime data, and generating the current fused maritime intelligence based on a matching score between the sensor-derived vessel information and the automatic-identification-system vessel information. Some aspects may further include refining a geolocation estimate for the observation output using a plurality of matching scores between sensor-derived vessel information and automatic-identification-system vessel information, and regenerating at least one intelligence record of the one or more intelligence records using the refined geolocation estimate.

Some aspects may further include generating a dark-vessel indication based on a sensor-derived vessel detection in the observation output lacking a matching automatic-identification-system vessel report in the contextual maritime data. Some aspects may further include generating a spoofing indication based on a mismatch between sensor-derived vessel information in the observation output and automatic-identification-system vessel information in the contextual maritime data. Some aspects may further include generating one or more predicted future vessel paths for a vessel of interest from one or more of course, speed, heading, automatic-identification-system data, historical track data, weather data, bathymetry data, route data, or vessel-class data, and assigning one or more risk values to one or more spatiotemporal cells of the plurality of spatiotemporal cells based on the one or more predicted future vessel paths. Some aspects may further include generating an anomaly score for a vessel of interest from at least one or more of a route deviation, a speed change, a heading change, a loitering pattern, an automatic-identification-system outage, an unexpected proximity event, and a mismatch between sensor-derived vessel information and reported vessel information, and modifying at least one risk value of the plurality of spatiotemporal cells based on the anomaly score. Some aspects may further include merging overlapping observation entries of the plurality of observation entries based on at least one or more of spatial overlap, temporal overlap, modality compatibility, feature-of-interest commonality, customer-permission compatibility, and delivery-latency compatibility.

Some aspects may further include generating candidate observation opportunities for the plurality of sensing assets from the asset-availability data and the asset-constraint data, each candidate observation opportunity of the candidate observation opportunities which may include at least one or more of an asset identifier, a candidate observation time, a candidate delivery time, a footprint, a modality, a cost, and an expected success probability. Some aspects may further include generating the enhanced observation schedule by selecting from the candidate observation opportunities according to an objective function that uses at least one or more of expected risk reduction, expected observation value, coverage of high-risk cells, cost, delivery latency, duplicate-observation reduction, confidence, modality suitability, and feature-of-interest observability. Some aspects may further include receiving an execution-change signal identifying at least one or more of a weather change, a provider rejection, a budget change, a sensing-asset status change, a delivery-latency change, a new high-risk observation entry, and a changed vessel prediction, and regenerating at least a portion of the enhanced observation schedule based on the execution-change signal.

Further aspects may include a computing device having at least one processor or processing system configured with processor-executable instructions to perform various operations corresponding to the methods discussed above. Further aspects may include a computing device having various means for performing functions corresponding to the method operations discussed above. Further aspects may include a non-transitory processor-readable storage medium having stored thereon processor-executable instructions configured to cause at least one processor or processing system to perform various operations corresponding to the method operations discussed above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1 is a process flow diagram illustrating a triggered maritime situational awareness (MSA) process in accordance with some embodiments.
FIG. 2 is a process flow diagram illustrating a triggered MSA process that includes tasking a future capture or retrieving data from a repository in accordance with some embodiments.
FIG. 3 is a process flow diagram illustrating an MSA process that includes dynamic-scheduler acquisition selection, image acquisition, feature detection, identification, route prediction, and insight delivery in accordance with some embodiments.
FIG. 4 is a process flow diagram illustrating dynamic-scheduler operations that use satellite information, orbit propagation, sensing-modality determination, nowcasting, path planning, cost policies, and asset interfaces to generate a schedule in accordance with some embodiments.
FIG. 5 is a process flow diagram illustrating vessel-identification operations that fuse feature-detector outputs with RFINT data, AIS data, other sensor data, and vessel-fingerprint data in accordance with some embodiments.
FIG. 6 is a process flow diagram illustrating onboard-processing operations that use vessel fingerprinting, blacklist matching, data reduction, downlink selection, regeneration, user delivery, and database storage in accordance with some embodiments.
FIG. 7 is a process flow diagram illustrating historic-path-generation operations that query historical imagery, detect features, fuse detected features with AIS and fingerprint data, and predict a historic path in accordance with some embodiments.
FIG. 8 is a block diagram illustrating MSA monitoring zones and associated acquisition timing and delivery timing in accordance with some embodiments.
FIG. 9 is a block diagram illustrating scheduled periodic acquisitions and dynamic acquisitions for reducing information gaps in accordance with some embodiments.
FIG. 10 is a block diagram illustrating an MSA system architecture that includes spacecraft, radio data, AIS data, public Internet sources, a dynamic scheduler, a data aggregator, a control center, sensor systems, a user interface, and a threat-and-fingerprint database in accordance with some embodiments.
FIG. 11 is a block diagram illustrating example concept-of-operations scenarios for vessel, threat, and event monitoring relative to an exclusive economic zone in accordance with some embodiments.
FIG. 12 is a process flow diagram illustrating MSA processes based on detection type in accordance with some embodiments.
FIG. 13 is a process flow diagram illustrating timing associated with detection, threat labeling, identification, and tracking stages for MSA system processes in accordance with some embodiments.
FIG. 14 is a block diagram illustrating an example vessel-monitoring scenario over a maritime geographic area in accordance with some embodiments.
FIG. 15 is a block diagram illustrating an example fused MSA product that combines vessel-route information, media-source information, satellite-imagery information, and geospatial information in accordance with some embodiments.
FIG. 16 is a block diagram illustrating threat-identification operations based on a vessel or other maritime feature approaching an area of interest in accordance with some embodiments.
FIG. 17 is a block diagram illustrating low-latency MSA operations using onboard or edge processing, cross-referenced contextual data, and delivery of actionable intelligence in accordance with some embodiments.
FIG. 18 is a block diagram illustrating MSA operations across multiple exclusive economic zones using data-processing outputs for tasked-acquisition data and repository data in accordance with some embodiments.
FIG. 19 is a block diagram illustrating a live Earth intelligence timeline that includes satellite processing, secure communications, data fusion, MSA scheduling, tasking-interface operation, drone-interface operation, and intelligence delivery in accordance with some embodiments.
FIG. 20 is a block diagram illustrating an example spatiotemporal risk map for the North Sea in accordance with some embodiments.
FIG. 21 is a block diagram illustrating an MSA system architecture that includes a risk-map generator, a dynamic scheduler, a decision-support system, a tasker, a data acquirer, and a data processor in accordance with some embodiments.
FIG. 22 is a block diagram illustrating an outline architecture for an MSA system that includes onboard processing, third-party sensing assets, a tasker, a dynamic scheduler, weather forecasts, data processing, data fusion, a data API, and customer systems in accordance with some embodiments.
FIG. 23 is a block diagram illustrating risk-map generation by combining a dynamic risk map and a static risk map into a combined risk map in accordance with some embodiments.
FIG. 24 is a block diagram illustrating spatiotemporal risk-map generation by combining dynamic risk maps and static risk maps across multiple temporal windows in accordance with some embodiments.
FIG. 25 is a block diagram illustrating an MSA system overview that includes an asset pool, dynamic scheduling, insight generation, data fusion, risk prediction, third-party insights, and system outputs in accordance with some embodiments.
FIG. 26 is a block diagram illustrating a closed-loop MSA process in which dynamic scheduling, insight generation, data fusion, and risk prediction adjust sensing-asset operations for dynamic maritime threats in accordance with some embodiments.
FIG. 27 is a process flow diagram illustrating a dynamic-scheduler process that converts a risk map into observation entries, determines observability using non-tasked assets, generates a tasked-asset schedule, accounts for weather, tasks assets, and outputs an observability map and user-asset schedules in accordance with some embodiments.
FIG. 28 is a block diagram illustrating a multi-customer dynamic-scheduler implementation that generates a schedule from customer risk maps, deployment-specific non-satellite sensors, and sensing-asset information in accordance with some embodiments.
FIG. 29 is a block diagram illustrating an implementation of a dynamic scheduler that includes a preprocessing module, a weather-forecast module, a database-management module, a database, an observation-opportunity module, a tasking module, an optimization module, and a post-processing module in accordance with some embodiments.
FIG. 30 is a block diagram illustrating an acquisition-simulation module for evaluating scheduled observation actions using simulated sensing coverage, maritime traffic data, atmospheric data, delivery-delay data, and resource-cost data in accordance with some embodiments.
FIGs. 31A and 31B are process flow diagrams illustrating a method of controlling sensing assets to generate iterative maritime situational awareness for a maritime geographic area in accordance with some embodiments.
FIG. 32 is a component diagram of a processing system suitable for use with the various embodiments.
FIG. 33 is a component diagram of a server computing device suitable for use with the various embodiments.
FIG. 34A is a side view of an exemplary satellite (CubeSat) that includes a camera, memory, and a processor that could be configured in accordance with the various embodiments.
FIG. 34B is an isometric view of the exemplary satellite that includes a camera, memory, and processor that could be configured in accordance with the various embodiments.

### DETAILED DESCRIPTION

The various embodiments may be described in detail with reference to the accompanying drawings. Wherever possible, the same reference numbers may be used throughout the drawings to refer to the same or like parts. References made to particular examples and implementations are for illustrative purposes and are not intended to limit the scope of the invention or the claims.

The word "exemplary" may be used herein to mean "serving as an example, instance, or illustration". Any implementation described herein as "exemplary" is not necessarily to be construed as preferred or advantageous over other implementations.

In overview, the embodiments include computer-implemented systems, methods, and computer-readable media for controlling heterogeneous sensing assets to generate iterative maritime situational awareness for a maritime geographic area. A processing system may receive maritime monitoring inputs for a current monitoring iteration, including configuration information, maritime risk-indicator data, asset-availability data, asset-constraint data, and prior fused maritime intelligence from a preceding monitoring iteration. The processing system may generate a spatiotemporal risk map that assigns risk values to spatiotemporal cells, transform selected spatiotemporal cells into observation entries, and transform the observation entries with asset-availability data and asset-constraint data into an enhanced observation schedule. The enhanced observation schedule may assign selected observation entries to scheduled observation actions, including tasking actions for taskable sensing assets and retrieval actions for observation data from non-tasked sensing assets. The processing system may cause execution of the scheduled observation actions through one or more sensing-asset interfaces, obtain observation output, retrieve contextual maritime data, and fuse the observation output with the contextual maritime data to generate current fused maritime intelligence. The processing system may use the current fused maritime intelligence to update the spatiotemporal risk map for a subsequent monitoring iteration, thereby creating a closed-loop maritime monitoring architecture in which observed results alter future risk prediction, asset scheduling, sensing-asset control, and intelligence generation.

Some embodiments may provide a closed feedback loop that treats risk prediction, sensing-asset control, observation retrieval, data fusion, and risk-map update as one coordinated process. Conventional maritime monitoring solutions schedule sensors from fixed requests or review sensor data after acquisition. On the other hand, the embodiments may convert a spatiotemporal risk map into observation entries, convert those entries and asset constraints into scheduled observation actions, cause those actions through asset interfaces, and feed fused maritime intelligence back into the next risk map. The embodiments implement an architecture that creates a practical control system for heterogeneous assets, including taskable assets and non-taskable data sources, and provides the scheduler with a dynamic technical state rather than a static target list.

The embodiments improve the performance and functioning of the computing system and network operation by reducing avoidable sensor-tasking requests, repository queries, full-scene transfers, duplicate acquisitions, and late data products. The processing system may use the risk map to shrink the search space, use asset constraints to avoid infeasible requests, use onboard or edge insight extraction to move compact insight packets rather than full sensor payloads, and use feedback to reduce repeat processing during later monitoring iterations. These operations improve scheduler responsiveness, reduce memory traffic, reduce network bandwidth, reduce downlink demand, and reduce processor work associated with low-value observations.

Some embodiments may address the technical problem of heterogeneous maritime sensing-asset coordination under changing risk and asset-availability constraints. In some embodiments, the processing system may generate a spatiotemporal risk map from configuration information, maritime risk-indicator data, asset-availability data, asset-constraint data, and/or prior fused maritime intelligence. The processing system may transform high-risk spatiotemporal cells into observation entries and assign these entries to tasking or retrieval actions through sensing-asset interfaces. The processing system may obtain observation outputs and fuse them with contextual maritime data to generate current fused maritime intelligence, and may update the spatiotemporal risk map for a subsequent monitoring iteration. By using risk-map selection, constraint-aware scheduling, non-tasked observation availability, onboard or edge insight extraction, and current fused maritime intelligence feedback, the processing system may reduce scheduling search space, infeasible tasking requests, duplicative acquisitions, unnecessary repository queries, full-scene data transfers, and repeated processing of stale or already-resolved observation demand. Such improvements may be evaluated using metrics such as schedule-generation time, tasking-action issuance time, number of provider or repository requests, outbound bytes at a sensing-asset interface, downlink bytes, duplicate-acquisition count, or number of low-value scheduled observation actions, without requiring any particular percentage reduction.

The term "processing system" may be used herein to refer to one or more hardware components within one or more computing devices that execute stored instructions over computer-readable data. The processing system may include processors, memory, servers, cloud resources, edge devices, onboard processors, ground-station processors, and system-on-chip devices.

The term "maritime situational awareness" (MSA) may be used herein to refer to computer-readable intelligence for a maritime geographic area that supports monitoring of maritime features of interest and maritime events of interest. The intelligence may include maps, schedules, alerts, vessel states, feature states, event states, confidence values, and recommended actions.

The term "maritime geographic area" may be used herein to refer to a computer-readable spatial domain stored in memory for maritime monitoring. The spatial domain may include oceans, seas, ports, harbors, territorial waters, exclusive economic zones, coastal regions, offshore infrastructure regions, shipping lanes, chokepoints, restricted zones, and mixed land-sea regions.

The term "area of interest" may be used herein to refer to a computer-readable spatial data element stored in memory that identifies a subset of a maritime geographic area. The processing system may generate, store, retrieve, update, or manipulate the area of interest based on user input, mission input, asset data, or risk data.

The term "monitoring iteration" may be used herein to refer to a process executed by the processing system for one cycle of maritime monitoring. The process may include receiving maritime monitoring inputs, generating a spatiotemporal risk map, generating observation entries, generating an enhanced observation schedule, obtaining observation output, generating current fused maritime intelligence, and generating an updated spatiotemporal risk map.

The term "maritime monitoring inputs" may be used herein to refer to a computer-implemented data structure stored in memory that contains input data for a monitoring iteration. The data structure may include configuration information, maritime risk-indicator data, asset-availability data, asset-constraint data, contextual maritime data, user-provided intelligence, and prior fused maritime intelligence.

The term "configuration information" may be used herein to refer to a computer-implemented data structure stored in memory that configures maritime monitoring for a monitoring iteration. The data structure may include area-of-interest boundaries, monitoring objectives, maritime features of interest, maritime events of interest, latency constraints, budget constraints, sensing-modality preferences, tasking permissions, user asset data, user preferences, and delivery endpoints.

The term "external data source" may be used herein to refer to a network-accessible data source or computer-readable repository outside at least one processing component that performs a stated operation. The external data source may include a third-party service, public repository, customer system, operator system, automatic identification system source, weather source, vessel registry, sensing-asset provider, asset-owner interface, or asset-operator interface.

The term "maritime risk-indicator data" may be used herein to refer to computer-readable data stored in memory that provides evidence for generation or update of one or more risk values. The data may include automatic identification system data, radio-frequency intelligence data, open-source intelligence data, weather data, predicted weather data, vessel registry data, vessel risk-list data, route data, port-call data, manifest data, bathymetry data, current data, historical incident data, and protected infrastructure data.

The term "contextual maritime data" may be used herein to refer to computer-readable data stored in memory that supports interpretation or fusion of observation output. The data may include vessel registry data, vessel ownership data, vessel class data, route data, path data, port-call data, manifest data, crew data, weather data, predicted weather data, current data, bathymetry data, historical track data, and user sensor-network data.

The term "spatiotemporal risk map" may be used herein to refer to a computer-implemented data structure stored in memory that represents risk across at least one spatial dimension and at least one temporal dimension. The data structure may include a grid, matrix, tensor, raster map, vector map, tile set, graph, table, or other indexed arrangement of spatiotemporal cells.

The term "spatiotemporal cell" may be used herein to refer to a computer-readable data element stored in memory that represents an indexed portion of a spatiotemporal risk map. The data element may identify a point, region, tile, pixel, voxel, bin, node, row, or region-time pair having a spatial coordinate and a temporal coordinate.

The term "risk value" may be used herein to refer to a computer-readable data element stored in memory that represents risk or observation priority for a spatiotemporal cell. The data element may include a numeric value, ordinal value, categorical value, probabilistic value, normalized value, unnormalized value, scalar value, vector value, weighted value, likelihood value, impact value, uncertainty value, or expected risk-reduction value.

The term "static risk map" may be used herein to refer to a computer-implemented data structure stored in memory that represents risk from fixed or slowly changing maritime features. The data structure may encode underwater infrastructure, offshore energy infrastructure, port infrastructure, shipping lanes, chokepoints, maritime boundaries, restricted zones, shorelines, bathymetry, and customer-defined high-value regions.

The term "dynamic risk map" may be used herein to refer to a computer-implemented data structure stored in memory that represents time-varying risk from moving or changing maritime features. The data structure may encode vessel tracks, predicted vessel paths, route deviations, radio-frequency detections, radar detections, acoustic detections, weather effects, current effects, port-departure indicators, anomaly indicators, and prior fused maritime intelligence.

The term "risk prediction engine" may be used herein to refer to a process executed by the processing system to generate, update, or modify a spatiotemporal risk map. The process may use maritime monitoring inputs, prior fused maritime intelligence, path predictions, anomaly scores, observation output, and contextual maritime data.

The term "path-prediction model" may be used herein to refer to a trained computational unit executed by the processing system to generate one or more predicted future vessel paths. The trained computational unit may use course, speed, heading, automatic identification system data, historical track data, weather data, bathymetry data, route data, vessel class data, and prior fused maritime intelligence.

The term "anomaly-detection model" may be used herein to refer to a trained computational unit executed by the processing system to generate an anomaly score for a maritime feature of interest or a maritime event of interest. The trained computational unit may use route deviation, speed change, heading change, loitering behavior, automatic-identification-system outage, unexpected proximity, or mismatch data.

The term "observation entry" may be used herein to refer to a computer-readable data element stored in memory that represents observation demand derived from one or more selected spatiotemporal cells. The data element may include an observation-entry identifier, spatial target, temporal window, risk value, feature-of-interest identifier, sensing-modality preference, resolution constraint, delivery-latency constraint, confidence constraint, customer identifier, and policy constraint.

The term "observation list" may be used herein to refer to a computer-implemented data structure stored in memory that contains one or more observation entries. The processing system may generate the observation list from one or more spatiotemporal risk maps through thresholding, maximum search, local maximum search, adaptive thresholding, temporal-plane processing, spatiotemporal selection, weighting, filtering, or aggregation.

The term "observation opportunity" may be used herein to refer to a computer-readable data element stored in memory that represents an ability of a sensing asset to support an observation entry. The data element may include an asset identifier, observation time, delivery time, footprint, modality, resolution, cost, success probability, tasking lead time, retrieval lead time, and confidence value.

The term "observation request" may be used herein to refer to a computer-readable data element stored in memory that represents a request derived from an observation entry before schedule assignment. The processing system may convert one or more observation requests into one or more scheduled observation actions.

The term "asset-opportunity data structure" may be used herein to refer to a computer-implemented data structure stored in memory that contains observation opportunities for a plurality of sensing assets. The processing system may generate, store, retrieve, update, or manipulate the asset-opportunity data structure during enhanced-observation-schedule generation.

The term "enhanced observation schedule" may be used herein to refer to a computer-implemented data structure stored in memory that assigns selected observation entries to scheduled observation actions. The processing system may generate the enhanced observation schedule by transforming observation entries, asset-availability data, asset-constraint data, user policies, budget constraints, and prior schedules.

The term "scheduled observation action" may be used herein to refer to a computer-readable data element stored in memory that represents an action assigned within an enhanced observation schedule. The data element may include a tasking action, retrieval action, user-controlled-asset schedule action, restricted-asset schedule action, decision-support action, withdrawal action, schedule-repair action, or just-in-time tasking update.

The term "objective function" may be used herein to refer to a computer-readable scoring process executed by the processing system during enhanced-observation-schedule generation. The process may score candidate schedule assignments based on expected risk reduction, observation value, coverage of high-risk cells, cost, delivery latency, duplicate-observation reduction, confidence, sensing-modality fit, and feature-of-interest observability.

The term "schedule repair" may be used herein to refer to a process executed by the processing system to update an enhanced observation schedule after a change in a relevant input. The process may respond to weather change, provider rejection, budget change, sensing-asset status change, delivery-latency change, new high-risk observation entry, changed vessel prediction, or missing observation output.

The term "tasking action" may be used herein to refer to a scheduled observation action that causes or requests a sensing asset to acquire new sensor data or generate sensor-derived insight data. The action may include direct tasking, indirect tasking, operator-mediated tasking, email-format tasking, provisional tasking, final tasking, onboard-processing tasking, or just-in-time tasking.

The term "retrieval action" may be used herein to refer to a scheduled observation action that obtains or requests observation data from a non-tasked sensing asset without a new tasking action for the relevant observation entry. The action may query, pull, download, request, or poll repository data, planned-capture data, open-source data, provider data, or previously acquired data.

The term "sensing asset" may be used herein to refer to a hardware resource, repository resource, or data service that acquires, generates, stores, or provides observation output. The resource may include an electro-optical satellite, synthetic-aperture-radar satellite, radio-frequency collection satellite, high-altitude platform, uncrewed aerial vehicle, uncrewed surface vehicle, underwater vehicle, crewed vessel, buoy, port camera, coastal sensor, ground radar, acoustic sensor, customer sensor, sovereign asset, commercial repository, public repository, or data service.

The term "sensing modality" may be used herein to refer to a computer-readable data element stored in memory that identifies a sensor type or observation type. The data element may identify electro-optical sensing, synthetic-aperture-radar sensing, radio-frequency sensing, acoustic sensing, radar sensing, video sensing, camera sensing, thermal sensing, hyperspectral sensing, multispectral sensing, or user-provided sensing.

The term "taskable sensing asset" may be used herein to refer to a sensing asset for which the processing system generates or transmits a tasking action for future acquisition or processing. The taskable sensing asset may receive the tasking action through direct interface control, provider interface control, operator-mediated control, user-mediated control, or sovereign-owner control.

The term "non-tasked sensing asset" may be used herein to refer to a sensing asset, repository, planned capture, open-source source, or data source that provides observation data without a new tasking action from the processing system for the relevant observation entry. The non-tasked sensing asset may include a historical imagery repository, existing satellite repository, planned-acquisition feed, radio-frequency intelligence repository, automatic identification system source, weather source, or third-party data product.

The term "user-controlled sensing asset" may be used herein to refer to a sensing asset for which the processing system provides a schedule, recommendation, tasking parameter, or decision-support output to a user or operator. The processing system may receive observation output, operator feedback, schedule feedback, or limited feedback from the user-controlled sensing asset.

The term "restricted sensing asset" may be used herein to refer to a sensing asset subject to access limits that constrain raw sensor data delivery, direct tasking, or direct insight delivery. A restricted sensing asset may receive schedule information, a recommended observation schedule, a tasking parameter, or a decision-support output from the processing system or from a user or operator. The restricted sensing asset may return limited feedback sufficient for the processing system to update a spatiotemporal risk map, such as a risk-map update, updated risk values for selected spatiotemporal cells, schedule feedback, or execution-status feedback, without exposing raw sensor data or direct derived results.

The term "asset-availability data" may be used herein to refer to a computer-implemented data structure stored in memory that describes whether, when, where, and under what conditions a sensing asset may support a scheduled observation action. The data structure may include operational status, current tasking, tasking windows, planned acquisitions, orbital position, asset position, provider availability, repository availability, downlink availability, communications availability, and future access windows.

The term "asset-constraint data" may be used herein to refer to a computer-implemented data structure stored in memory that describes capabilities, restrictions, costs, latencies, policies, and operating limits for a sensing asset. The data structure may include sensing modality, swath, field of regard, ground sample distance, ground range resolution, pointing constraint, roll angle, pitch angle, yaw angle, imaging duration, tasking latency, acquisition latency, delivery latency, weather sensitivity, sunlight constraint, onboard-processing capability, communications availability, downlink availability, cost, budget limit, usage permission, and withdrawal rule.

The term "sensing-asset interface" may be used herein to refer to a hardware interface or software interface through which the processing system exchanges data with a sensing asset, sensing-asset provider, repository, operator, or user system. The interface may include an application programming interface, network interface, message queue, repository interface, operator interface, email interface, ground-station interface, asset-owner interface, asset-operator interface, or communications-relay interface.

The term "observability map" may be used herein to refer to a computer-implemented data structure stored in memory that represents where and when observation output may be obtained or expected. The data structure may include scheduled coverage, completed coverage, unavailable coverage, expected acquisition time, expected delivery time, expected insight-availability time, sensing modality, confidence, asset identifier, and feature-of-interest observability.

The term "dark-spot record" may be used herein to refer to a computer-readable data element stored in memory that identifies observation demand with no timely or suitable scheduled observation action. The data element may identify an unobserved high-risk spatiotemporal cell, region, feature, event, time window, sensing modality, quality constraint, budget constraint, or causation code.

The term "observation output" may be used herein to refer to computer-readable data stored in memory that results from a scheduled observation action. The data may include raw sensor data, processed sensor data, image data, radio-frequency data, synthetic-aperture-radar data, acoustic data, user-provided data, sensor-derived insight data, onboard-extracted insight data, repository data, provider metadata, and limited feedback.

The term "sensor data" may be used herein to refer to computer-readable data stored in memory that a sensing asset acquires or provides before or during insight generation. The data may include imagery, video, synthetic-aperture-radar data, radio-frequency data, acoustic data, radar data, camera data, automatic identification system data, metadata, and geolocation data.

The term "sensor-derived insight data" may be used herein to refer to computer-readable data stored in memory that the processing system, a sensing asset, a provider system, or an onboard processing system derives from sensor data. The data may include detections, classifications, localizations, segmentations, vessel parameters, size estimates, heading estimates, speed estimates, identity estimates, class estimates, wake indicators, radio-frequency emitter indicators, absence determinations, confidence values, and anomaly indicators.

The term "onboard processing" may be used herein to refer to a process executed by an onboard processing system associated with a sensing asset before full sensor data reaches a ground processing system, cloud processing system, or user system. The process may include onboard AI inference, computer-vision processing, radio-frequency processing, compression, geolocation, packet generation, and low-latency transmission.

The term "onboard-processing instruction" may be used herein to refer to a computer-readable data element stored in memory that identifies processing for execution by an onboard processing system. The data element may identify a sensor-processing routine, AI model, computer-vision algorithm, radio-frequency-processing algorithm, compression routine, geolocation routine, output format, or delivery endpoint.

The term "onboard-extracted insight packet" may be used herein to refer to a computer-implemented data structure generated by an onboard processing system from sensor data. The data structure may include sensor-derived insight data, feature identifier, location, timestamp, confidence value, class label, size estimate, heading estimate, speed estimate, sensing-modality identifier, sensor identifier, geolocation uncertainty, model version, and source-data reference.

The term "insight generation stage" may be used herein to refer to a process executed by the processing system or an onboard processing system to transform observation output or sensor data into sensor-derived insight data. The process may perform vessel detection, vessel localization, vessel segmentation, vessel classification, vessel identification, vessel-parameter extraction, wake detection, geolocation, emitter localization, absence determination, and confidence scoring.

The term "data fusion stage" may be used herein to refer to a process executed by the processing system to generate current fused maritime intelligence from observation output and contextual maritime data. The process may combine, correlate, filter, curate, weight, query, align, transform, and reconcile sensor-derived insight data, contextual maritime data, prior fused maritime intelligence, and user-provided data.

The term "current fused maritime intelligence" may be used herein to refer to a computer-implemented data structure stored in memory that the processing system generates during a current monitoring iteration. The data structure may include intelligence records, alerts, risk factors, map updates, vessel states, feature states, event states, absence determinations, anomaly states, dark-vessel indications, spoofing indications, and recommended actions.

The term "prior fused maritime intelligence" may be used herein to refer to a computer-implemented data structure stored in memory that the processing system generated during a preceding monitoring iteration. The processing system may use prior fused maritime intelligence as an input for a current monitoring iteration.

The term "intelligence record" may be used herein to refer to a computer-readable data element stored in memory that represents a fused intelligence output. The data element may include a feature identifier, event identifier, vessel identifier, presence indication, absence indication, identity indication, behavior indication, risk-state indication, anomaly indication, spoofing indication, dark-vessel indication, confidence value, location, time, supporting-source identifiers, and recommended action.

The term "maritime feature of interest" may be used herein to refer to a computer-readable data element stored in memory that identifies a maritime object, location, infrastructure element, vessel, asset, region, track, path, physical feature, emitted-signal source, or sensor feature for monitoring. The processing system may predict, observe, detect, classify, identify, track, or score the maritime feature of interest.

The term "maritime event of interest" may be used herein to refer to a computer-readable data element stored in memory that identifies a maritime occurrence, behavior, condition, activity, or use-case state for monitoring. The event may include a ship-to-ship transfer, route deviation, automatic-identification-system outage, automatic-identification-system spoofing event, false automatic-identification-system track, transponder-off event, loitering event, suspicious movement pattern, unexpected speed change, unexpected heading change, proximity event near protected infrastructure, port-activity event, unauthorized-zone event, sanctioned-vessel event, grey-vessel event, sanctioned oil transport or transfer, people-smuggling event, contraband-smuggling event, narcotics-smuggling event, customs-avoidance event, military-vessel movement, intelligence-vessel movement, shadow-fleet activity, interference with underwater assets such as gas pipelines, electricity interconnectors, and communications cables, marine terraforming, spying, defensive naval activity, offensive naval activity, or another threat event.

The term "feature-of-interest list" may be used herein to refer to a computer-implemented data structure stored in memory that contains one or more maritime features of interest and associated state data. The associated state data may include location, time, velocity, risk value, vessel type, identity, confidence, priority, and observability state.

The term "observation value" may be used herein to refer to a computer-readable data element stored in memory that represents expected usefulness of a scheduled observation action. The data element may include expected risk reduction, risk-map uncertainty reduction, timeliness, confidence, customer priority, cost, mission priority, and observation priority.

The term "expected risk reduction" may be used herein to refer to a computer-readable data element stored in memory that represents a predicted effect of a scheduled observation action on one or more risk values. The data element may represent predicted decrease, refinement, redistribution, or uncertainty reduction for risk values in a spatiotemporal risk map.

The term "time to observation" may be used herein to refer to a computer-readable data element stored in memory that represents a time interval associated with observation by a sensing asset. The interval may be measured from schedule generation, tasking submission, retrieval request, or monitoring-iteration start to expected acquisition, actual acquisition, expected retrieval, or actual retrieval.

The term "time to insight availability" may be used herein to refer to a computer-readable data element stored in memory that represents a time interval associated with availability of insight to the processing system or a user system. The interval may be measured from tasking submission, acquisition, retrieval request, observation output receipt, or monitoring-iteration start to sensor-derived insight data availability or current fused maritime intelligence availability.

The term "delivery latency" may be used herein to refer to a computer-readable data element stored in memory that represents elapsed time between an acquisition, observation, retrieval, tasking action, or provider event and receipt of observation output by the processing system or a user system. The processing system may use delivery latency during enhanced-observation-schedule generation and observability-map generation.

The term "just-in-time tasking" may be used herein to refer to a process executed by the processing system to modify one or more pointing parameters of a taskable sensing asset after an initial acquisition request and before acquisition. The process may transmit a late tasking update that changes a roll angle, pitch angle, yaw angle, or other pointing parameter used to select a final observation footprint within a previously scheduled or reserved acquisition opportunity.

The term "provider metadata" may be used herein to refer to computer-readable data stored in memory that a provider interface returns for a scheduled observation action or proposed observation action. The data may describe feasibility, timing, geometry, cost, acquisition parameters, footprint, delivery timing, execution status, withdrawal status, or quality.

The term "provider-specific request format" may be used herein to refer to a computer-implemented data structure or communication format specified by a provider interface. The format may include a point target, area target, geographic polygon, wide time window, narrow time window, feasibility request, final tasking request, email-format request, application programming interface request, metadata field, or authentication field.

The term "provisional tasking request" may be used herein to refer to a computer-readable request stored in memory and submitted before final reconciliation of provider metadata with observation demand. The processing system may confirm, modify, or withdraw the provisional tasking request after provider metadata returns.

The term "decision-support output" may be used herein to refer to a computer-readable output generated by the processing system for user or operator review of maritime monitoring operations. The output may include a map, alert, recommended schedule, tasking parameter, ranked alternative, dark-spot warning, dashboard object, application programming interface message, or email message.

The term "operator decision" may be used herein to refer to a computer-readable data element stored in memory that records a user, customer, operator, or asset-owner response to a decision-support output. The data element may identify approval, rejection, modification, selection, partial enactment, withdrawal, or other response.

The term "alert record" may be used herein to refer to a computer-readable data element stored in memory that identifies a condition detected by the processing system during maritime monitoring. The data element may include alert type, feature identifier, event identifier, location, time, supporting observations, supporting contextual maritime data, confidence value, risk value, recommended action, and schedule implication.

The term "automated response instruction" may be used herein to refer to a computer-readable data element stored in memory that directs an authorized system action after an alert record, intelligence record, or schedule event. The data element may direct tasking, retrieval, schedule repair, operator notification, application programming interface transmission, dashboard update, or observation-entry update.

The term "operational data store" may be used herein to refer to a computer-implemented storage structure that stores maritime monitoring data and execution records. The storage structure may include a database, ledger, file system, memory, table set, queue, or object store for risk maps, observation entries, observation opportunities, schedules, tasking instructions, provider responses, observation outputs, insight data, contextual maritime data, fused maritime intelligence, alerts, and optimization decisions.

The term "virtual constellation" may be used herein to refer to a computer-implemented data structure stored in memory that represents a logical grouping of sensing assets for coordinated maritime monitoring. The grouping may include owned assets, third-party assets, public assets, taskable sensing assets, non-tasked sensing assets, user-controlled sensing assets, restricted sensing assets, repository resources, and data services.

The term "cognitive constellation" may be used herein to refer to a virtual constellation that may include adaptive tasking or onboard processing capability represented in memory by the processing system. The processing system may update the cognitive constellation based on observation output, asset-availability data, asset-constraint data, current fused maritime intelligence, and an updated spatiotemporal risk map.

The term "multi-customer risk map" may be used herein to refer to a computer-implemented data structure stored in memory that represents risk for two or more customers, missions, applications, or geographies. The processing system may generate the multi-customer risk map from customer-specific risk maps using customer priority, mission priority, service level, budget, legal authority, or policy.

The term "fused risk map" may be used herein to refer to a computer-implemented data structure stored in memory that combines two or more risk maps into one spatiotemporal risk map. The processing system may generate the fused risk map by weighting, adding, multiplying, aggregating, normalizing, or filtering risk values from the two or more risk maps.

The term "simulation processing system" may be used herein to refer to a processing system that executes simulated maritime monitoring operations for evaluation of schedules, assets, policies, or scheduler configurations. The simulation processing system may generate candidate schedules, simulate scheduled observation actions, generate performance datasets, compare scheduler configurations, and train scheduling policies.

The term "acquisition simulation module" may be used herein to refer to a process executed by a simulation processing system to model execution of a scheduled observation action. The process may project a sensing footprint, retrieve maritime traffic data, retrieve atmospheric data, compare the sensing footprint with vessel positions, and estimate target capture.

The term "performance dataset" may be used herein to refer to a computer-implemented data structure stored in memory that records metrics from operational or simulated maritime monitoring. The data structure may include capture probability, target-capture rate, geometric distance to target, expected risk reduction, delivery delay, resource cost, asset use, asset-utilization rate, duplicate-observation rate, dark-spot rate, weather-failure rate, unobserved-risk rate, and schedule feasibility. When labeled reference data or other ground-truth reference data are available, the performance dataset may also include validation metrics derived by comparing simulated or generated observation results with the labeled reference data.

The term "low-latency communications link" may be used herein to refer to a hardware or network component that transmits observation output or sensor-derived insight data with reduced time to insight availability. The component may include a ground-station link, tactical downlink, inter-satellite link, direct-to-ground link, relay link, or provider network link.

The term "limited feedback" may be used herein to refer to computer-readable data stored in memory that a restricted sensing asset, user-controlled sensing asset, asset owner, asset operator, or provider system returns in place of raw sensor data or direct derived results. The data may include a risk-map update, updated risk values for selected spatiotemporal cells, risk-map changes, schedule feedback, execution-status feedback, provider metadata, or other information sufficient to update a spatiotemporal risk map, repair an enhanced observation schedule, or generate a subsequent observation entry without requiring the processing system to receive raw sensor data from the asset.

The term "provider response" may be used herein to refer to computer-readable data stored in memory that a provider interface returns after a tasking action, retrieval action, provisional tasking request, or provider query. The data may include acceptance status, rejection status, feasibility status, cost, expected acquisition time, expected delivery time, footprint, quality metadata, provider metadata, and observation-output link.

The various embodiments include computer-implemented systems, methods, processing systems, sensing-asset interfaces, and computer-readable media for controlling heterogeneous sensing assets to generate iterative MSA for a maritime geographic area. In some embodiments, a processing system receives maritime monitoring inputs for a current monitoring iteration, including configuration information for the maritime geographic area, maritime risk-indicator data from one or more external data sources, asset-availability data for a plurality of sensing assets, asset-constraint data for the plurality of sensing assets, and prior fused maritime intelligence generated during a preceding monitoring iteration. The processing system generates a spatiotemporal risk map that represents the maritime geographic area as spatiotemporal cells having spatial coordinates, temporal coordinates, and risk values. The processing system transforms selected spatiotemporal cells into observation entries based on the risk values and transforms the observation entries, the asset-availability data, and the asset-constraint data into an enhanced observation schedule. The enhanced observation schedule assigns selected observation entries to scheduled observation actions, such as tasking actions for taskable sensing assets and retrieval actions for observation data from non-tasked sensing assets. The processing system may cause execution of the scheduled observation actions through one or more sensing-asset interfaces, obtain observation output, retrieve contextual maritime data, and fuse the observation output with the contextual maritime data to generate current fused maritime intelligence. The processing system may update the spatiotemporal risk map for a subsequent monitoring iteration based on the current fused maritime intelligence, thereby forming a closed-loop maritime monitoring architecture in which observation results alter subsequent risk prediction, observation-entry generation, asset scheduling, and sensing-asset control.

Relevant technologies include satellite imaging systems, electro-optical sensors, synthetic-aperture-radar sensors, radio-frequency collection systems, high-altitude platform systems, uncrewed aerial vehicles, uncrewed surface vehicles, autonomous buoys, port cameras, coastal sensors, ground stations, communications relays, onboard processors, cloud processing systems, application programming interfaces, maritime data repositories, automatic identification system data sources, vessel-registry data sources, weather data sources, route data sources, port-call data sources, and other external maritime data sources. In some embodiments, the plurality of sensing assets may include taskable sensing assets that can be instructed to collect new sensor data and non-tasked sensing assets that provide existing, planned, or otherwise retrievable observation data. In some embodiments, the processing system supports different sensing modalities, tasking latencies, acquisition latencies, delivery latencies, spatial coverages, resolutions, costs, usage permissions, provider interfaces, and onboard-processing capabilities. In some embodiments, the processing system also supports onboard or edge insight extraction, in which a sensing asset or associated processing device generates sensor-derived insight data before full sensor data is delivered to a ground or cloud processing system.

Existing MSA solutions are limited by static collection plans, delayed tasking workflows, fragmented sensor-provider interfaces, duplicative collection requests, high-volume sensor-data transfers, incomplete observability over large maritime areas, and limited coordination between risk prediction and sensing-asset control. For example, a conventional system may receive vessel reports or satellite imagery after collection and may require a human operator or separate scheduling system to decide whether additional collection should occur. Such an approach may fail to account for changing vessel behavior, changing weather, changing asset availability, changing provider constraints, or changing intelligence generated from recent observations. Such an approach also may waste network bandwidth, storage, processing cycles, asset capacity, and collection budget by requesting observations that are infeasible, late, duplicative, or directed to lower-value locations.

The disclosed embodiments address these and other technical limitations by converting maritime risk into a computer-readable spatiotemporal risk map, converting the spatiotemporal risk map into observation entries, and converting the observation entries into scheduled observation actions based on sensing-asset availability and sensing-asset constraints. Rather than treating sensor collection and maritime analysis as separate operations, the processing system links risk prediction, observation-demand generation, sensing-asset scheduling, sensing-asset execution, observation-output processing, contextual-data fusion, and risk-map updating in an iterative control loop. The processing system may select between tasking a taskable sensing asset and retrieving observation data from a non-tasked sensing asset, thereby reducing unnecessary tasking requests when suitable data already exists or will become available. The processing system may further generate observability maps, dark-spot records, alerts, recommended actions, and updated schedules when high-risk locations cannot be observed within a desired time window. By using current fused maritime intelligence to update the spatiotemporal risk map for a subsequent monitoring iteration, the processing system improves the relevance of future observation entries and the efficiency of future scheduled observation actions.

In some embodiments, the processing system may be configured to perform a closed-loop MSA control operations by receiving maritime monitoring inputs for a current monitoring iteration, normalizing the maritime monitoring inputs into a common spatiotemporal reference frame, generating a spatiotemporal risk map for a maritime geographic area, generating a plurality of observation entries from the spatiotemporal risk map, generating an enhanced observation schedule from the plurality of observation entries, asset-availability data, and asset-constraint data, causing scheduled observation actions through one or more sensing-asset interfaces, obtaining observation output, retrieving contextual maritime data, generating current fused maritime intelligence, generating an updated spatiotemporal risk map, and repeating the operations for a subsequent monitoring iteration. The maritime monitoring inputs may include configuration information, maritime risk-indicator data, asset-availability data, asset-constraint data, contextual maritime data, user-provided intelligence, and prior fused maritime intelligence from a preceding monitoring iteration. In some embodiments, the processing system may transform multi-source maritime inputs into the spatiotemporal risk map, transform selected spatiotemporal cells into the plurality of observation entries, transform the plurality of observation entries into scheduled observation actions, and transform the observation output and the contextual maritime data into one or more intelligence records. The one or more intelligence records may indicate presence, absence, identity, behavior, anomaly state, spoofing state, dark-vessel state, feature-of-interest state, event-of-interest state, observability state, confidence state, or risk state. In some embodiments, the processing system may output the enhanced observation schedule, the spatiotemporal risk map, the updated spatiotemporal risk map, an observability map, a dark-spot map, a feature-of-interest observability list, a fused intelligence record, an alert, an application programming interface message, a dashboard update, a tasking command, a recommended user action, or an automated response instruction.

In some embodiments, the processing system may be configured to perform risk-prediction and spatiotemporal-risk-map generation operations by defining a risk-map domain, selecting a spatial resolution, a temporal resolution, a coordinate reference system, one or more cell geometries, and one or more temporal planes, generating a static risk component, generating a dynamic risk component, generating one or more predicted future paths for one or more vessels of interest, calculating one or more risk values for one or more spatiotemporal cells, combining multiple risk maps, and outputting the spatiotemporal risk map as an iteration-specific data object. The static risk component may encode persistent maritime features or impact factors, including critical underwater infrastructure, pipelines, cables, offshore energy infrastructure, exclusive economic zone boundaries, territorial-water boundaries, shipping lanes, ports, shorelines, chokepoints, known routes, prior incident locations, bathymetry, restricted areas, or customer-defined high-value regions. In some embodiments, the processing system may generate the dynamic risk component from predicted vessel locations, vessel tracks, automatic identification system data, radio-frequency detections, radar detections, recent satellite detections, acoustic detections, weather effects, current effects, social-media indicators, port-departure indicators, vessel anomaly indicators, route-deviation indicators, automatic-identification-system-off indicators, lingering indicators, sudden velocity-change indicators, and prior fused maritime intelligence. The predicted future paths may be generated from historic course, speed, heading, bathymetry, shipping lanes, weather, vessel type, vessel class, vessel intent, historic route information, a neural network, a trained path-prediction model, an anomaly-detection model, a kinematic model, a probabilistic motion model, or a hybrid model. In some embodiments, the processing system may calculate each risk value as a weighted combination of likelihood, impact, anomaly score, feature risk score, distance to protected infrastructure, confidence, data staleness, weather suitability, observability gap, customer priority, and mission priority. In some embodiments, one or more risk maps may be generated by multiplying, adding, weighting, or aggregating a static risk component and a dynamic risk component. In some embodiments, the processing system may normalize risk values so that an aggregate risk value over a risk-map domain, temporal plane, customer domain, or monitoring objective remains constant across iterations. In other embodiments, the processing system may maintain unnormalized risk values so that aggregate risk may increase or decrease as new intelligence, new uncertainty, new observations, or failed observations are received. In a normalized embodiment, risk reduction in an observed spatiotemporal cell may be redistributed to predicted-path cells, neighboring cells, alternative-path cells, or unresolved cells. In an unnormalized embodiment, observed risk, unobserved risk, absence determinations, presence determinations, and uncertainty changes may directly increase or decrease one or more risk values without preserving an aggregate risk total. In some embodiments, the processing system may encode expected acquisition time, expected delivery time, expected time to receipt of observation data, expected time to receipt of observation information, or expected time to insight availability in the spatiotemporal risk map, observability map, observation map, asset-opportunity data structure, or enhanced observation schedule. In some embodiments, a risk-map update associated with an observation may be delayed, conditioned, weighted, or withheld until observation data, sensor-derived insight data, onboard-extracted insight data, limited feedback, or other observation information is actually received by the processing system.

In some embodiments, the processing system may be configured to perform an observation-entry generation operations by receiving the spatiotemporal risk map and observation-generation parameters, identifying selected spatiotemporal cells in the spatiotemporal risk map, transforming each selected spatiotemporal cell or selected spatiotemporal region into an observation entry, merging overlapping observation entries, removing or deprioritizing observation entries already satisfied by recent observation output, and outputting the plurality of observation entries for the enhanced observation schedule. The observation-generation parameters may include a maximum number of observation entries, a risk threshold, a local-maximum threshold, an adaptive threshold, a minimum spatial separation, a minimum temporal separation, an observation duration, a required sensing modality, a delivery-latency requirement, a customer priority, a budget allocation, and a minimum expected risk reduction. In some embodiments, the processing system may identify selected spatiotemporal cells by applying an absolute risk threshold, identifying a global maximum, identifying local maxima, applying an adaptive threshold, selecting cells in descending order of risk, selecting cells per temporal plane, selecting spatiotemporal regions directly, or selecting cells based on expected risk reduction. Each observation entry may include an observation-entry identifier, a spatial coordinate, a temporal coordinate, an area geometry, a time window, a risk value, an expected risk-reduction value, a feature-of-interest identifier, a required or preferred sensing modality, a minimum resolution, a maximum acceptable cloud cover, a minimum confidence, a required delivery time, a customer identifier, and one or more policy constraints. In some embodiments, the processing system may merge observation entries based on spatial overlap, temporal overlap, modality compatibility, common features of interest, common customer permissions, or compatible delivery-time constraints.

In some embodiments, the processing system may be configured to perform an asset-availability and asset-constraint modeling operations by receiving or retrieving asset metadata for a plurality of sensing assets, classifying each sensing asset, retrieving or estimating availability information for each sensing asset, modeling asset constraints, generating one or more candidate observation opportunities for each sensing asset, and storing the candidate observation opportunities in an asset-opportunity data structure. The plurality of sensing assets may include electro-optical satellites, synthetic-aperture-radar satellites, radio-frequency collection satellites, high-altitude platform systems, uncrewed aerial vehicles, uncrewed surface vehicles, underwater vehicles, crewed maritime assets, autonomous buoys, port cameras, acoustic sensors, ground radars, coastal sensors, user-controlled assets, sovereign assets, open-source repositories, and commercial data repositories. In some embodiments, the processing system may classify each sensing asset as a taskable sensing asset, a non-tasked sensing asset, a repository-based source, a user-controlled sensing asset, a sovereign sensing asset, an onboard-processing-capable asset, or a non-onboard-processing-capable asset. The availability information may be retrieved from an asset-owner application programming interface, a constellation-planning system, an external service, an imaging-plan service, a two-line-element database, a repository search interface, a user-provided calendar, an operator interface, or a prior schedule database. In some embodiments, the processing system may model asset constraints including sensing modality, swath, field of regard, ground sample distance, ground range resolution, pointing constraints, imaging duration, maximum number of acquisitions, tasking latency, acquisition latency, delivery latency, onboard processing capability, night-acquisition capability, cloud-penetration capability, sunlight requirement, weather sensitivity, communications availability, downlink availability, inter-satellite-link availability, cost, budget limits, tasking policies, usage permissions, and cancellation rules.

In some embodiments, the processing system may be configured to perform an enhanced-observation-schedule generation operations by receiving the plurality of observation entries, candidate observation opportunities, asset-availability data, asset-constraint data, user policies, budget constraints, and prior schedules, determining whether relevant observation entries can be satisfied using non-tasked observation data, determining whether remaining observation entries can be satisfied by taskable sensing assets, generating an objective function, applying an optimization operations, generating the enhanced observation schedule, and generating an observability map. The objective function may maximize expected risk reduction, maximize observation value, maximize coverage of high-risk cells, minimize cost, minimize delivery latency, minimize duplicate observations, maximize confidence, maximize modality suitability, maximize feature-of-interest observability, or optimize a weighted combination of those values. In some embodiments, the processing system may apply a greedy operations, brute-force operations, mixed-integer linear-programming operations, dynamic-programming operations, tabu-search operations, genetic operations, metaheuristic operations, exact operations, machine-learning operations, AI-based solver, reinforcement-learning operations, or hybrid operations. The enhanced observation schedule may include scheduled observation actions, asset assignments, acquisition parameters, retrieval parameters, user-controlled-asset recommendations, onboard-processing application parameters, tasking lead times, expected acquisition times, expected delivery times, expected insight times, expected risk reduction, and confidence values. In some embodiments, the processing system may generate the observability map to represent where and when observations are scheduled, where and when observations will be available, which features of interest are observable, and which high-risk cells are not observable within a required time window.

In some embodiments, the processing system may generate the enhanced observation schedule using a mathematical optimization formulation. For example, a spatiotemporal risk map may be represented by risk values R_i,j,k, where i and j identify spatial coordinates, cells, pixels, tiles, or regions, and k identifies a temporal coordinate or temporal plane. A candidate observation by sensing asset s may be represented by O_s,i,j,k, where O_s,i,j,k indicates whether sensing asset s observes, is scheduled to observe, retrieves, or contributes observation output for the spatiotemporal cell identified by i, j, and k. In some embodiments, O_s,i,j,k may be a binary variable having a value of zero or one. In other embodiments, O_s,i,j,k may be a continuous or fractional variable representing partial cell coverage, partial temporal coverage, confidence-weighted coverage, probability-weighted coverage, or a contribution from a non-tasked observation source. An observation cost for sensing asset s may be represented by C_s or C_s,i,j,k. The processing system may calculate a total cost as a sum over selected observations, such as Σ_s,i,j,k O_s,i,j,k C_s,i,j,k, and may calculate an expected risk reduction or observation value as a sum over selected observations, such as Σ_s,i,j,k R_i,j,k O_s,i,j,k W_s,i,j,k, where W_s,i,j,k may represent coverage weight, modality suitability, confidence, probability of successful observation, or time-to-insight weight. The processing system may maximize total expected risk reduction, maximize total observation value, minimize remaining risk, minimize cost for a required risk-reduction threshold, or optimize a weighted combination of those objectives. The optimization may be subject to constraints including a total budget cap, asset-specific cost caps, tasking windows, tasking lead times, delivery-latency limits, time-to-insight limits, sensing-modality requirements, swath limits, imaging-duration limits, ground-sample-distance or ground-range-resolution limits, roll-angle limits, pitch-angle limits, yaw-angle limits, maximum acquisitions per asset, communication availability, downlink availability, cloud-penetration capability, night-acquisition capability, weather suitability, legal authority, customer policy, provider policy, and repeat-observation limits. In some embodiments, a repeat-observation constraint may restrict Σ_s O_s,i,j,k to be less than or equal to one for a spatiotemporal cell. In other embodiments, the repeat-observation constraint may be relaxed to allow redundant observations, multi-modality observations, reduced time to delivery, higher confidence, or alternative observations for high-risk cells. In some embodiments, non-tasked observation availability may be represented as a fixed observation variable, a reduced-cost observation variable, or a prior coverage value that reduces the residual observation demand before taskable sensing assets are scheduled.

In some embodiments, before finalizing or closing an enhanced observation schedule, the processing system may acquire taskability feedback for one or more candidate scheduled observation actions. The processing system may submit a feasibility query, preliminary tasking query, provisional tasking request, capacity query, hold request, provider-metadata request, or operator-review request to a sensing-asset provider, asset owner, operator, user-controlled asset interface, sovereign-asset interface, or other scheduling interface. The taskability feedback may identify dynamic resource constraints, including an asset already being consumed by another task, a tasking clash with another asset user, a tasking clash with another tasking customer, a provider hold, an exclusion window, a withdrawn opportunity, a changed imaging window, a changed footprint, a changed cost, a changed delivery time, a changed downlink opportunity, a power constraint, a slew constraint, a memory constraint, or a communication constraint. The processing system may update asset-availability data, asset-constraint data, candidate observation opportunities, provider metadata, or the asset-opportunity data structure based on the taskability feedback before the enhanced observation schedule is finalized. In some embodiments, the processing system may regenerate, repair, rescore, or partially reorder the enhanced observation schedule based on the taskability feedback so that the final schedule accounts for tasking clashes and other dynamic resource constraints before a final tasking instruction is issued.

In some embodiments, the processing system may be configured to perform a tasking, retrieval, and user-controlled asset execution operations by retrieving an unprocessed scheduled observation action from the enhanced observation schedule, identifying the asset type, asset interface, tasking mode, retrieval mode, user-control mode, and onboard-processing mode, generating an asset-specific tasking instruction for a taskable sensing asset, generating a retrieval instruction for a non-tasked sensing asset or repository, generating a user-controlled asset schedule for a user-controlled sensing asset, translating scheduled observation actions into provider-specific request formats, monitoring execution status, and storing execution metadata. The asset-specific tasking instruction may include an asset identifier, a target coordinate, an area geometry, a point target, a time window, a required sensing modality, an acquisition mode, a resolution requirement, an incidence-angle requirement, a roll angle, a pitch angle, a yaw angle, an imaging duration, a priority, a cost authorization, a cancellation rule, an onboard application identifier, and a delivery endpoint. In some embodiments, the processing system may generate the retrieval instruction to include a repository identifier, a collection identifier, a geographic query, a temporal query, a modality filter, a resolution filter, a metadata filter, a delivery endpoint, and a polling schedule. The user-controlled asset schedule may include a recommended observation time, a recommended target region, a recommended sensing modality, a recommended path, an expected value, an expected risk reduction, and a requested feedback format. In some embodiments, the processing system may store execution metadata including tasking request time, provider response time, acquisition time, delivery time, cost, actual footprint, actual sensing modality, actual resolution, failure mode, cancellation status, and observation-output identifier.

In some embodiments, the processing system may be configured to perform restricted-asset and heterogeneous-provider execution operations by sending schedule information to a sovereign or restricted asset, receiving limited feedback from the sovereign or restricted asset, updating the spatiotemporal risk map from the limited feedback, translating a scheduled observation action into a provider-specific request format, and managing delayed, opaque, or high-latency provider workflows. The limited feedback may include a risk-map update, updated risk values for selected spatiotemporal cells, schedule feedback, execution-status feedback, provider metadata, or other information sufficient to update the spatiotemporal risk map without providing raw observation data or direct derived results to the processing system. In some embodiments, the processing system may translate scheduled observation actions into provider-specific formats that include a wide observation time window instead of an exact time, a point target instead of an area target, a geographic polygon or GeoJSON area instead of a point target, an email request instead of an application programming interface request, or a provisional feasibility request before final tasking. The processing system may isolate acquisition requests in a temporal buffer, abstract area-based requests into point-centric requests when required by a provider interface, identify high-risk non-overlapping clusters, execute a provisional tasking commitment, receive delayed provider metadata, evaluate the provider metadata against original constraints, and cancel or repair misaligned acquisitions according to available provider rules. In some embodiments, the processing system may update the enhanced observation schedule and the spatiotemporal risk map based on provider rejection, delayed provider metadata, limited feedback, cancellation feedback, schedule feedback, execution-status feedback, or missing observation output.

In some embodiments, the processing system may be configured to perform just-in-time tasking operations by transmitting an initial acquisition request to a taskable sensing asset, reserving or scheduling a broad acquisition opportunity, monitoring updated maritime risk and asset-availability information, generating a late pointing-parameter update before acquisition, transmitting the late pointing-parameter update through a sensing-asset interface, and storing the late pointing-parameter update with the scheduled observation action. The initial acquisition request may define a broad acquisition window, a broad target region or field of regard, a candidate asset, an authorized cost, an authorized sensing modality, and an authorized delivery endpoint. In some embodiments, the late pointing-parameter update may include a roll-angle update, a pitch-angle update, a yaw-angle update, or a combination of roll-angle, pitch-angle, and yaw-angle updates. The late pointing-parameter update may shift a final observation footprint within the broad acquisition opportunity toward a higher-risk spatiotemporal cell that appears or increases in priority after the initial acquisition request. In some embodiments, a separate schedule-repair operation, tasking action, or onboard-processing tasking action may be used to change a target coordinate, area geometry, acquisition mode, or onboard-processing instruction, and such a separate change need not be treated as a just-in-time tasking update.

In some embodiments, the onboard processing system may be configured to perform an onboard or edge insight-extraction operations by receiving an acquisition instruction and an application instruction, acquiring sensor data according to the acquisition instruction, processing the sensor data using the application instruction, generating an onboard-extracted insight packet, and transmitting the onboard-extracted insight packet to a ground processing system, a decision support system, or a communications relay. The acquisition instruction may define observation geometry, observation time, sensing modality, and acquisition parameters. In some embodiments, the onboard processing system may receive an application instruction that identifies an onboard AI model, computer-vision operations, vessel-detection application, radio-frequency-processing application, compression application, geolocation application, or sensor-processing routine. The onboard-extracted insight packet may include a feature identifier, a location, a timestamp, a confidence value, a class label, a size estimate, a heading estimate, a speed estimate, a sensing-modality identifier, a sensor identifier, a geolocation uncertainty, a model version, and a link to underlying sensor data. In some embodiments, the onboard processing system may transmit the onboard-extracted insight packet through a traditional ground-station downlink, tactical ground-station downlink, inter-satellite link, direct-to-ground link, or other low-latency communications channel.

In some embodiments, the processing system may be configured to perform a ground or cloud insight-extraction operations by receiving observation data associated with one or more selected observation entries, retrieving metadata associated with the observation data, applying one or more preprocessing operations, applying one or more feature-extraction operations, generating sensor-derived insight data, storing the sensor-derived insight data, and transmitting the sensor-derived insight data to a data-fusion operations. The observation data may include raw imagery, processed imagery, radio-frequency data, radar data, acoustic data, video data, repository data, user-provided data, or other sensor output. In some embodiments, the processing system may apply preprocessing operations including orthorectification, radiometric correction, noise filtering, cloud masking, speckle filtering, image registration, geolocation correction, tiling, temporal alignment, calibration, normalization, and data-quality scoring. The feature-extraction operations may include vessel detection, vessel localization, vessel segmentation, vessel classification, vessel identification, size estimation, beam estimation, length estimation, heading estimation, speed estimation, wake detection, thermal-trail detection, exhaust detection, radio-frequency-emitter localization, automatic-identification-system-message extraction, acoustic-event extraction, or port-activity extraction. In some embodiments, the processing system may generate the sensor-derived insight data to include one or more features of interest, one or more events of interest, one or more absence determinations, one or more confidence values, one or more geolocation uncertainties, and one or more links to originating observation entries.

In some embodiments, the processing system may be configured to perform a contextual maritime data retrieval operations by receiving one or more selected observation entries and one or more observation insights, identifying a spatial search window, temporal search window, feature-of-interest identifier, vessel identifier, or event identifier, retrieving contextual maritime data from one or more external or internal data sources, aligning the contextual maritime data with the selected observation entries and the observation insights, and outputting aligned contextual maritime data for a data-fusion operations. The contextual maritime data may include automatic identification system data, vessel registry data, vessel ownership data, vessel class data, vessel risk-list data, sanctioned-vessel data, grey-vessel data, route data, path data, port-call data, manifests, crew lists, social-media data, radio-frequency intelligence data, radar data, acoustic data, weather data, predicted weather data, currents, bathymetry, historic vessel tracks, historic risk events, port-camera data, and user sensor-network data. In some embodiments, the processing system may align the contextual maritime data through temporal interpolation, spatial interpolation, coordinate transformation, uncertainty modeling, data-source confidence weighting, stale-data filtering, and duplicate-message removal. The aligned contextual maritime data may identify data-source provenance, timestamp uncertainty, spatial uncertainty, confidence weight, source age, and association with one or more selected observation entries. In some embodiments, the processing system may transmit the aligned contextual maritime data to the data-fusion operations with the observation output and prior fused maritime intelligence.

In some embodiments, the processing system may be configured to perform a data-fusion and intelligence-record generation operations by receiving sensor-derived insight data, onboard-extracted insight data, raw or processed observation output, aligned contextual maritime data, prior fused maritime intelligence, and user intelligence, correlating insights across sensing modalities, fusing automatic identification system data with vessel insights, identifying mismatches, generating one or more intelligence records, and outputting current fused maritime intelligence. The processing system may correlate synthetic-aperture-radar vessel detections with electro-optical vessel detections, radio-frequency intelligence detections with electro-optical or synthetic-aperture-radar detections, port-camera observations with automatic identification system messages, acoustic detections with vessel tracks, and uncrewed-vehicle observations with satellite observations. In some embodiments, the processing system may fuse automatic identification system data with vessel insights by interpolating automatic-identification-system data, comparing interpolated automatic-identification-system positions with image-derived vessel positions, comparing vessel size estimates with reported vessel dimensions, comparing vessel class estimates with registry data, calculating weighted matching scores, refining image geolocation using aggregate matching costs, iteratively rematching vessels, and applying robust matching. The identified mismatches may indicate a dark vessel, an automatic-identification-system-spoofing vessel, a transponder-off event, a false automatic-identification-system track, a misreported vessel identity, an unexpected vessel class, a course deviation, a lingering event, an unauthorized proximity event, a ship-to-ship transfer event, or a possible threat to critical infrastructure. In some embodiments, the processing system may generate each intelligence record to include a feature identifier, event identifier, vessel identifier, presence determination, absence determination, identity determination, behavioral determination, risk-state determination, anomaly determination, spoofing determination, dark-vessel determination, confidence score, supporting source list, geolocation, timestamp, and recommended action.

In some embodiments, the processing system may be configured to perform risk-map update operations by receiving current fused maritime intelligence, a prior spatiotemporal risk map, observation metadata, observability metadata, non-observation metadata, asset status updates, and contextual maritime data, identifying observed cells in the prior spatiotemporal risk map, modifying risk values for observed cells, updating feature-of-interest tracks, updating unobserved high-risk regions, updating asset-state information, generating an updated spatiotemporal risk map, storing the updated spatiotemporal risk map, and making the updated spatiotemporal risk map available to the next enhanced-observation-schedule generation operations. An observed cell may be a cell for which sensor data, sensor-derived insight data, onboard-extracted insight data, user feedback, repository data, or sovereign-asset feedback has been received. In some embodiments, the processing system may reduce a risk value for an observed high-risk cell when an expected maritime feature of interest or maritime event of interest is not detected in the observed high-risk cell. The processing system may update the risk value of a detected cell, neighboring cells, predicted path cells, or cells along alternative predicted paths when a maritime feature of interest or maritime event of interest is detected. In some embodiments, the processing system may preserve or increase a risk value for an unobserved high-risk region, create an alert, create a dark-spot record, or create a future observation entry with increased priority when observation output is not obtained within a required time window.

In some embodiments, the processing system may be configured to perform an observability-map and dark-spot generation operations by receiving the enhanced observation schedule, asset footprints, expected acquisition times, expected delivery times, observation-entry metadata, and risk-map metadata, projecting each scheduled observation action into a spatiotemporal observability map, encoding delivery time or insight-availability time in the spatiotemporal observability map, comparing the spatiotemporal observability map with the spatiotemporal risk map, generating a dark-spot map or dark-spot list, and outputting the spatiotemporal observability map and the dark-spot map or dark-spot list. The spatiotemporal observability map may include cells corresponding to areas and times that will be observed, are expected to be observed, were recently observed, are unavailable for observation, or are expected to produce insight data within a designated time. In some embodiments, the processing system may encode acquisition time, delivery time, insight-availability time, sensing modality, confidence, asset identifier, and feature-of-interest observability in the spatiotemporal observability map. The comparison between the spatiotemporal observability map and the spatiotemporal risk map may identify high-risk cells having no scheduled observation, high-risk cells having late scheduled observation, high-risk cells having low-confidence observation, and high-risk cells observed by an unsuitable sensing modality. In some embodiments, the processing system may output the dark-spot map or dark-spot list to an operator, decision support system, customer application programming interface, schedule-repair operations, or risk-map update operations.

In some embodiments, the processing system may be configured to perform decision-support and automated-action operations by receiving the enhanced observation schedule, one or more candidate enhanced observation schedules, an observability map, a dark-spot map, tasking results, non-tasked acquisitions, processed results, fused maritime intelligence, and an updated spatiotemporal risk map, generating one or more user-facing outputs, determining whether each recommended action is authorized for automatic execution, automatically executing authorized actions, routing non-authorized or human-review actions to a decision support system, receiving operator feedback or action feedback, and incorporating the feedback into the next risk-map update and the next enhanced observation schedule. In some embodiments, the processing system may generate multiple candidate enhanced observation schedules that differ in expected risk reduction, observation value, cost, delivery latency, sensing modality, customer priority, asset use, schedule fairness, dark-spot generation, or policy compliance. The decision support system may present the multiple candidate enhanced observation schedules as ranked alternatives, schedule maps, timeline views, observability maps, dark-spot maps, cost summaries, latency summaries, confidence summaries, or recommended action sets. A user, operator, customer, asset owner, or human-in-the-loop reviewer may select one of the multiple candidate enhanced observation schedules, reject one or more candidate schedules, modify one or more schedule items, partially enact a candidate schedule, approve automatic tasking for selected assets, or direct the processing system to regenerate the candidate schedules using modified constraints. The processing system may store the selected schedule, rejected alternatives, modified schedule items, and operator decision in the operational data store and may update asset availability, observation entries, provider requests, tasking instructions, retrieval instructions, user-controlled asset schedules, observability maps, and risk-map update operations based on the selected schedule. The user-facing outputs may include map overlays, graphs, tables, alerts, schedule recommendations, tasking recommendations, vessel-track visualizations, confidence summaries, application programming interface messages, automated emails, dashboard objects, and geospatial data products. In some embodiments, the processing system may determine authorization based on asset permissions, user policy, mission policy, budget, jurisdiction, safety restrictions, confidence thresholds, risk thresholds, and operator rules. The authorized actions may include tasking an available satellite, tasking a drone, tasking an uncrewed surface vehicle, retrieving repository data, querying automatic identification system data, triggering a port-camera workflow, dispatching a non-space sensing asset, scheduling a crewed maritime or naval asset, or generating a new observation-entry priority. In some embodiments, the processing system may receive feedback that identifies which schedule items were executed, declined, modified, delayed, replaced, approved, rejected, selected, or partially enacted.

In some embodiments, the processing system, onboard processing system, or dynamic scheduler may perform additional scheduler, onboard, and data-fusion operations. In some embodiments, an onboard scheduler may determine, modify, or prioritize acquisition operations directly onboard a spacecraft, satellite, high-altitude platform, drone, or other sensing asset based on an input parameter, local risk-map tile, scheduled observation action, onboard-generated insight, sensor-derived insight data, or asset-state data. In some embodiments, dynamic targeting may cause a spacecraft or other sensing asset to autonomously or semi-autonomously retarget, repoint, or reprioritize an acquisition based on an onboard decision, onboard inference result, local risk-map representation, or late tasking update. In some embodiments, the processing system may perform data triage based on ground data fusion by receiving onboard inference results through an inter-satellite link, tactical downlink, direct-to-ground link, or other low-latency communications link, cross-referencing the onboard inference results with a secondary data source such as automatic identification system data, vessel-registry data, radio-frequency intelligence data, or vessel-risk-list data, determining whether the onboard inference results are likely to be correct or of operational interest, and then requesting full sensor data, cropped sensor data, additional sensor data, raw image data, or a follow-up acquisition. In some embodiments, the processing system may perform nowcasting after scheduling and before full observation output is downlinked to determine whether a scheduled acquisition was likely successful, likely cloud-obscured, likely degraded, or likely insufficient, and may repair the enhanced observation schedule before the full observation output is received. In some embodiments, the scheduler may receive open-product schedules, planned-acquisition schedules, or public-product availability for non-tasked spacecraft or repository sources, including Sentinel, Landsat, Copernicus, public radio-frequency intelligence repositories, public weather sources, or other planned data products, and may adapt the virtual constellation schedule accordingly. In some embodiments, the scheduler may dynamically uplink a software module, application, model, detector, vessel detector, compression routine, geolocation routine, or processing configuration to a spacecraft or other sensing asset that lacks the software capability needed for a selected scheduled observation action. In some embodiments, probability-informed tasking may calculate a probability of successfully capturing a moving target based on weather, predicted weather, target velocity, vessel velocity, target uncertainty, footprint geometry, asset availability, and time to observation, and may use the probability when generating or repairing the enhanced observation schedule. In some embodiments, data-fusion operations may use a generative artificial-intelligence model for ship analysis, vessel-analysis explanation, image-chip annotation, thumbnail generation, water-background synthesis, water synthesis in thumbnails, anomaly summarization, or operator-facing explanation. In some embodiments, the processing system may integrate sanctions, vessel-risk, grey-vessel, ownership, or compliance-related data from an external application programming interface such as OpenSanctions or another risk-list data source as contextual maritime data for data fusion, risk-map generation, alert generation, or schedule prioritization.

In some embodiments, the risk-driven scheduler may be applied to general situational awareness domains other than maritime situational awareness. For example, the processing system may generate risk maps, observation entries, observation schedules, observability maps, alerts, and fused intelligence for land, forest, desert, urban, coastal, border, infrastructure-protection, environmental-monitoring, defense, security, or mixed land-sea use cases. In a ship-to-ship-transfer monitoring embodiment, the risk map may factor in the presence of vessels on a sanctioned-vessel list, the presence of vessels on a grey-vessel list, suspected sanctioned-oil transport, historical locations of previous ship-to-ship-transfer events, vessel proximity, vessel speed, vessel heading, weather, sea state, route history, and prior fused intelligence. In a wildfire, forest-fire, or urban-fire detection embodiment, the risk map may represent the likelihood and impact of a fire event and may incorporate vegetation presence, fuel load, vegetation moisture, soil moisture, measured weather, predicted weather, wind, predicted wind, temperature, humidity, topography, historical fire events, proximity to protected infrastructure, population exposure, visibility, and sensing-asset availability. The scheduler may optimize a schedule to deliver observability over the highest-risk areas at the highest-risk times using taskable satellites, non-tasked repository imagery, high-altitude platforms, drones, aircraft, ground cameras, thermal sensors, weather sensors, user-controlled assets, or restricted assets. In some embodiments, the same closed-loop operations used for maritime monitoring may update a land, forest, desert, wildfire, infrastructure, or mixed-domain risk map based on positive detections, negative detections, failed observations, limited feedback, contextual data, and fused intelligence.

In some embodiments, the constellation-design processing system may be configured to perform virtual-constellation design operations by receiving a mission description, estimating sensing requirements, simulating candidate virtual-constellation configurations, selecting or recommending a virtual-constellation configuration, and outputting scheduler parameters for the virtual-constellation configuration. The mission description may include a maritime geographic area, vessel-size threshold, required latency, required revisit, required persistence, required sensing modalities, weather regime, day/night coverage requirements, customer budget, available owned assets, available third-party assets, available ground stations, available non-space sensors, and expected threats. In some embodiments, the constellation-design processing system may estimate a number of electro-optical assets, synthetic-aperture-radar assets, radio-frequency intelligence assets, ground stations, high-altitude platform systems, drones, uncrewed surface vehicles, downlink resources, onboard processing resources, and scheduler parameters. The candidate virtual-constellation configurations may be evaluated against coverage, latency, cost, risk reduction, weather robustness, night coverage, communications capacity, and operational constraints. In some embodiments, the constellation-design processing system may select or recommend the virtual-constellation configuration based on cost minimization, coverage maximization, latency satisfaction, persistence satisfaction, duplicate-observation reduction, or expected risk-reduction maximization.

In some embodiments, the processing system may be configured to perform alert generation operations by receiving current fused maritime intelligence, one or more spatiotemporal risk maps, one or more observability maps, one or more dark-spot maps, and one or more user alert policies, evaluating alert conditions, generating an alert record, and transmitting the alert record to a user interface, application programming interface endpoint, email system, decision support system, automated response system, or asset-control system. The alert conditions may include detection of a vessel of interest, nondetection of an expected vessel, a dark-vessel determination, an automatic-identification-system-spoofing determination, a vessel approaching critical underwater infrastructure, a sanctioned-vessel proximity event, a possible ship-to-ship transfer, a high-risk unobserved region, a failed scheduled observation, a weather-caused observation gap, or a high-confidence anomaly. In some embodiments, the processing system may generate the alert record to include alert type, feature identifier, event identifier, location, time, supporting observations, supporting contextual data, confidence, risk value, recommended action, schedule implications, and one or more links to relevant maps or intelligence records. The alert record may cause a dashboard update, an operator notification, an application programming interface transmission, a new observation entry, a schedule repair, a tasking request, a retrieval request, or an automated response. In some embodiments, the processing system may store the alert record with the monitoring-iteration identifier, observation-entry identifier, scheduled-observation-action identifier, asset identifier, feature-of-interest identifier, event-of-interest identifier, customer identifier, and timestamp.

In some embodiments, the processing system may be configured to perform data-store and audit operations by storing maritime monitoring inputs, risk maps, observation entries, asset-opportunity data, enhanced observation schedules, tasking instructions, retrieval instructions, provider responses, observation outputs, sensor-derived insight data, contextual maritime data, fused maritime intelligence, observability maps, dark-spot maps, updated risk maps, alerts, and operator actions. The stored records may be linked by iteration identifier, observation-entry identifier, scheduled-observation-action identifier, asset identifier, feature identifier, event identifier, customer identifier, and time. In some embodiments, the processing system may record optimization decisions and schedule changes, including why an asset was selected, why an asset was not selected, why an observation entry was assigned to a retrieval action, why an observation entry was assigned to a tasking action, why a schedule was reoptimized, why a tasking action was cancelled, and why a high-risk region became a dark spot. The operational data store may support future scheduling, model retraining, simulation, performance analytics, user reporting, audit, and feedback-loop traceability. In some embodiments, the processing system may retrieve stored records from the operational data store during a subsequent monitoring iteration and use the stored records to generate the updated spatiotemporal risk map, the plurality of observation entries, and the enhanced observation schedule.

In some embodiments, the processing system may be configured to perform weather- and space-weather-informed spacecraft tasking and command-packet execution. A ground processing system may receive multi-source weather data and space-weather data and fuse them within a cloud-hosted inference engine to produce minute-scale nowcasts for geographic tiles, maritime regions, orbital access windows, communications windows, or other observation domains. The processing system may rank a plurality of task objects against the minute-scale nowcasts by computing a success score that combines atmospheric suitability, acquisition-quality probability, target-capture probability, communications suitability, and hazard probability. The task objects may include image-acquisition tasks, radio-frequency collection tasks, synthetic-aperture-radar acquisition tasks, communications tasks, downlink tasks, onboard-processing tasks, protective tasks, safe-mode tasks, or other spacecraft tasks. The processing system may select at least one task object based on the success score and may compose a time-tagged command packet that includes the selected task, a time tag, a target spacecraft identifier, a geographic-tile identifier, an observation-entry identifier, an acquisition parameter, a communication parameter, a protective-mode parameter, or a quality-metric reporting parameter. The processing system may authenticate or protect the time-tagged command packet using encryption, authentication data, a cryptographic signature, signature verification data, or other secure-command information, and may transmit the time-tagged command packet through an inter-satellite mesh, inter-satellite link, ground-station link, tactical downlink, direct-to-ground link, relay link, or other low-latency communications link toward a spacecraft. The spacecraft may merge the selected task contained in the time-tagged command packet into an onboard timeline, allocate onboard resources, execute the selected task according to the onboard timeline, and generate a quality metric that reflects execution of the selected task. The spacecraft may transmit the quality metric to the ground processing system, and the ground processing system may use the quality metric to update the operational data store, repair the enhanced observation schedule, update one or more risk maps, update one or more nowcast models, or retrain the cloud-hosted inference engine.

In some embodiments, ranking task objects against minute-scale nowcasts may include prediction-guided task pruning, probability-informed tasking, dynamic link-margin evaluation, hazard evaluation, and protective-mode evaluation. The processing system may compute a link margin for each of a plurality of communication channels, including optical communication channels and radio-frequency communication channels, and may select a communication channel based on the computed link margins to reduce failed contacts, reduce retransmission, or improve throughput. In some embodiments, the processing system may select an optical communication channel when the evaluated link margin for the optical communication channel exceeds the evaluated link margin for a radio-frequency communication channel by at least a threshold value. In some embodiments, the processing system may prune a task object when the success score, target-capture probability, atmospheric suitability, hazard probability, energy margin, time-to-insight value, or communication-link score indicates that the task object is unlikely to produce useful observation output. In some embodiments, the spacecraft may evaluate radiation telemetry, thermal telemetry, energy margin, memory state, payload state, attitude-control state, or communications state after receiving a time-tagged command packet and before executing a selected task. The spacecraft may enter a protective mode or safe mode when a hazard probability exceeds a threshold, and the protective mode or safe mode may include disabling payload power, reducing processor activity, changing communications behavior, pointing solar panels toward the Sun, preserving stored observation output, or deferring one or more scheduled observation actions. In some embodiments, ground processing and spacecraft processing may operate as parallel control loops, with a ground-station inference engine and scheduler autonomously repeating receiving, fusing, ranking, selecting, and command-packet composing operations at intervals consistent with minute-scale nowcasts, while spacecraft onboard processors autonomously repeat command-packet merging, task execution, quality-metric generation, and feedback transmission at intervals consistent with deterministic real-time operational bounds.

The embodiments improve the performance and functioning of the processing system and associated sensing-asset network by, for example, reducing the search space for scheduling, reducing avoidable tasking requests, reducing duplicate acquisitions, reducing unnecessary repository queries, reducing transfer of low-value sensor data, and reducing latency between risk detection and observation execution. In some embodiments, risk-map selection limits scheduling computations to high-value spatiotemporal cells rather than an entire maritime geographic area. In some embodiments, constraint-aware scheduling prevents the processing system from issuing observation requests that conflict with asset availability, tasking latency, sensing modality, weather sensitivity, cost, or delivery-latency constraints. In some embodiments, onboard or edge generation of sensor-derived insight data reduces downlink and network traffic by allowing compact insight data to be transmitted before, or instead of, full sensor data. In some embodiments, iterative risk-map updating reduces repeated processing of stale or already-resolved observation demands. As a result, the system may provide lower-latency maritime intelligence, more efficient use of sensing assets, improved bandwidth use, reduced memory and storage traffic, and more responsive control of heterogeneous sensing assets.

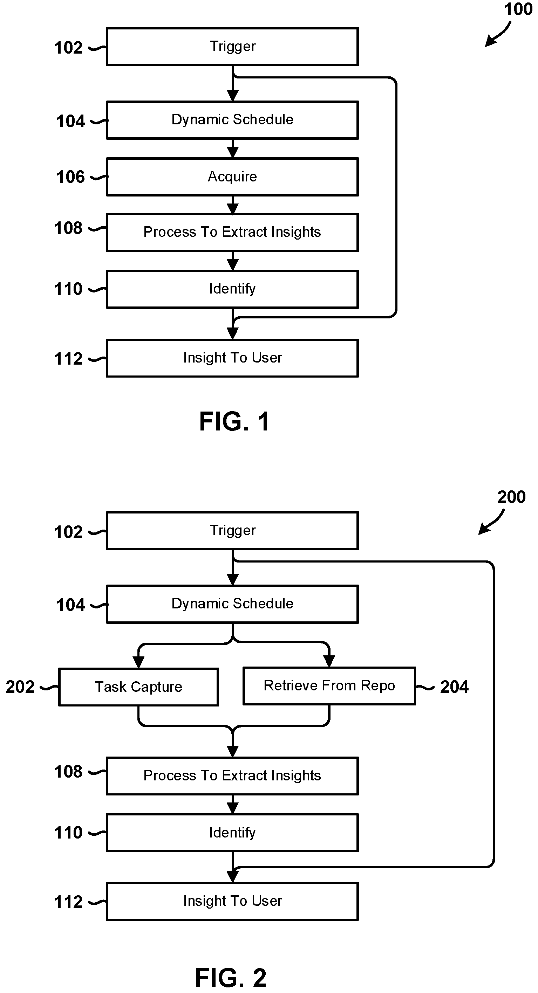

FIG. 1 is a process flow diagram illustrating a method 100 of generating MSA for a maritime geographic area in response to a monitoring trigger in accordance with some embodiments. FIG. 2 is a process flow diagram illustrating a method 200 of generating MSA for a maritime geographic area by coordinating multiple remote-sensing data sources in response to a monitoring trigger in accordance with some embodiments. Methods 100 and 200 may be performed by a processing system in a MSA system having one or more sensing-asset interfaces.

With reference to FIGs. 1 and 2, in block 102, a processor in a MSA system may receive or generate a monitoring trigger that initiates method 100 of FIG. 1 or method 200 of FIG. 2. For example, the processor may receive a trigger message from a user interface, an application programming interface, a watch-list service, an automatic identification system data feed, a radio-frequency intelligence feed, a weather service, a vessel-behavior model, or a prior monitoring iteration. The trigger message may include a maritime geographic area, an area of interest, a vessel identifier, a feature-of-interest identifier, an event-of-interest identifier, a time window, a sensing-modality preference, a latency constraint, a confidence threshold, a budget constraint, and a delivery endpoint. The trigger focuses later processing on a defined maritime monitoring objective and provides input values that the processor may use to generate observation demand.

In block 104, a processor in the MSA system may generate a dynamic schedule for acquiring or retrieving observation output responsive to the monitoring trigger. For example, the processor may retrieve configuration information, maritime risk-indicator data, asset-availability data, asset-constraint data, and prior fused maritime intelligence from memory or from external data sources, generate a spatiotemporal risk map having spatiotemporal cells with risk values, transform selected spatiotemporal cells into observation entries, and assign selected observation entries to scheduled observation actions. The processor may evaluate candidate observation opportunities using sensing modality, spatial coverage, ground sample distance, tasking latency, acquisition latency, delivery latency, cost, weather suitability, asset status, repository availability, and expected risk reduction. The dynamic schedule directs sensing resources toward high-value observation demand while avoiding infeasible, duplicative, late, or low-value acquisitions.

With reference to FIG. 1, in block 106, a processor in the MSA system may cause acquisition of observation output according to the dynamic schedule in method 100 of FIG. 1. For example, the processor may transmit an asset-specific tasking instruction through a sensing-asset interface to an electro-optical satellite, synthetic-aperture-radar satellite, radio-frequency collection satellite, high-altitude platform, uncrewed aerial vehicle, uncrewed surface vehicle, buoy, port camera, coastal sensor, or other sensing asset. The tasking instruction may include a target coordinate, an area geometry, a time window, a sensing modality, an acquisition mode, a resolution requirement, a priority value, a cost authorization, an onboard-processing instruction, and a delivery endpoint. The acquisition operation produces sensor data or sensor-derived insight data that corresponds to the scheduled observation action and that may be traced back to an observation entry.

With reference to FIG. 2, in block 202, a processor in the MSA system may task a capture when the dynamic schedule selects a taskable sensing asset in method 200 of FIG. 2. For example, the processor may format a provider-specific tasking request for a taskable sensing asset by converting an observation entry into a point target, an area target, a geographic polygon, a time window, an imaging mode, a pointing parameter, a roll-angle value, a pitch-angle value, a yaw-angle value, a downlink preference, or an onboard-processing application identifier. The processor may submit the tasking request through an application programming interface, message queue, operator interface, email interface, asset-owner interface, ground-station interface, or communications-relay interface and may store the provider response in an operational data store. This branch supports new collection when existing data does not satisfy the risk, timing, modality, quality, or confidence constraints for an observation entry.

In block 204, a processor in the MSA system may retrieve observation data from a repository when the dynamic schedule selects a non-tasked sensing asset in method 200 of FIG. 2. For example, the processor may query a repository interface using a geographic search window, a temporal search window, a sensing-modality filter, a resolution filter, a cloud-cover filter, a provider identifier, a collection identifier, a metadata filter, and a delivery endpoint. The repository may include historical imagery, planned acquisitions, open-source satellite data, commercial satellite data, radio-frequency intelligence data, weather data, automatic identification system data, port-camera data, acoustic data, or other observation data. This branch reduces unnecessary tasking and shortens time to insight when existing or planned data satisfies the observation entry.

With reference to FIGs. 1 and 2, in block 108, a processor in the MSA system may process observation output to extract sensor-derived insight data. For example, the processor may receive raw sensor data, processed sensor data, onboard-extracted insight data, repository data, or provider data and may perform preprocessing operations such as georeferencing, orthorectification, radiometric correction, speckle filtering, cloud masking, image registration, calibration, tiling, temporal alignment, and data-quality scoring. The processor may apply computer-vision models, radio-frequency processing routines, acoustic processing routines, rule-based detectors, or trained computational units to generate vessel detections, vessel localizations, vessel classifications, vessel-identification candidates, size estimates, heading estimates, speed estimates, wake indicators, emitter locations, absence determinations, anomaly indicators, and confidence values. The processing operation converts high-volume observation output into structured insight data that supports lower-latency fusion and reduced downstream memory traffic.

In block 110, a processor in the MSA system may identify a maritime feature of interest or maritime event of interest from the sensor-derived insight data and contextual maritime data. For example, the processor may retrieve automatic identification system data, vessel registry data, vessel ownership data, vessel class data, route data, port-call data, manifest data, weather data, bathymetry data, current data, risk-list data, sanctioned-vessel data, and prior fused maritime intelligence and may align that data with the sensor-derived insight data using temporal interpolation, spatial matching, coordinate transformation, uncertainty modeling, and confidence weighting. The processor may compare sensor-derived vessel positions with automatic-identification-system positions, compare sensor-derived vessel dimensions with registry dimensions, compare sensor-derived vessel classes with reported vessel classes, and generate an intelligence record that indicates presence, absence, identity, behavior, anomaly state, spoofing state, dark-vessel state, or risk state. The identification operation converts detections into actionable maritime intelligence and may generate a new trigger for a subsequent monitoring iteration.

In block 112, a processor in the MSA system may provide insight to a user or user system after the identification operation. For example, the processor may generate and transmit a dashboard update, map overlay, alert record, application programming interface message, email message, report object, observation schedule, observability map, dark-spot record, vessel-track update, intelligence record, or recommended action. The processor may include a location, time, vessel identifier, feature identifier, event identifier, risk value, confidence value, supporting-source identifier, scheduled observation action, and recommended follow-up action in the delivered insight. The processor may also store the delivered insight as current fused maritime intelligence and use the current fused maritime intelligence to update a spatiotemporal risk map for a later execution of block 104.

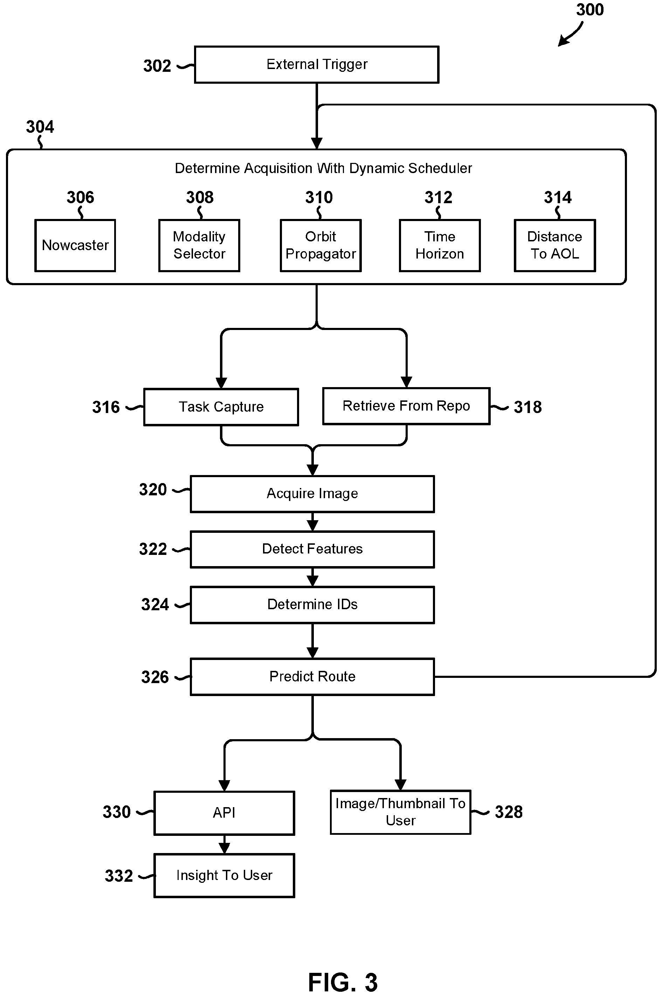

FIG. 3 is a process flow diagram illustrating a method 300 of generating an observation schedule for maritime monitoring by processing observation demand, asset-availability data, and asset-constraint data in accordance with some embodiments. Method 300 may be performed by a dynamic scheduler executed by a processing system in a MSA system.

In block 302, a processor in a MSA system may receive an external trigger that initiates method 300. For example, the processor may receive an external trigger from a user interface, customer application programming interface, vessel watch-list service, automatic identification system feed, radio-frequency intelligence feed, weather feed, anomaly-detection model, or decision-support system. The external trigger may include a maritime geographic area, an area of interest, a vessel identifier, a feature-of-interest identifier, an event-of-interest identifier, an observation time window, a sensing-modality preference, a latency constraint, a confidence threshold, a budget constraint, and a delivery endpoint. The external trigger provides a machine-readable monitoring objective that the dynamic scheduler may convert into one or more acquisition or retrieval operations.

In block 304, a processor in the MSA system may determine an acquisition using a dynamic scheduler. For example, the processor may retrieve trigger metadata, configuration information, current maritime risk-indicator data, predicted vessel-location data, weather data, asset-availability data, asset-constraint data, repository metadata, and prior fused maritime intelligence from memory or from one or more external data sources. The processor may generate candidate observation opportunities for taskable sensing assets and non-tasked sensing assets, score the candidate observation opportunities using expected risk reduction, sensing modality, weather suitability, time to observation, delivery latency, cost, and distance to a predicted target area, and select an acquisition or retrieval path. The dynamic scheduler allocates sensing resources to observation demand that has operational value and feasible collection timing.

In block 306, a processor in the dynamic scheduler may execute a nowcaster to estimate current or near-future conditions relevant to acquisition. For example, the processor may ingest recent weather observations, predicted weather data, cloud-cover data, sea-state data, illumination data, atmospheric data, current data, and recent vessel-motion data and may output a nowcast data structure for one or more candidate observation windows. The nowcast data structure may include cloud probability, precipitation probability, sea-state estimate, sunlight availability, visibility score, wind estimate, current estimate, and expected sensor-performance impact. The nowcaster helps the dynamic scheduler avoid acquisitions that are technically feasible but unlikely to produce usable observation output.

In block 308, a processor in the dynamic scheduler may select a sensing modality for the acquisition. For example, the processor may compare observation requirements and nowcast data with modality capabilities for electro-optical sensing, synthetic-aperture-radar sensing, radio-frequency sensing, acoustic sensing, thermal sensing, hyperspectral sensing, multispectral sensing, camera sensing, radar sensing, and user-provided sensing. The processor may select a sensing modality based on day or night operation, weather sensitivity, cloud penetration, spatial resolution, expected target size, target behavior, delivery latency, confidence requirement, cost, and availability of sensing assets that support the sensing modality. The modality selection narrows the candidate asset set and reduces infeasible tasking requests.

In block 310, a processor in the dynamic scheduler may propagate an orbit for one or more orbital sensing assets. For example, the processor may retrieve ephemeris data, two-line-element data, constellation-planning data, or provider-access-window data and may calculate candidate ground tracks, access windows, look angles, incidence angles, revisit opportunities, downlink opportunities, and expected footprints for one or more satellites. The processor may compare each candidate footprint with the maritime geographic area, the area of interest, a predicted vessel path, or a computed area of likelihood. The orbit propagation operation provides physically feasible observation opportunities for satellite-based sensing assets.

In block 312, a processor in the dynamic scheduler may evaluate a time horizon associated with the external trigger and candidate acquisitions. For example, the processor may determine a monitoring start time, monitoring end time, maximum tasking latency, expected acquisition time, expected delivery time, expected processing time, expected insight-availability time, and expiration time for an observation entry. The processor may reject or penalize candidate observation opportunities that cannot produce observation output or sensor-derived insight data within the time horizon. The time-horizon evaluation aligns sensing-asset control with the operational value of timely maritime intelligence.

In block 314, a processor in the dynamic scheduler may calculate a distance to an area of likelihood for a maritime feature of interest. For example, the processor may generate an area of likelihood from a vessel's last known location, course, speed, heading, route history, automatic identification system data, radio-frequency detection, weather data, current data, and motion model and may compute geodesic distance, cross-track distance, along-track distance, or footprint-overlap distance between each candidate acquisition footprint and the area of likelihood. The processor may increase a score for a candidate observation opportunity when the candidate footprint overlaps the area of likelihood and may decrease the score when the candidate footprint lies outside a configured distance threshold. This calculation steers acquisition selection toward locations where the maritime feature of interest has a higher probability of being observed.

In block 316, a processor in the MSA system may task a capture when the dynamic scheduler selects a taskable sensing asset. For example, the processor may generate an asset-specific tasking instruction that includes a provider identifier, asset identifier, target coordinate, area geometry, time window, sensing modality, acquisition mode, resolution requirement, look-angle constraint, priority value, cost authorization, onboard-processing instruction, and delivery endpoint. The processor may transmit the asset-specific tasking instruction through a sensing-asset interface such as an application programming interface, message queue, operator interface, email interface, ground-station interface, asset-owner interface, or communications-relay interface. The task-capture operation causes new observation data to be collected when existing data cannot satisfy the trigger requirements.

In block 318, a processor in the MSA system may retrieve observation data from a repository when the dynamic scheduler selects a non-tasked sensing asset or repository source. For example, the processor may generate a repository query that includes a geographic search window, temporal search window, sensing-modality filter, resolution filter, cloud-cover filter, collection identifier, provider identifier, quality threshold, and delivery endpoint. The repository may include historical satellite imagery, planned acquisition data, open-source remote-sensing data, commercial remote-sensing data, radio-frequency intelligence data, automatic identification system data, weather data, port-camera data, acoustic data, or customer sensor-network data. This retrieval path reduces tasking cost and delivery latency when repository data already satisfies the acquisition objective.

In block 320, a processor in the MSA system may acquire an image or other observation output from the selected capture or repository path. For example, the processor may receive an image file, image tile set, synthetic-aperture-radar product, radio-frequency product, acoustic product, video segment, metadata package, or onboard-extracted insight packet through a sensing-asset interface or repository interface. The processor may store the observation output with an observation-output identifier, observation-entry identifier, acquisition time, delivery time, footprint, sensing modality, asset identifier, provider identifier, resolution metadata, geolocation metadata, and quality metadata. The acquisition operation produces the data object used by downstream feature detection and identification operations.

In block 322, a processor in the MSA system may detect features in the acquired image or other observation output. For example, the processor may apply preprocessing operations such as georeferencing, orthorectification, radiometric correction, speckle filtering, cloud masking, image registration, calibration, tiling, temporal alignment, and quality scoring before applying a feature detector. The feature detector may include a computer-vision model, segmentation model, object detector, wake detector, radio-frequency emitter detector, acoustic-event detector, thresholding routine, template-matching routine, or hybrid detector. The detection operation converts observation output into structured feature candidates with locations, geometries, classes, confidence values, and source references.

In block 324, a processor in the MSA system may determine identifiers for detected features. For example, the processor may compare detected vessel positions, vessel dimensions, vessel headings, vessel speeds, vessel classes, radio-frequency signatures, wake characteristics, and timestamps with automatic identification system data, vessel-registry data, vessel-risk-list data, sanctioned-vessel data, port-call data, route data, manifest data, and prior fused maritime intelligence. The processor may generate matching scores using spatial distance, temporal distance, dimensional similarity, class similarity, course similarity, speed similarity, and source-confidence weighting. The identifier determination operation may produce a vessel identifier, feature identifier, event identifier, dark-vessel indication, spoofing indication, absence indication, anomaly indication, or confidence value.

In block 326, a processor in the MSA system may predict a route for an identified maritime feature of interest. For example, the processor may generate a predicted future path using last known location, course, speed, heading, vessel class, vessel type, route history, automatic identification system data, bathymetry data, current data, weather data, shipping-lane data, destination data, and historical track data. The processor may output one or more route hypotheses with spatial coordinates, temporal coordinates, confidence values, uncertainty regions, and expected arrival times. The predicted route may update the next dynamic-scheduler execution so that method 300 may continue tracking or reacquiring the maritime feature of interest.

In block 328, a processor in the MSA system may provide an image or thumbnail to a user or user system. For example, the processor may generate a cropped image, downsampled image, annotated image, thumbnail, geospatial overlay, sensor-product link, or evidence package from the acquired image or other observation output. The processor may include bounding boxes, segmentation masks, vessel labels, feature labels, confidence values, acquisition time, sensing modality, provider identifier, and location metadata in the delivered image product. The image or thumbnail gives the user visual support for the generated insight while preserving bandwidth through reduced-size delivery.

In block 330, a processor in the MSA system may transmit one or more data products through an application programming interface. For example, the processor may serialize an intelligence record, vessel-track update, predicted-route object, observation-output metadata, alert record, image-product link, confidence value, and recommended action into a JavaScript Object Notation message, Extensible Markup Language message, geospatial feature object, or other structured response. The processor may transmit the structured response to a customer system, dashboard service, decision-support system, command system, analytics system, or automated response system using authenticated network communication. The application programming interface output supports machine-to-machine use of the maritime intelligence without requiring manual review.

In block 332, a processor in the MSA system may provide insight to a user after determining identifiers and predicting a route. For example, the processor may generate an insight message that includes a vessel identifier, feature identifier, event identifier, location, timestamp, predicted route, risk value, confidence value, supporting-source identifiers, acquisition metadata, image-product link, schedule implication, and recommended follow-up action. The processor may deliver the insight message through a dashboard, application programming interface, email message, alert channel, report object, or decision-support interface and may store the insight message as current fused maritime intelligence. The stored current fused maritime intelligence may be used to update a spatiotemporal risk map and trigger a later execution of the dynamic scheduler.

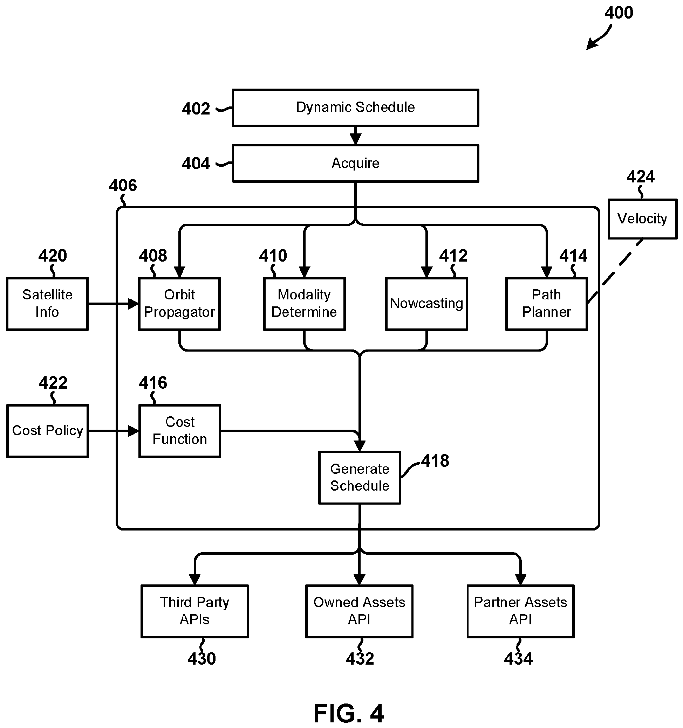

FIG. 4 is a process flow diagram illustrating a method 400 of updating an observation schedule for maritime monitoring based on sensing-asset availability, sensing-asset constraints, observation timing, and delivery timing in accordance with some embodiments. Method 400 may be performed by a dynamic scheduler executed by a processing system in a MSA system.

In block 402, a processor in a MSA system may receive or generate a dynamic-scheduling request for method 400. For example, the processor may receive a monitoring objective, an observation entry, a spatiotemporal risk-map cell, a vessel identifier, an area of interest, a time window, an expected risk-reduction value, a sensing-modality preference, a delivery-latency constraint, and a budget constraint from memory or from an external interface. The dynamic-scheduling request gives the system a machine-readable acquisition objective that may be converted into asset-specific schedule actions.

In block 404, a processor in the MSA system may generate an acquisition objective from the dynamic-scheduling request. For example, the processor may transform the observation entry into a spatial target, target footprint, temporal observation window, confidence threshold, minimum resolution, preferred sensing modality, permissible asset class, and delivery endpoint. The acquisition objective may identify whether the system seeks a new tasked acquisition, a repository acquisition, an owned-asset acquisition, or a partner-asset acquisition.

In block 406, a processor in a dynamic scheduler module may evaluate the acquisition objective using schedule-generation submodules and external input data. For example, the processor may execute an orbit propagator, modality-determination logic, nowcasting logic, path-planning logic, a cost function, and schedule-generation logic over satellite information, cost policy data, velocity data, asset-availability data, and asset-constraint data. The dynamic scheduler module may produce a schedule that aligns the acquisition objective with feasible sensing-asset opportunities and provider-interface constraints.

In block 408, a processor in the dynamic scheduler module may execute an orbit propagator for one or more orbital sensing assets. For example, the processor may retrieve two-line-element data, ephemeris data, attitude constraints, constellation-plan data, ground-station access windows, and provider access-window metadata and may calculate ground tracks, revisit times, look angles, incidence angles, candidate footprints, and downlink opportunities. The orbit propagator identifies physically feasible satellite observation opportunities for the acquisition objective.

In block 410, a processor in the dynamic scheduler module may determine a sensing modality for the acquisition objective. For example, the processor may compare the acquisition objective with modality capabilities for electro-optical sensing, synthetic-aperture-radar sensing, radio-frequency sensing, thermal sensing, hyperspectral sensing, multispectral sensing, acoustic sensing, camera sensing, and radar sensing. The processor may select or rank a sensing modality based on target size, target behavior, daylight availability, cloud cover, sea state, required resolution, delivery latency, confidence threshold, cost, and available sensing assets.

In block 412, a processor in the dynamic scheduler module may execute a nowcasting process for conditions that affect acquisition quality. For example, the processor may retrieve recent weather observations, forecast data, cloud-cover data, precipitation data, sea-state data, sunlight data, visibility data, wind data, current data, and atmospheric data and may generate a nowcast data structure for each candidate observation window. The nowcasting process may increase or decrease a candidate schedule score based on expected sensor performance during the candidate observation window.

In block 414, a processor in the dynamic scheduler module may execute a path planner for a maritime feature of interest. For example, the processor may use last known location, velocity data, heading data, course data, route history, automatic identification system data, radio-frequency detection data, weather data, current data, bathymetry data, and shipping-lane data to generate one or more predicted paths. The path planner may output predicted coordinates, temporal coordinates, uncertainty regions, confidence values, and expected arrival times for the maritime feature of interest.

In block 416, a processor in the dynamic scheduler module may execute a cost function for candidate schedule assignments. For example, the processor may compute a cost score using acquisition price, tasking price, repository access cost, downlink cost, processing cost, partner-asset cost, owned-asset opportunity cost, cancellation cost, delivery-latency penalty, duplicate-acquisition penalty, and budget-consumption state. The cost function helps the schedule-generation logic select observation actions that satisfy the acquisition objective without unnecessary sensing-asset use or excessive network and processing cost.

In block 418, a processor in the dynamic scheduler module may generate an enhanced observation schedule from outputs of the orbit propagator, modality-determination logic, nowcasting logic, path-planning logic, and cost function. For example, the processor may score candidate observation opportunities using footprint overlap, temporal-window match, modality fit, expected image quality, predicted target location, expected delivery time, expected risk reduction, asset availability, provider constraints, and cost score. The enhanced observation schedule may assign the acquisition objective to a third-party asset API, owned-assets API, partner-assets API, repository request, or alternative schedule action.

In block 420, a processor in the MSA system may retrieve satellite information for use by the dynamic scheduler module. For example, the processor may retrieve satellite identifiers, orbital elements, ephemeris data, payload types, swath widths, ground sample distances, pointing limits, slew limits, imaging modes, downlink opportunities, operational status, already-scheduled acquisitions, provider rules, and availability windows. The satellite information supplies the physical and operational constraints used by the orbit propagator and schedule-generation logic.

In block 422, a processor in the MSA system may retrieve a cost policy for use by the cost function. For example, the processor may retrieve customer budget limits, mission priority values, asset-use limits, provider price tables, cancellation rules, owned-asset allocation rules, partner-asset allocation rules, delivery-latency penalties, duplicate-acquisition penalties, and service-level requirements from memory. The cost policy converts business and mission constraints into values that the cost function may use during schedule generation.

In block 424, a processor in the MSA system may retrieve or calculate velocity data for a maritime feature of interest. For example, the processor may calculate velocity data from automatic identification system reports, sequential sensor detections, radio-frequency detections, radar detections, acoustic detections, prior fused maritime intelligence, or user-provided track data. The velocity data may include speed, course, heading, acceleration, turn rate, timestamp, location uncertainty, and source-confidence value for use by the path planner.

In block 430, a processor in the MSA system may transmit a scheduled observation action through a third-party asset application programming interface. For example, the processor may convert the enhanced observation schedule into a provider-specific request that includes a provider identifier, target coordinate, area geometry, time window, sensing modality, imaging mode, resolution constraint, priority value, authentication token, cost authorization, and delivery endpoint. The third-party asset API may return provider metadata such as feasibility status, acceptance status, expected acquisition time, expected delivery time, footprint, cost, and observation-output link.

In block 432, a processor in the MSA system may transmit a scheduled observation action through an owned-assets application programming interface. For example, the processor may submit a command or schedule update to an owned satellite, owned aircraft, owned uncrewed aerial vehicle, owned uncrewed surface vehicle, owned coastal sensor, owned buoy, owned ground station, or owned processing node. The owned-assets API may support direct tasking, priority changes, onboard-processing instructions, acquisition-parameter updates, downlink routing, cancellation actions, and execution-status feedback.

In block 434, a processor in the MSA system may transmit a scheduled observation action through a partner-assets application programming interface. For example, the processor may format a partner-specific tasking request, repository request, feasibility request, or schedule recommendation using partner permissions, partner pricing rules, partner data-access rules, partner delivery endpoints, and partner operational constraints. The partner-assets API may allow the MSA system to incorporate partner sensing assets into the enhanced observation schedule while preserving access restrictions and provider-specific workflows.

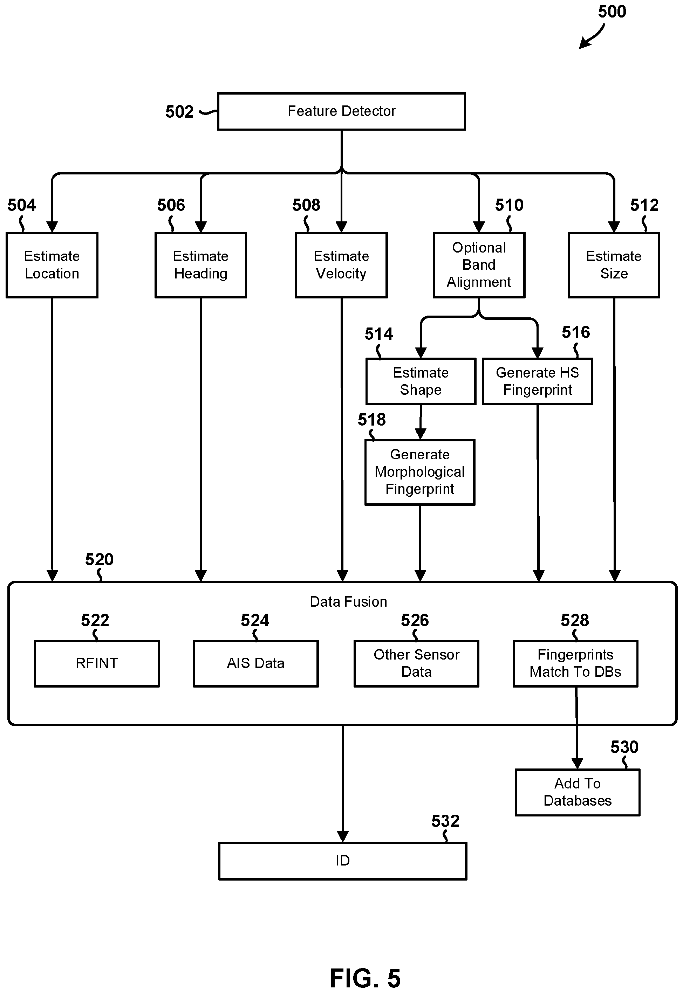

FIG. 5 is a process flow diagram illustrating a method 500 of identifying a vessel of interest by fusing sensor-derived vessel information with contextual maritime data in accordance with some embodiments. Method 500 may be performed by a processing system in a MSA system having an insight generation stage and a data fusion stage.

In block 502, a processor in a vessel-identification module of a MSA system may detect one or more maritime features in observation output. For example, the processor may receive electro-optical imagery, synthetic-aperture-radar data, hyperspectral data, multispectral data, radio-frequency data, video data, acoustic data, or processed sensor data and may apply a feature detector that includes an object-detection model, segmentation model, template-matching routine, thresholding routine, wake-detection routine, radio-frequency emitter detector, or hybrid detection routine. The processor may output feature candidates that include feature locations, bounding boxes, segmentation masks, detection confidence values, sensing-modality identifiers, acquisition times, and source-observation identifiers. This operation converts sensor data into structured feature candidates that later operations may use for vessel identification.

In block 504, a processor in the vessel-identification module may estimate a location for each detected maritime feature. For example, the processor may convert image coordinates, pixel coordinates, radar range measurements, radio-frequency bearings, acoustic bearings, or sensor-local coordinates into geodetic coordinates using sensor attitude data, ephemeris data, ground-control data, camera calibration data, georeferencing metadata, range models, time tags, and coordinate transformation matrices. The estimated location may include latitude, longitude, altitude or sea-level reference, acquisition time, spatial uncertainty, covariance data, and a source-confidence value. The estimated location gives the data-fusion process a common spatial reference for matching the detected maritime feature with external maritime data.

In block 506, a processor in the vessel-identification module may estimate a heading for each detected maritime feature. For example, the processor may analyze vessel orientation in image data, bow-stern geometry, wake direction, sequential detections, radar track angle, radio-frequency bearing change, or automatic identification system data associated with nearby candidate vessels. The estimated heading may include a heading angle, heading uncertainty, timestamp, source identifier, and confidence value. The estimated heading improves differentiation among nearby vessels and supports later route prediction and behavior analysis.

In block 508, a processor in the vessel-identification module may estimate a velocity for each detected maritime feature. For example, the processor may calculate velocity from sequential sensor detections, automatic identification system reports, radar track updates, radio-frequency geolocation updates, wake morphology, motion blur, Doppler information, or a fused track maintained in memory. The estimated velocity may include speed, course over ground, acceleration, turn rate, timestamp, uncertainty, and confidence value. The estimated velocity helps determine whether a detected maritime feature matches a known vessel track or represents an anomalous vessel state.

In block 510, a processor in the vessel-identification module may perform optional band alignment for multispectral or hyperspectral observation output. For example, the processor may register spectral bands by using sensor calibration files, tie points, edge features, homography estimation, affine transforms, optical distortion correction, line-of-sight metadata, and temporal synchronization metadata. The processor may generate an aligned spectral data cube in which corresponding pixels or regions share a common spatial reference across spectral bands. Band alignment improves reliability of hyperspectral fingerprint generation and reduces matching error caused by band-to-band displacement.

In block 512, a processor in the vessel-identification module may estimate a size for each detected maritime feature. For example, the processor may compute a vessel length, beam, area, draft proxy, mast-height proxy, or silhouette dimension from a segmentation mask, bounding box, sensor ground sample distance, incidence angle, range measurement, geolocation metadata, and perspective model. The estimated size may include length, width, area, aspect ratio, dimension uncertainty, and confidence value. The estimated size provides a discriminating attribute for matching a detected vessel to vessel-registry data and automatic-identification-system data.

In block 514, a processor in the vessel-identification module may estimate a shape for each detected maritime feature. For example, the processor may analyze a segmentation mask, contour, hull outline, superstructure region, deck layout, wake boundary, shadow boundary, or radar cross-section region and may compute geometric descriptors such as aspect ratio, convexity, elongation, centroid offset, contour curvature, moment invariants, or keypoint positions. The estimated shape may include a shape class, shape vector, hull-outline model, superstructure estimate, uncertainty value, and confidence value. The estimated shape supports identification when name, transponder, or registry data lacks reliability or availability.

In block 516, a processor in the vessel-identification module may generate a hyperspectral fingerprint for each detected maritime feature. For example, the processor may extract a spectral signature from aligned spectral bands, remove background pixels, normalize radiance or reflectance values, correct for atmospheric effects, remove glint or cloud-contaminated pixels, and encode the resulting spectral signature as a feature vector. The hyperspectral fingerprint may include spectral-band values, band ratios, material indicators, normalization metadata, sensor metadata, timestamp, and confidence value. The hyperspectral fingerprint may support material classification, vessel-type classification, or comparison with known spectral fingerprints.

In block 518, a processor in the vessel-identification module may generate a morphological fingerprint for each detected maritime feature. For example, the processor may combine location-normalized shape descriptors, size estimates, heading data, wake descriptors, superstructure descriptors, hull-outline descriptors, texture descriptors, and class-probability outputs into a computer-readable feature vector. The morphological fingerprint may include vessel length, vessel beam, aspect ratio, contour features, segmentation features, wake features, deck-layout indicators, sensor modality, acquisition geometry, and confidence values. The morphological fingerprint gives the data-fusion process a compact identity signature for matching against databases and prior detections.

In block 520, a processor in a data-fusion module of the MSA system may fuse feature attributes and contextual maritime data to identify a detected maritime feature. For example, the processor may receive estimated location, estimated heading, estimated velocity, estimated size, estimated shape, hyperspectral fingerprints, morphological fingerprints, radio-frequency intelligence data, automatic-identification-system data, other sensor data, and database-match results and may align those inputs by time, location, uncertainty, and source confidence. The processor may compute candidate matches using weighted scoring, Bayesian fusion, nearest-neighbor matching, graph association, track-to-detection association, RANSAC-based alignment, or machine-learning classification. Data fusion converts separate observations and reports into a consistent intelligence record for vessel identification.

In block 522, a processor in the data-fusion module may retrieve and process radio-frequency intelligence data for use in vessel identification. For example, the processor may receive radio-frequency emitter detections, emitter geolocations, signal frequencies, signal strengths, modulation features, time-difference-of-arrival estimates, frequency-difference-of-arrival estimates, bearing estimates, or emitter-class labels from a radio-frequency sensing asset or repository. The processor may compare radio-frequency intelligence data with the estimated location, heading, velocity, and time of the detected maritime feature. Radio-frequency intelligence data may help identify vessels that lack reliable visual identifiers or automatic-identification-system reports.

In block 524, a processor in the data-fusion module may retrieve and process automatic-identification-system data for use in vessel identification. For example, the processor may retrieve automatic-identification-system messages within a spatial search window and temporal search window associated with the detected maritime feature and may parse vessel identity, maritime mobile service identity, vessel name, vessel type, reported location, course, speed, heading, destination, and timestamp. The processor may interpolate automatic-identification-system positions to the acquisition time of the observation output and may compare interpolated positions with sensor-derived vessel positions. This operation supports identification of matching vessels and detection of dark-vessel or spoofing conditions.

In block 526, a processor in the data-fusion module may retrieve and process other sensor data for use in vessel identification. For example, the processor may retrieve synthetic-aperture-radar detections, electro-optical detections, thermal detections, acoustic detections, radar tracks, port-camera detections, uncrewed-vehicle detections, buoy detections, coastal-sensor detections, or user-provided observations associated with the detected maritime feature. The processor may align the other sensor data with the detected maritime feature using coordinate transformation, time synchronization, track association, uncertainty modeling, and source-confidence weighting. Other sensor data may strengthen the identification result when one sensing modality has poor quality or limited coverage.

In block 528, a processor in the data-fusion module may match generated fingerprints to one or more databases. For example, the processor may query a vessel-fingerprint database, vessel-registry database, historical-observation database, known-vessel database, sanctioned-vessel database, risk-list database, fleet database, customer database, or prior-fused-intelligence database using the hyperspectral fingerprint, morphological fingerprint, estimated size, estimated shape, heading, velocity, and location. The processor may compute similarity scores using vector distance, cosine similarity, learned embeddings, descriptor matching, probabilistic matching, or weighted rule-based matching. Fingerprint matching supports identification even when automatic-identification-system data is absent, false, delayed, or inconsistent.

In block 530, a processor in the data-fusion module may add new fingerprint data, feature data, or intelligence data to one or more databases. For example, the processor may store a hyperspectral fingerprint, morphological fingerprint, estimated location, estimated heading, estimated velocity, estimated size, estimated shape, vessel identifier, event identifier, source-observation identifier, confidence value, and acquisition metadata in an operational data store. The processor may update a prior vessel profile, create a new vessel profile, append a track history, record a dark-vessel indication, record a spoofing indication, or store a new training example for a later model update. Updating the databases improves later matching and supports iterative MSA.

In block 532, a processor in the vessel-identification module may generate an identifier for the detected maritime feature. For example, the processor may select a vessel identifier, candidate vessel identifier, feature identifier, event identifier, unknown-vessel identifier, dark-vessel identifier, spoofing indication, or absence indication based on fused match scores, confidence thresholds, source reliability, and conflict-resolution rules. The generated identifier may include a confidence value, supporting-source list, location, timestamp, estimated state, fingerprint references, and recommended follow-up action. The processor may output the identifier to a dashboard, application programming interface, alert channel, decision-support system, enhanced observation scheduler, or spatiotemporal risk-map update process.

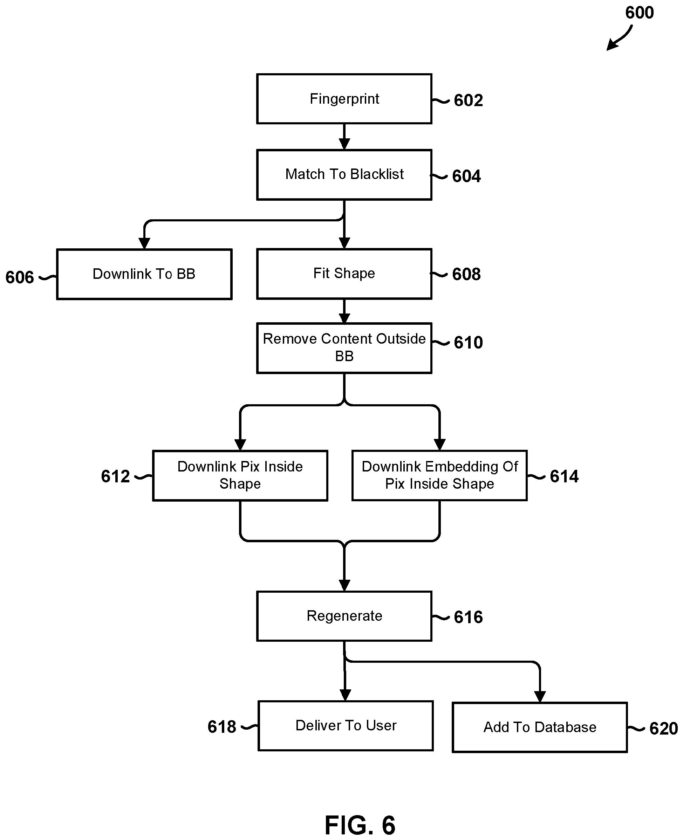

FIG. 6 is a process flow diagram illustrating a method 600 of generating low-latency maritime observation output using onboard processing of sensor data in accordance with some embodiments. Method 600 may be performed by an onboard processing system of a sensing asset in communication with a MSA system.

In block 602, a processor in an onboard processing system of a sensing asset may generate a fingerprint for a detected maritime feature in observation output. For example, the processor may receive image pixels, spectral-band values, radar returns, radio-frequency features, segmentation masks, bounding boxes, geolocation metadata, acquisition-time metadata, sensor-attitude metadata, and sensor-calibration metadata and may encode one or more of those inputs into a compact feature vector. The fingerprint may include a morphological fingerprint, hyperspectral fingerprint, radio-frequency fingerprint, learned embedding, vessel-shape descriptor, size descriptor, wake descriptor, texture descriptor, or multimodal descriptor. The fingerprint provides a compact representation of the detected maritime feature so that the sensing asset may perform screening and prioritization before transmitting a larger sensor-data product.

In block 604, a processor in the onboard processing system may match the fingerprint to a blacklist or other watch-list database. For example, the processor may compare the fingerprint with database entries for sanctioned vessels, vessels of interest, restricted-zone targets, high-risk vessel classes, known spoofing vessels, suspicious morphology profiles, known radio-frequency emitter profiles, or customer-defined targets using vector distance, cosine similarity, hash matching, probabilistic matching, threshold scoring, or a trained classifier. The processor may generate a match score, match confidence, candidate identifier, watch-list category, and transmission priority for the detected maritime feature. The match operation supports onboard triage so that high-value detections may receive faster or more selective downlink treatment.

In block 606, a processor in the onboard processing system may downlink bounding-box data for a detected maritime feature associated with a blacklist match or another transmission criterion. For example, the processor may generate a bounding-box packet that includes a bounding-box coordinate set, image-tile identifier, acquisition time, sensing-modality identifier, geolocation estimate, match score, confidence value, candidate vessel identifier, and source-observation identifier. The processor may transmit the bounding-box packet through a ground-station link, tactical downlink, inter-satellite link, direct-to-ground link, relay link, or provider network link. The bounding-box packet allows a ground processing system or user system to receive prompt location and match information without waiting for full-scene image delivery.

In block 608, a processor in the onboard processing system may fit a shape to the detected maritime feature. For example, the processor may refine a coarse bounding box by applying a segmentation model, contour detector, active contour routine, polygon-fitting routine, mask-generation model, edge detector, or template-matching routine to pixels or returns within the bounding box. The processor may generate a fitted-shape mask, polygon, contour, hull outline, superstructure region, wake region, shape confidence value, and shape-uncertainty value. The fitted shape identifies the portion of the observation output that contains the detected maritime feature and supports selective retention of useful sensor content.

In block 610, a processor in the onboard processing system may remove content outside a bounding box or fitted shape. For example, the processor may crop an image tile to a bounding-box region, mask pixels outside a fitted-shape mask, discard background pixels, zero-fill non-feature pixels, compress non-feature pixels at a lower quality level, or omit non-feature pixels from an outbound payload. The processor may preserve metadata that links the cropped or masked content to the original observation geometry, acquisition time, sensor identifier, and geolocation estimate. This operation reduces downlink volume and downstream memory traffic by transmitting feature-relevant content rather than unrelated background content.

In block 612, a processor in the onboard processing system may downlink pixels inside the fitted shape. For example, the processor may package retained pixels, masked pixels, cropped image data, spectral-band subsets, radiometric metadata, geolocation metadata, shape-mask metadata, and confidence metadata into a feature-focused image product. The processor may compress the feature-focused image product using a lossless or lossy codec and may transmit the feature-focused image product through a low-latency communications link or scheduled downlink. The downlinked pixels provide visual or sensor evidence for the detected maritime feature while reducing the amount of transmitted data relative to a full sensor product.

In block 614, a processor in the onboard processing system may downlink an embedding of pixels inside the fitted shape. For example, the processor may apply a trained computational unit to the retained pixels or masked pixels to generate an embedding vector that represents visual structure, spectral characteristics, radar characteristics, texture, shape, or vessel-class information. The processor may package the embedding vector with a model identifier, model version, confidence value, fitted-shape identifier, geolocation estimate, acquisition time, sensing-modality identifier, and source-observation identifier. The embedding allows a ground processing system to perform matching, fusion, ranking, or alerting with substantially less data transfer than pixel delivery.

In block 616, a processor in the onboard processing system or a ground processing system may regenerate a data product from the downlinked pixels, downlinked embedding, bounding-box data, fitted-shape data, or associated metadata. For example, the processor may reconstruct an annotated thumbnail, cropped image product, feature overlay, vessel-chip image, confidence map, segmentation overlay, database-search query, or fused insight packet from the transmitted feature-focused content. The processor may combine the regenerated data product with contextual maritime data such as automatic identification system data, vessel-registry data, radio-frequency intelligence data, route data, weather data, or prior fused maritime intelligence. The regenerated data product supports user review and data fusion without requiring transmission or processing of the full original observation output.

In block 618, a processor in the onboard processing system or ground processing system may deliver the regenerated data product to a user or user system. For example, the processor may transmit an alert record, annotated thumbnail, feature-focused image product, embedding-derived match result, watch-list match result, confidence value, location, acquisition time, sensing modality, candidate identifier, and recommended action through a dashboard, application programming interface, email channel, decision-support interface, report object, or automated response system. The delivered data product may include links to retained pixels, embeddings, source metadata, contextual maritime data, and follow-up scheduling options. The delivery operation provides timely MSA while preserving bandwidth through feature-focused transmission.

In block 620, a processor in the onboard processing system or ground processing system may add the fingerprint, regenerated data product, match result, or associated metadata to one or more databases. For example, the processor may store a fingerprint vector, embedding vector, fitted-shape mask, bounding-box coordinates, retained-pixel reference, vessel candidate identifier, watch-list match score, confidence value, acquisition time, geolocation estimate, sensing-modality identifier, model version, and source-observation identifier in an operational data store. The processor may update a vessel-fingerprint database, watch-list database, historical-observation database, training-data repository, risk-map update repository, or fused-maritime-intelligence repository. The stored data supports later matching, model improvement, historic-path generation, and updated spatiotemporal risk-map generation for a subsequent monitoring iteration.

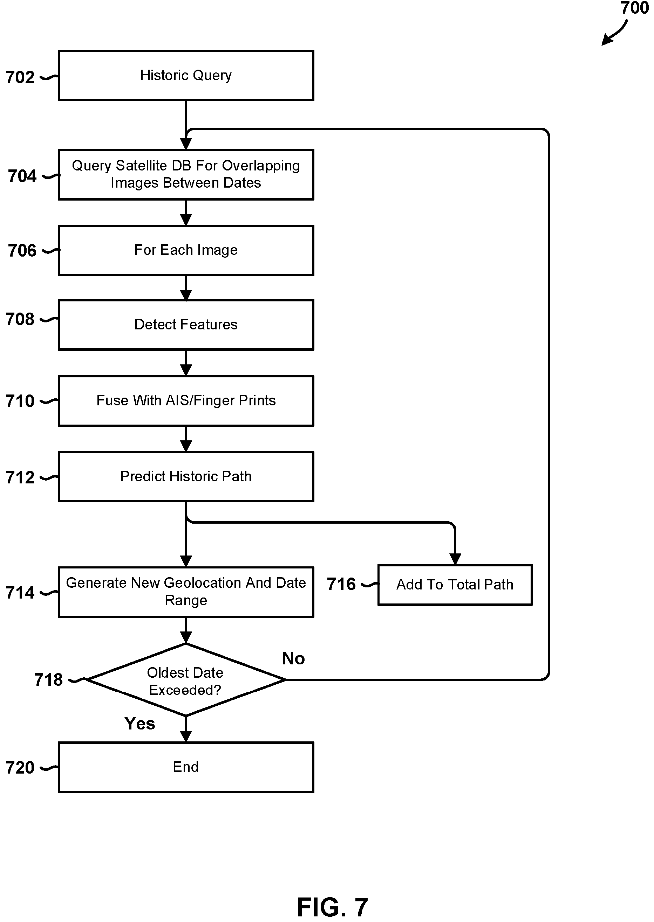

FIG. 7 is a process flow diagram illustrating a method 700 of generating a historic path for a maritime feature of interest from observation output and contextual maritime data in accordance with some embodiments. Method 700 may be performed by a processing system in a MSA system having access to historical maritime data sources.

In block 702, a processing system (a processor in a historic-path-generation module of a MSA system, etc.) may receive a historic query for a maritime feature of interest. For example, the processor may receive the historic query from a user interface, application programming interface, alert service, vessel-identification module, data-fusion module, or risk-map update process. The historical query may include a vessel identifier, feature identifier, event identifier, last-known location, search radius, date range, sensing-modality preference, confidence threshold, repository preference, and delivery endpoint. The historic query defines the feature and time period for which the system reconstructs past movement.

In block 704, the processing system may query a satellite database for overlapping images between dates associated with the historic query. For example, the processor may form a repository query using a geographic search window, a start date, an end date, a sensing-modality filter, a resolution filter, a cloud-cover filter, a provider identifier, a collection identifier, and a metadata-quality threshold. The satellite database may include electro-optical imagery, synthetic-aperture-radar imagery, hyperspectral imagery, multispectral imagery, thermal imagery, archived tasking products, planned acquisition products, or public remote-sensing products. The query identifies historical observation output that may contain the maritime feature of interest at one or more earlier times.

In block 706, the processing system may process each image returned by the satellite database query. For example, the processor may iterate through returned image metadata, retrieve each image or image tile set, associate the retrieved image with a repository identifier, acquisition time, footprint, sensing modality, resolution value, geolocation metadata, quality score, and source-observation identifier, and place the retrieved image in a processing queue. The processor may skip an image when the image lacks sufficient overlap with the search window, fails a quality threshold, lacks required metadata, or falls outside the date range. This filtering reduces unnecessary feature-detection processing on imagery that cannot support the historic query.

In block 708, the processing system may detect features in each image associated with the historic query. For example, the processor may apply preprocessing operations such as georeferencing, orthorectification, radiometric correction, speckle filtering, cloud masking, image registration, calibration, tiling, temporal alignment, and quality scoring before applying a feature detector. The feature detector may include an object-detection model, segmentation model, vessel detector, wake detector, radio-frequency emitter detector, thresholding routine, template-matching routine, or hybrid detection routine. The feature-detection operation converts archived imagery into candidate historical detections that may be evaluated against the queried maritime feature of interest.

In block 710, the processing system may fuse detected features with automatic identification system data and fingerprint data. For example, the processor may retrieve automatic identification system messages, vessel-registry data, prior vessel fingerprints, hyperspectral fingerprints, morphological fingerprints, radio-frequency intelligence data, route data, port-call data, and prior fused maritime intelligence for a spatial search window and temporal search window associated with each detected feature. The processor may compare detected-feature location, detected-feature size, detected-feature heading, detected-feature velocity, detected-feature shape, spectral signature, and morphological signature against contextual maritime data using temporal interpolation, spatial matching, uncertainty modeling, source-confidence weighting, and similarity scoring. The fusion operation helps distinguish the queried maritime feature of interest from other vessels or objects that appear in the same historical imagery.

In block 712, the processing system may predict a historic path for the maritime feature of interest from fused historical detections and contextual maritime data. For example, the processor may generate one or more backward-time route hypotheses using fused detection times, fused detection locations, vessel heading, vessel speed, automatic identification system history, radio-frequency detections, route history, bathymetry data, current data, weather data, shipping-lane data, port-call data, and vessel-class data. The processor may assign each route hypothesis a confidence value, spatial uncertainty region, temporal uncertainty region, and supporting-source list. The historic path prediction links discrete historical detections into a coherent movement history for the maritime feature of interest.

In block 714, the processing system may generate a new geolocation range and date range for continued historical search. For example, the processor may expand, contract, or shift the geographic search window based on the predicted historic path, estimated vessel speed, heading uncertainty, elapsed time, expected route constraints, coastlines, shipping lanes, bathymetry, current data, and prior detection confidence. The processor may also move the date range backward in time by a fixed interval, adaptive interval, acquisition-availability interval, or confidence-weighted interval. This operation allows the system to search earlier imagery in areas where the maritime feature of interest likely traveled before the current historical detections.

In block 716, the processing system may add the predicted historic path segment to a total path data structure. For example, the processor may store one or more path segments with segment identifiers, start times, end times, spatial coordinates, temporal coordinates, confidence values, uncertainty values, supporting-source identifiers, matched fingerprint identifiers, matched automatic-identification-system identifiers, and image-source identifiers. The total path data structure may include confirmed detections, inferred path segments, candidate path branches, rejected path branches, and confidence-weighted route hypotheses. The accumulated total path gives the system a persistent historical movement record that may be delivered to a user or used to update future risk prediction.

In block 718, the processing system may determine whether an oldest-date criterion has been exceeded. For example, the processor may compare the next date range or current search date against a user-defined oldest date, mission-defined oldest date, repository-availability limit, confidence threshold, maximum number of iterations, maximum processing budget, maximum query budget, or maximum elapsed processing time. When the oldest-date criterion has not been exceeded, the processor may return to block 704 using the new geolocation range and date range generated in block 714. When the oldest-date criterion has been exceeded, the processor may stop the iterative historical search and prepare the total path data structure for output.

In block 720, the processing system may end method 700 by outputting the generated historic path. For example, the processor may transmit the total path data structure to a dashboard, application programming interface, alert service, report generator, decision-support system, data-fusion module, or spatiotemporal risk-map update process. The output may include a map overlay, track timeline, confidence-weighted route, supporting imagery references, fingerprint matches, automatic-identification-system matches, uncertainty regions, and recommended follow-up observations. The generated historic path may support vessel identification, anomaly analysis, risk-map updating, and generation of new observation entries for later monitoring iterations.

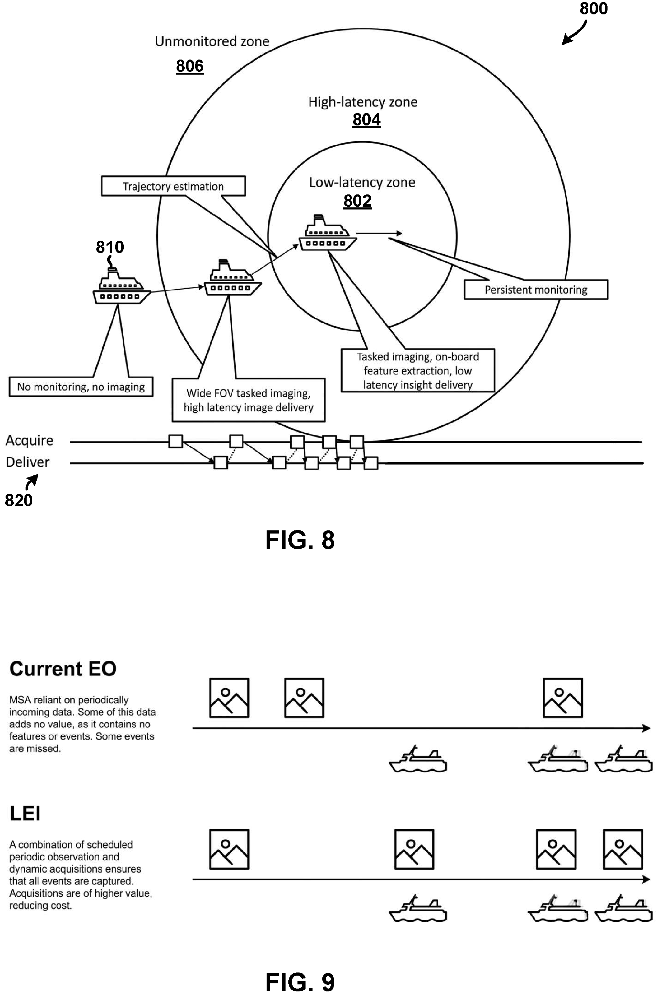

FIG. 8 is a block diagram illustrating MSA zones and associated acquisition and delivery timing in accordance with some embodiments. The MSA system 800 may define a plurality of monitoring zones for an area of interest, such as a low-latency zone 802, a high-latency zone 804, and an unmonitored zone 806. The zones may be generated by a processing system as buffer zones around the area of interest, around a protected asset, around an exclusive economic zone, around critical underwater infrastructure, or around another maritime feature of interest. In some embodiments, each zone may be represented in memory as a geospatial boundary, a set of spatiotemporal risk-map cells, or a rule set that associates vessel position, vessel velocity, and estimated time to arrival with acquisition frequency and delivery-latency requirements.

As shown in FIG. 8, a vessel 810 located in the unmonitored zone 806 may be outside a region for which the system schedules imaging, or may be located in a region for which the system performs passive monitoring without tasked imaging. In some embodiments, the processing system may still receive contextual maritime data for the vessel, such as Automatic Identification System (AIS) data, radio-frequency intelligence data, weather data, route data, port-call data, or previously fused maritime intelligence. The processing system may use the contextual maritime data to estimate whether and when the vessel may enter a higher-priority zone.

In the high-latency zone 804, the processing system may schedule lower-frequency or wider-field-of-view observations. For example, the processing system may generate scheduled observation actions that use lower-cost repository data, planned non-tasked acquisitions, wide-swath satellite imaging, or lower-priority tasked acquisitions. The processing system may tolerate longer delivery latency in the high-latency zone because the estimated time before the vessel reaches the area of interest may be greater than the expected time to observation and the expected time to insight availability. The processing system may use trajectory estimation to determine whether the vessel may enter the low-latency zone and to adjust the next observation time.

In the low-latency zone 802, the processing system may schedule higher-frequency observations and lower-latency delivery mechanisms. For example, the processing system may assign an observation entry to a taskable sensing asset configured to perform onboard feature extraction, onboard vessel detection, onboard classification, or onboard generation of sensor-derived insight data. The sensing asset may transmit an insight packet, thumbnail, bounding-box packet, feature vector, or other compact observation output through a ground-station link, tactical downlink, inter-satellite link, direct-to-ground link, or other low-latency communications link. This allows the system to deliver actionable maritime intelligence faster than a workflow that waits for full-scene image downlink and ground processing.

FIG. 8 also illustrates that the dynamic scheduler may vary both acquisition timing and delivery timing as the vessel approaches the area of interest. In some embodiments, the processing system may use the vessel's estimated location, heading, speed, route history, route prediction, and uncertainty region to calculate a time-to-zone-crossing value for each zone. The processing system may then select a scheduled observation action based on the time-to-zone-crossing value, the risk value for the relevant spatiotemporal cells, asset-availability data, asset-constraint data, delivery-latency constraints, expected risk reduction, and cost. The resulting enhanced observation schedule may include no imaging for an outer region, periodic wide-field-of-view imaging for an intermediate region, and persistent or near-persistent monitoring for an inner region.

The acquisition and delivery timelines 820 illustrate that acquisition events and delivery events may occur at different times. In some embodiments, the processing system may maintain separate time values for scheduled acquisition, scheduled delivery, actual acquisition, actual delivery, expected insight availability, and actual insight availability. The processing system may encode those time values in an observability map or in an enhanced observation schedule. The processing system may update the spatiotemporal risk map only after observation output or sensor-derived insight data is received, or may update the spatiotemporal risk map earlier when provider metadata, acquisition confirmation, or limited feedback indicates that an observation has occurred.

In some embodiments, the MSA system 800 may also include an adaptive feedback loop. When the processing system receives observation output indicating that a vessel was not present in an expected location, the processing system may lower risk values for the observed spatiotemporal cells and increase or preserve risk values along alternate predicted paths. When the processing system receives observation output confirming the vessel's location, identity, behavior, or risk state, the processing system may update the vessel track, update the predicted route, update the enhanced observation schedule, and generate a later scheduled observation action for a closer or higher-priority zone.

FIG. 9 is a block diagram illustrating tasked acquisitions used to fill information gaps in the MSA system in accordance with some embodiments. The upper timeline illustrates a periodic Earth-observation collection pattern in which image acquisitions arrive according to a predetermined or externally controlled cadence. In that pattern, some observation output may be stale, and events occurring between scheduled acquisitions may not be captured. For example, one or more vessel movements, vessel encounters, ship-to-ship transfer events, route deviations, or other maritime events of interest may occur between periodically acquired images. The processing system may detect those temporal gaps by comparing event timing, vessel-track predictions, risk-map values, and repository acquisition times.

The lower timeline of FIG. 9 illustrates a Live Earth Intelligence collection pattern in which the maritime situational awareness system combines scheduled periodic observation with dynamic acquisitions generated by the dynamic scheduler. In some embodiments, the processing system may first identify existing or planned observation output from non-tasked sensing assets, including open-product satellite repositories, commercial imagery repositories, planned acquisition feeds, radio-frequency intelligence repositories, weather repositories, automatic-identification-system sources, or other contextual maritime data sources. The processing system may then compare those existing or planned observation opportunities with observation entries generated from a spatiotemporal risk map.

When the comparison indicates that existing or planned observation opportunities do not satisfy a required spatial window, temporal window, sensing modality, delivery-latency constraint, confidence threshold, or risk value, the processing system may generate a tasked acquisition to fill the information gap. For example, the processing system may assign an observation entry to a taskable electro-optical satellite, synthetic-aperture-radar satellite, radio-frequency collection satellite, high-altitude platform, uncrewed aerial vehicle, uncrewed surface vehicle, port camera, buoy, coastal sensor, or partner sensing asset. The processing system may generate an asset-specific tasking instruction that includes a target coordinate, area geometry, time window, sensing modality, acquisition mode, resolution requirement, cost authorization, onboard-processing instruction, and delivery endpoint.

In some embodiments, the processing system may generate the mix of repository observations and tasked acquisitions based on an optimization objective. The optimization objective may account for expected risk reduction, expected observation value, acquisition cost, tasking cost, delivery latency, sensing modality, cloud cover, weather suitability, asset availability, downlink availability, duplicate-observation avoidance, and customer policy. By using repository imagery when it is sufficient and tasking new acquisitions when repository imagery leaves an information gap, the processing system may reduce unnecessary tasking while improving the chance that high-value maritime events are captured.

FIG. 9 also illustrates that dynamic acquisitions may be placed between periodic observation times. In some embodiments, the processing system may treat the periodic observations as fixed or non-tasked observation opportunities and may insert scheduled observation actions into temporal gaps between those opportunities. The processing system may select the inserted scheduled observation actions so that expected observation coverage aligns with predicted vessel locations or with high-risk spatiotemporal cells in the spatiotemporal risk map. The resulting enhanced observation schedule may provide higher-value observation output than periodic acquisition alone because the schedule is responsive to risk, asset availability, and predicted event timing.

In some embodiments, the processing system may store the result of the FIG. 9 scheduling process in an observability map. The observability map may identify time periods and regions covered by repository observations, time periods and regions covered by tasked acquisitions, and time periods and regions that remain unobserved. The processing system may generate a dark-spot record when a high-risk spatiotemporal cell lacks suitable observation coverage within a required time window. The processing system may provide the observability map or dark-spot record to a user, to a decision-support system, or to a later scheduling iteration.

The lower timeline of FIG. 9 may also correspond to a closed-loop scheduling process. After the processing system obtains observation output from the periodic observations and dynamic acquisitions, the processing system may extract sensor-derived insight data, retrieve contextual maritime data, and generate current fused maritime intelligence. The processing system may then modify risk values in the spatiotemporal risk map based on the current fused maritime intelligence. In this manner, the next dynamic schedule may be driven by updated knowledge of vessel presence, absence, identity, behavior, route, and risk state.

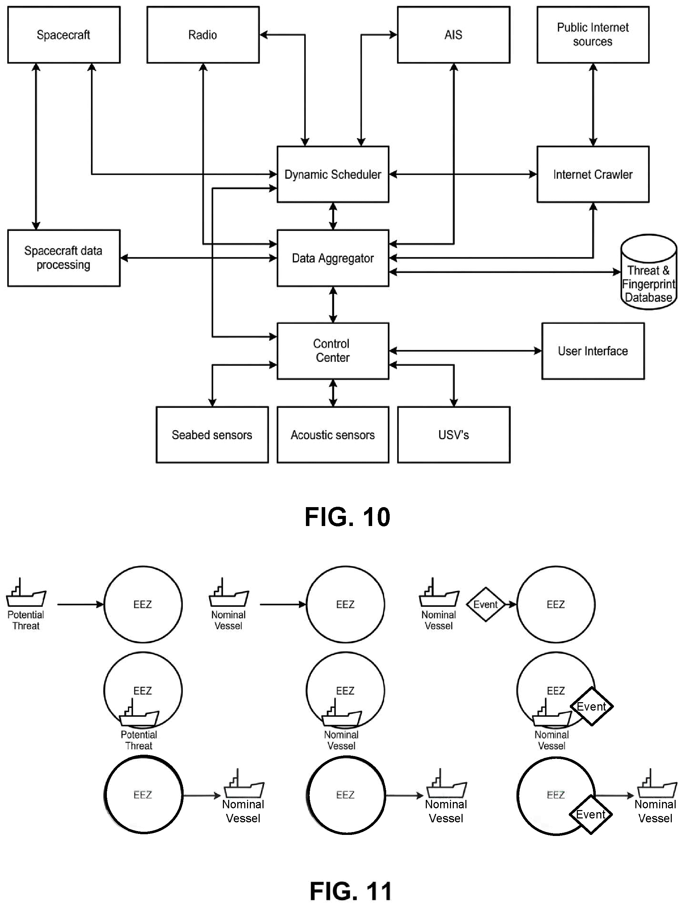

FIG. 10 is a block diagram illustrating an MSA system architecture in accordance with some embodiments.

Referring to FIG. 10, an example maritime situational awareness system architecture is illustrated in accordance with some embodiments. The system may include one or more spacecraft, one or more radio-frequency collection systems, one or more automatic identification system (AIS) data sources, one or more public Internet sources, an Internet crawler, a dynamic scheduler, a data aggregator, a spacecraft data-processing system, a control center, a threat and fingerprint database, one or more seabed sensors, one or more acoustic sensors, one or more uncrewed surface vehicles (USVs), and a user interface. In some embodiments, the illustrated components may be implemented as hardware components, software components executed by a processing system, network-accessible services, sensing assets, data repositories, or combinations thereof.

In some embodiments, the spacecraft may include one or more electro-optical satellites, synthetic-aperture-radar satellites, radio-frequency collection satellites, hyperspectral satellites, multispectral satellites, or other orbital sensing assets. The spacecraft may acquire observations of a maritime geographic area and may transmit sensor data, processed sensor data, metadata, or sensor-derived insights to the spacecraft data-processing system. The spacecraft data-processing system may perform preprocessing, geolocation, image correction, feature detection, vessel detection, vessel classification, vessel identification, onboard result handling, or extraction of sensor-derived insight data from spacecraft observation output. The spacecraft data-processing system may provide processed results to the data aggregator and may receive scheduling or tasking information from the dynamic scheduler or control center.

In some embodiments, the radio-frequency collection system may receive or generate radio-frequency intelligence data associated with maritime features of interest. The radio-frequency intelligence data may include emitter detections, frequency information, signal-strength values, geolocation estimates, bearing estimates, time-difference-of-arrival data, frequency-difference-of-arrival data, emitter-class labels, or confidence values. The radio-frequency collection system may provide radio-frequency intelligence data to the dynamic scheduler for scheduling decisions and to the data aggregator for fusion with other maritime data. This allows the system to use non-imaging signals to support vessel detection, dark-vessel detection, spoofing detection, and risk-map updating.

In some embodiments, the AIS data source may provide AIS messages to the dynamic scheduler and the data aggregator. The AIS messages may include vessel identifiers, maritime mobile service identities, vessel names, vessel types, reported locations, courses, speeds, headings, destinations, and timestamps. The dynamic scheduler may use AIS data to predict vessel paths, generate areas of likelihood, select observation windows, and assign scheduled observation actions. The data aggregator may use AIS data to correlate reported vessel positions with sensor-derived vessel detections and to identify dark-vessel or spoofing conditions.

In some embodiments, the public Internet sources and Internet crawler may provide open-source intelligence and contextual maritime data. The Internet crawler may retrieve or index public web data, port information, vessel ownership information, news data, sanctions data, social-media information, incident reports, weather information, route information, or other publicly available maritime context. The Internet crawler may provide retrieved data to the dynamic scheduler, the data aggregator, or the threat and fingerprint database. This provides non-sensor context that may influence risk values, observation-entry generation, and fused maritime intelligence.

In some embodiments, the threat and fingerprint database may store vessel fingerprints, threat fingerprints, morphological fingerprints, hyperspectral fingerprints, radio-frequency fingerprints, historical observation records, risk-list entries, sanctioned-vessel entries, watch-list entries, prior fused maritime intelligence, and prior event records. The data aggregator may query the threat and fingerprint database during data fusion to compare detected features with known vessel signatures or known threat patterns. The Internet crawler may also update the threat and fingerprint database using public Internet sources. The dynamic scheduler may use database entries to assign higher risk values to spatiotemporal cells associated with known or suspected threats.

In some embodiments, the data aggregator may receive data from spacecraft data processing, radio-frequency collection systems, AIS data sources, the Internet crawler, the threat and fingerprint database, seabed sensors, acoustic sensors, USVs, and other sensing assets or data sources. The data aggregator may normalize incoming data into a common spatiotemporal reference frame, align data by time and location, assign source-confidence values, remove duplicate data, and provide aligned contextual maritime data to the dynamic scheduler or control center. The data aggregator may also perform or support data fusion by combining sensor-derived insight data with contextual maritime data to generate current fused maritime intelligence. The current fused maritime intelligence may be stored in memory and used to update a spatiotemporal risk map for a subsequent monitoring iteration.

In some embodiments, the dynamic scheduler may receive inputs from the spacecraft, radio-frequency collection system, AIS data source, Internet crawler, data aggregator, spacecraft data-processing system, and control center. The dynamic scheduler may generate observation entries from a spatiotemporal risk map and may transform the observation entries, asset-availability data, and asset-constraint data into an enhanced observation schedule. The enhanced observation schedule may assign selected observation entries to scheduled observation actions for spacecraft, radio-frequency systems, seabed sensors, acoustic sensors, USVs, repositories, partner assets, or other sensing assets. The dynamic scheduler may reduce duplicative tasking by selecting retrieval actions when existing or planned observation output satisfies an observation entry and may select tasking actions when new observation output is needed.

In some embodiments, the control center may coordinate execution of scheduled observation actions generated by the dynamic scheduler. The control center may transmit tasking instructions, retrieval instructions, schedule recommendations, or control commands to spacecraft, seabed sensors, acoustic sensors, USVs, or other sensing assets. The control center may also receive execution status, observation output, limited feedback, provider metadata, or operator decisions from those assets or from asset-provider interfaces. The control center may communicate with the user interface to present schedules, alerts, observability maps, dark-spot records, fused maritime intelligence, vessel tracks, and recommended actions to a user.

In some embodiments, seabed sensors, acoustic sensors, and USVs may provide non-space observation output for the maritime geographic area. Seabed sensors may provide vibration, magnetic, acoustic, pressure, seismic, environmental, or infrastructure-monitoring data. Acoustic sensors may provide passive or active acoustic detections, bearing estimates, vessel-class indicators, or acoustic fingerprints. USVs may provide imagery, radar data, radio-frequency data, acoustic data, environmental data, or close-range inspection results. The data aggregator may fuse such non-space observation output with spacecraft-derived observation output, AIS data, radio-frequency intelligence data, and open-source intelligence to improve maritime situational awareness.

In some embodiments, the user interface may present intelligence products and may receive user input for maritime monitoring. The user interface may display a spatiotemporal risk map, enhanced observation schedule, observability map, dark-spot map, vessel track, predicted route, alert record, image product, thumbnail, confidence value, source list, or recommended follow-up action. The user interface may receive operator decisions, monitoring objectives, areas of interest, vessels of interest, events of interest, tasking permissions, budget constraints, latency constraints, or sensing-modality preferences. User input may be routed to the control center, dynamic scheduler, or data aggregator for use in a current or subsequent monitoring iteration.

FIG. 11 illustrates an example concept of operations for monitoring vessels relative to an exclusive economic zone (EEZ) in accordance with some embodiments. Although FIG. 11 uses an EEZ as an example monitored region, the same operations may be applied to any maritime geographic area, area of interest, port region, offshore infrastructure region, restricted zone, shipping lane, chokepoint, or protected maritime region. The EEZ may be represented in memory as a geospatial boundary, a set of spatiotemporal cells, a risk-map layer, or a monitoring rule set.

In some embodiments, the system may monitor a vessel approaching the EEZ and may classify the vessel as a potential threat or a nominal vessel based on maritime monitoring inputs. The maritime monitoring inputs may include AIS data, radio-frequency intelligence data, satellite observation output, acoustic data, route history, vessel registry data, sanctions data, weather data, port-call data, prior fused maritime intelligence, and user-defined rules. A processing system may generate or update risk values for spatiotemporal cells near the EEZ based on the vessel identity, behavior, proximity, speed, heading, destination, route deviation, and source-confidence values.

In some embodiments, the left column of FIG. 11 illustrates a potential threat approaching, entering, or leaving the EEZ. When the potential threat approaches the EEZ, the processing system may increase risk values for spatiotemporal cells along the predicted route and may generate observation entries for those cells. When the potential threat enters the EEZ, the processing system may assign higher priority to scheduled observation actions and may generate alerts, observability-map updates, or recommended operator actions. When the potential threat leaves the EEZ, the processing system may update risk values, preserve a track history, predict a future route, and determine whether continued monitoring is warranted.

In some embodiments, the middle column of FIG. 11 illustrates a nominal vessel approaching, entering, or leaving the EEZ without a detected event. The processing system may maintain lower risk values for a nominal vessel when the vessel identity, route, behavior, and contextual maritime data are consistent with expected activity. The processing system may still generate observation entries if the nominal vessel enters a high-value area, approaches protected infrastructure, loses AIS reporting, deviates from an expected route, or satisfies a user-defined monitoring rule. This allows the system to avoid unnecessary high-priority tasking while retaining the ability to escalate monitoring when the vessel state changes.

In some embodiments, the right column of FIG. 11 illustrates a nominal vessel associated with an event near, within, or adjacent to the EEZ. The event may include an AIS outage, AIS spoofing event, route deviation, loitering event, ship-to-ship transfer, unauthorized-zone event, proximity event near protected infrastructure, unusual speed change, unexpected heading change, radio-frequency anomaly, acoustic anomaly, or sensor-derived detection mismatch. The processing system may generate an event record and may modify the vessel risk state even when the vessel was previously treated as nominal. This converts event detection into a change in risk values, observation demand, and scheduled observation actions.

In some embodiments, the processing system may use the EEZ boundary and vessel state to generate a spatiotemporal risk map. The risk map may assign risk values to cells inside the EEZ, outside the EEZ, near the EEZ boundary, and along predicted vessel paths. The processing system may transform selected high-risk cells into observation entries and may generate an enhanced observation schedule that assigns the observation entries to tasking actions or retrieval actions. The resulting schedule may cause spacecraft, radio-frequency collectors, acoustic sensors, seabed sensors, USVs, repositories, or partner assets to obtain observation output for the vessel or event.

In some embodiments, the processing system may distinguish among approach monitoring, boundary-crossing monitoring, in-zone monitoring, and departure monitoring. Approach monitoring may emphasize path prediction and early observation. Boundary-crossing monitoring may emphasize low-latency detection and alerting. In-zone monitoring may emphasize persistence, feature identification, and event classification. Departure monitoring may emphasize historic-path generation, future-route prediction, and risk-map updating for subsequent monitoring iterations.

In some embodiments, FIG. 11 may also represent a state-based monitoring process. The processing system may assign each vessel to one or more vessel states, such as potential threat outside the EEZ, potential threat inside the EEZ, potential threat departing the EEZ, nominal vessel outside the EEZ, nominal vessel inside the EEZ, nominal vessel departing the EEZ, and nominal vessel with an event. The processing system may transition the vessel between states based on observation output, contextual maritime data, fused maritime intelligence, event detection, and boundary-crossing calculations. Each state transition may trigger a different risk value update, alert policy, observation-entry generation rule, or scheduling policy.

In some embodiments, the processing system may generate current fused maritime intelligence based on the vessel state and event state illustrated in FIG. 11. The current fused maritime intelligence may include a presence indication, absence indication, identity indication, behavior indication, risk-state indication, anomaly indication, spoofing indication, dark-vessel indication, confidence value, location, timestamp, supporting-source identifiers, and recommended action. The processing system may provide the current fused maritime intelligence to a user interface and may use the current fused maritime intelligence to update a spatiotemporal risk map for a subsequent monitoring iteration.

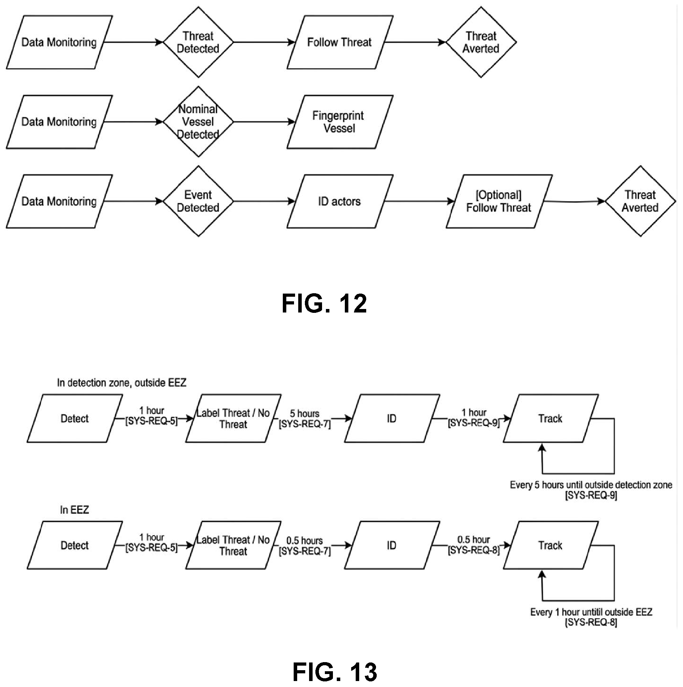

FIG. 12 illustrates example maritime situational awareness flows based on detection type in accordance with some embodiments. The flows may be performed by a processing system that monitors a maritime geographic area using sensor data, sensor-derived insight data, contextual maritime data, and prior fused maritime intelligence. The processing system may classify detected conditions into different detection types and may select a corresponding response flow for each detection type. Although FIG. 12 illustrates threat-detection, nominal-vessel-detection, and event-detection flows, the system may support additional detection types, including dark-vessel detections, spoofing detections, proximity detections, loitering detections, route-deviation detections, ship-to-ship-transfer detections, and infrastructure-threat detections.

In some embodiments, the processing system may perform data monitoring by receiving or retrieving observation output and contextual maritime data for a maritime geographic area. Data monitoring may include scheduled observation actions from an enhanced observation schedule, retrieval actions from non-tasked sensing assets, tasking actions for taskable sensing assets, automatic identification system data collection, radio-frequency intelligence collection, Internet-source collection, acoustic-sensor collection, seabed-sensor collection, or uncrewed-surface-vehicle collection. The processing system may transform the monitored data into current fused maritime intelligence by extracting sensor-derived insight data and fusing that sensor-derived insight data with contextual maritime data. The current fused maritime intelligence may be used to determine whether a threat, nominal vessel, or event has been detected.

In some embodiments, when the processing system detects a threat, the processing system may initiate a follow-threat flow. A detected threat may include a vessel of interest, a sanctioned vessel, a vessel with anomalous behavior, a dark vessel, a spoofing vessel, a vessel near protected infrastructure, a vessel near a restricted zone, or another maritime feature of interest having an elevated risk state. The processing system may generate or update a spatiotemporal risk map, generate observation entries along a predicted route of the detected threat, and generate an enhanced observation schedule to reacquire or track the detected threat. The follow-threat flow may continue until the processing system generates current fused maritime intelligence indicating that the threat has been averted, left a monitored region, returned to a nominal risk state, or otherwise satisfied a termination condition.

In some embodiments, when the processing system detects a nominal vessel, the processing system may initiate a fingerprint-vessel flow. A nominal vessel may be a vessel whose reported identity, behavior, route, position, heading, speed, class, or contextual maritime data is consistent with expected activity. The processing system may generate or update a vessel fingerprint using sensor-derived insight data, such as location, size, heading, velocity, shape, hyperspectral features, morphological features, radio-frequency features, and confidence values. The vessel fingerprint may be stored in a threat and fingerprint database, operational data store, or fused-maritime-intelligence repository for later matching, identification, historical path generation, or anomaly detection.

In some embodiments, when the processing system detects an event, the processing system may initiate an actor-identification flow. An event may include an AIS outage, AIS spoofing event, route deviation, loitering event, ship-to-ship transfer, proximity event near protected infrastructure, unauthorized-zone event, unexpected speed change, unexpected heading change, radio-frequency anomaly, acoustic anomaly, or mismatch between sensor-derived vessel data and contextual maritime data. The processing system may identify one or more actors associated with the event by correlating sensor-derived insight data with AIS data, vessel registry data, vessel fingerprints, radio-frequency intelligence data, route data, port-call data, and prior fused maritime intelligence. The processing system may output an event record identifying the event type, actor identity, actor confidence, event location, event time, supporting-source identifiers, risk value, and recommended action.

In some embodiments, the processing system may optionally follow a threat after actor identification. For example, if an event is associated with a high-risk actor, a protected region, critical underwater infrastructure, a suspicious maneuver, or a user-defined rule, the processing system may generate additional observation entries and schedule new observation actions to continue tracking the actor. If subsequent observation output indicates that the threat state has been resolved, the processing system may generate a threat-averted indication. The threat-averted indication may update an intelligence record, reduce one or more risk values in the spatiotemporal risk map, close an alert, or cause a decision-support output to be transmitted to a user.

FIG. 13 is a process flow diagram illustrating a method 1300 of generating time-sensitive maritime situational awareness by coordinating tasking, acquisition, delivery, processing, fusion, and output timing in accordance with some embodiments. Method 1300 may be performed by a processing system in a maritime situational awareness system having one or more sensing-asset interfaces and one or more external data-source interfaces.

Referring to FIG. 13, example timing flows for maritime situational awareness operations are illustrated in accordance with some embodiments. The timing flows may be used by a processing system to coordinate detection, threat labeling, identification, and tracking based on a vessel's location relative to an exclusive economic zone or another monitored maritime region. Although FIG. 13 refers to an exclusive economic zone, the same timing flows may apply to a port region, restricted zone, offshore infrastructure region, shipping lane, chokepoint, or customer-defined area of interest.

In some embodiments, the upper flow of FIG. 13 may apply when a vessel or event is in a detection zone outside the exclusive economic zone. The processing system may detect a maritime feature of interest or maritime event of interest from observation output or contextual maritime data. Within a first configured time window, such as one hour after detection, the processing system may label the detected feature or event as a threat or non-threat. The processing system may generate the label by fusing sensor-derived insight data with AIS data, vessel registry data, vessel-risk-list data, radio-frequency intelligence data, route data, port-call data, vessel fingerprints, and prior fused maritime intelligence.

In some embodiments, after the processing system labels the detected feature or event in the detection zone outside the exclusive economic zone, the processing system may identify the detected feature or event within a second configured time window. In the illustrated example, the second configured time window is five hours after labeling. Identification may include determining a vessel identifier, candidate vessel identifier, actor identifier, feature identifier, event identifier, vessel class, vessel behavior state, spoofing state, dark-vessel state, confidence value, and supporting-source list. The processing system may use the identification result to update a spatiotemporal risk map and generate observation entries for later tracking.

In some embodiments, after the processing system identifies the detected feature or event in the detection zone outside the exclusive economic zone, the processing system may track the detected feature or event within a third configured time window. In the illustrated example, the third configured time window is one hour after identification. Tracking may include generating a predicted route, updating an area of likelihood, scheduling a follow-up acquisition, retrieving repository data, receiving AIS updates, obtaining radio-frequency intelligence updates, or generating a new intelligence record. The processing system may repeat the tracking operation at a configured interval, such as every five hours, until the detected feature or event leaves the detection zone or no longer satisfies a monitoring rule.

In some embodiments, the lower flow of FIG. 13 may apply when a vessel or event is within the exclusive economic zone. The processing system may perform detection and may label the detected feature or event as a threat or non-threat within a first configured time window, such as one hour after detection. Because the detected feature or event is within the exclusive economic zone, the processing system may use shorter identification and tracking windows than the timing windows used for the detection zone outside the exclusive economic zone. The shorter windows may reflect greater operational urgency, higher risk values, stricter service-level requirements, or user-defined monitoring policies.

In some embodiments, after the processing system labels the detected feature or event inside the exclusive economic zone, the processing system may identify the detected feature or event within a second configured time window. In the illustrated example, the second configured time window is one half hour after labeling. The processing system may perform identification by comparing sensor-derived vessel information with AIS data, vessel-registry data, vessel fingerprints, radio-frequency intelligence data, prior detections, and other contextual maritime data. The processing system may assign higher priority to sensing assets and data-fusion resources when the detected feature or event is located inside the exclusive economic zone.

In some embodiments, after the processing system identifies the detected feature or event inside the exclusive economic zone, the processing system may track the detected feature or event within a third configured time window. In the illustrated example, the third configured time window is one half hour after identification. The processing system may generate a higher-frequency enhanced observation schedule for tracking inside the exclusive economic zone, including tasking actions for taskable sensing assets and retrieval actions for non-tasked sensing assets. The processing system may repeat tracking at a configured interval, such as every hour, until the detected feature or event leaves the exclusive economic zone or no longer satisfies a monitoring rule.

In some embodiments, the timing values shown in FIG. 13 may be implemented as configuration information rather than fixed limits. The processing system may store the timing values in memory as service-level requirements, mission policies, customer policies, risk-threshold policies, or jurisdiction-specific monitoring rules. The processing system may use those timing values during enhanced-observation-schedule generation to prioritize candidate observation opportunities, select sensing modalities, determine delivery-latency constraints, and trigger schedule repair when an acquisition, retrieval, processing, identification, or tracking operation falls behind the configured timing requirement.

In some embodiments, the processing system may encode the FIG. 13 timing flows in a state machine. The state machine may include detection, label-threat-or-non-threat, identification, tracking, repeat-tracking, and termination states. State transitions may occur based on elapsed time, vessel location, vessel state, event state, risk value, confidence value, operator decision, observation-output receipt, or zone-crossing detection. The state machine may cause the processing system to generate alerts, update an observability map, create dark-spot records, update current fused maritime intelligence, and modify one or more risk values in a spatiotemporal risk map for a subsequent monitoring iteration.

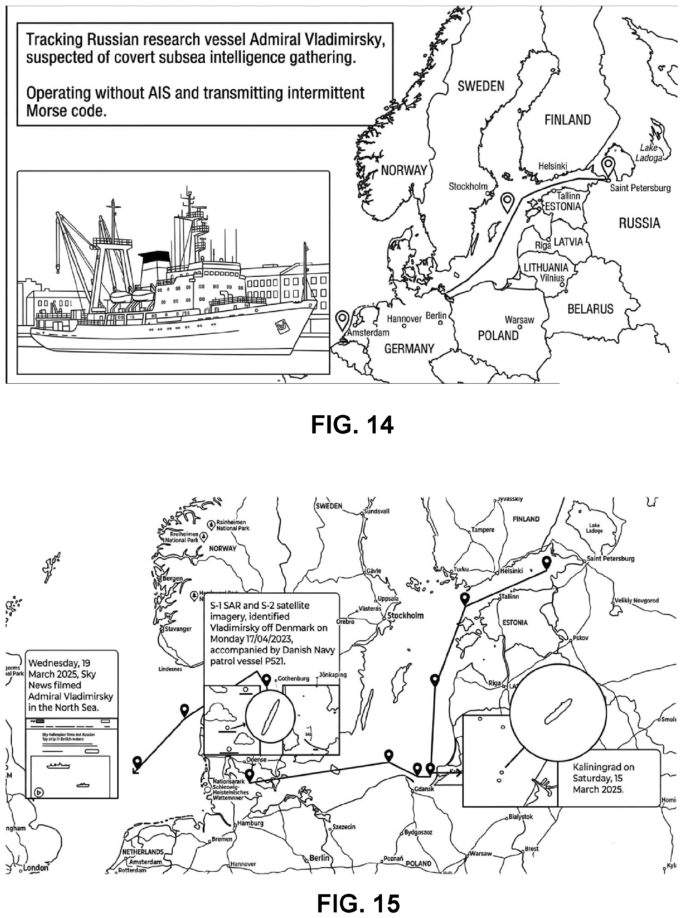

FIG. 14 illustrates an example maritime situational awareness scenario for tracking a vessel of interest is illustrated in accordance with some embodiments. In the illustrated example, the vessel of interest is a research vessel identified in the figure as Admiral Vladimirsky, and the map illustrates a regional maritime geographic area in which the vessel may be monitored. The vessel of interest is described as operating without automatic identification system (AIS) reporting and transmitting intermittent Morse code. Although FIG. 14 illustrates a named research vessel and a particular geographic region, the same operations may apply to any vessel of interest, dark vessel, spoofing vessel, sanctioned vessel, survey vessel, naval auxiliary vessel, commercial vessel, or other maritime feature of interest in any maritime geographic area.

In some embodiments, a processing system may receive an external trigger or maritime risk-indicator data associated with the vessel of interest. The external trigger may come from a public Internet source, news report, user input, radio-frequency intelligence source, AIS monitoring service, watch-list database, operator alert, or prior fused maritime intelligence. The trigger may identify a vessel name, vessel type, suspected behavior, last known location, route segment, geographic region, RF transmission characteristic, AIS status, or risk classification. The processing system may store this information as configuration information, contextual maritime data, maritime risk-indicator data, or prior fused maritime intelligence for a monitoring iteration.

In some embodiments, the processing system may detect that the vessel of interest is operating without AIS reporting by comparing expected AIS messages with received AIS data for a spatial search window and temporal search window. When no matching AIS message is found, the processing system may generate a dark-vessel indication, increase a risk value for one or more spatiotemporal cells near the last known location or predicted route, and generate observation entries for those cells. The processing system may also use radio-frequency intelligence data, such as intermittent Morse code transmissions, emitter locations, signal timing, signal strength, or bearing estimates, to update the area of likelihood for the vessel of interest. In this manner, the system may continue tracking a vessel even when cooperative vessel reporting is absent.

In some embodiments, the processing system may generate a spatiotemporal risk map for the maritime geographic area shown in FIG. 14. The spatiotemporal risk map may include risk values associated with the vessel's predicted route, proximity to protected maritime regions, proximity to critical underwater infrastructure, proximity to territorial waters, proximity to shipping lanes, or proximity to historical incident locations. The processing system may transform selected high-risk spatiotemporal cells into observation entries and generate an enhanced observation schedule for the vessel of interest. The enhanced observation schedule may assign observation entries to tasking actions for taskable sensing assets or retrieval actions for non-tasked sensing assets.

In some embodiments, the processing system may select sensing assets based on the behavior illustrated in FIG. 14. For example, when AIS data is missing, the processing system may prioritize synthetic-aperture-radar observations, radio-frequency collection, electro-optical imagery, hyperspectral imagery, port-camera data, acoustic sensors, seabed sensors, or uncrewed-vehicle observations. The processing system may also select a sensing modality based on weather, cloud cover, daylight availability, sea state, delivery-latency constraints, asset availability, cost, and expected risk reduction. This allows the processing system to generate observation output even when the vessel does not provide cooperative position reports.

In some embodiments, the processing system may fuse the observation output with contextual maritime data to generate current fused maritime intelligence. The contextual maritime data may include AIS absence information, RF transmission data, vessel registry information, public Internet information, route data, port-call data, weather data, bathymetry data, critical-infrastructure data, and prior fused maritime intelligence. The current fused maritime intelligence may identify a vessel presence, vessel absence, vessel identity, vessel behavior, vessel route, dark-vessel state, RF-emitter association, or risk state. The processing system may provide the current fused maritime intelligence to a user interface as a map overlay, alert record, route visualization, confidence value, source list, or recommended follow-up action.

In some embodiments, FIG. 14 may represent an external-intelligence-to-sensing-control workflow. The processing system may convert a human-readable or public-source report into machine-readable monitoring inputs, convert the monitoring inputs into a spatiotemporal risk map, convert the risk map into observation entries, and convert the observation entries into scheduled observation actions. After observation output is received, the processing system may update the current fused maritime intelligence and generate an updated spatiotemporal risk map for a subsequent monitoring iteration. The updated spatiotemporal risk map may drive continued monitoring as the vessel approaches, enters, leaves, or passes near a maritime area of interest.

FIG. 15 illustrates an example multi-source reconstruction and tracking scenario for a vessel of interest is illustrated in accordance with some embodiments. FIG. 15 shows multiple geographically separated observations, reports, and inferred route segments across a maritime geographic area. In the illustrated example, the figure includes a public-source report, satellite observation references, detected route points, and highlighted observation regions. Although FIG. 15 illustrates one particular vessel-tracking example, the same operations may be used to reconstruct or monitor movement of any maritime feature of interest using heterogeneous observation sources and contextual maritime data.

In some embodiments, the processing system may receive public-source information that identifies the vessel of interest at a particular date, location, or region. The processing system may parse or ingest the public-source information through an Internet crawler, user interface, application programming interface, analyst input, or external data-source interface. The public-source information may include a vessel name, vessel type, reported sighting, report date, narrative description, image reference, port reference, route reference, or suspected activity. The processing system may convert the public-source information into a monitoring trigger, a contextual maritime data record, a feature-of-interest record, or an initial observation entry.

In some embodiments, the processing system may retrieve satellite imagery or other remote-sensing data for one or more geographic regions shown in FIG. 15. The processing system may query repositories or task sensing assets for electro-optical imagery, synthetic-aperture-radar imagery, multispectral imagery, hyperspectral imagery, radio-frequency intelligence data, or other observation output. The query or tasking instruction may include a geographic search window, temporal search window, sensing-modality filter, resolution filter, cloud-cover filter, provider identifier, collection identifier, quality threshold, and delivery endpoint. The processing system may use this observation output to confirm, refute, or refine the inferred location of the vessel of interest.

In some embodiments, the processing system may use multiple imagery sources in the same tracking workflow. For example, the processing system may use synthetic-aperture-radar imagery when cloud cover, darkness, or weather limits electro-optical imagery, and may use electro-optical or multispectral imagery when visual identification, vessel shape, or scene context is useful. The processing system may fuse detections from the multiple imagery sources with AIS data, RF intelligence data, public-source reports, port-call data, route data, vessel registry data, and prior fused maritime intelligence. The resulting current fused maritime intelligence may include vessel location, identity confidence, dark-vessel indication, spoofing indication, route hypothesis, source list, and risk value.

In some embodiments, the processing system may generate a historical or current path for the vessel of interest from the geographically separated observations shown in FIG. 15. The processing system may order detections by time, align the detections in a common coordinate reference frame, estimate speed and heading between detections, reject outlier detections, and generate one or more route hypotheses. The route hypotheses may include spatial coordinates, temporal coordinates, uncertainty regions, supporting-source identifiers, and confidence values. The processing system may store the route hypotheses in an operational data store and may provide the route hypotheses to a user interface or dynamic scheduler.

In some embodiments, the highlighted regions may represent areas selected for focused analysis, follow-up observation, or evidence presentation. A processing system may generate such regions from a risk map, route hypothesis, image-detection result, external report, or operator input. The processing system may crop imagery, generate thumbnails, generate annotated image products, extract vessel chips, generate bounding boxes, and attach confidence values or source metadata to each image product. These image products may support user review and may also provide structured inputs for fingerprint generation or data fusion.

In some embodiments, the processing system may identify gaps between known or inferred vessel locations and generate additional observation entries to fill those gaps. For example, if the vessel of interest is detected near one region and later detected near another region, the processing system may calculate one or more possible transit corridors between the detections. The processing system may assign risk values to spatiotemporal cells along those corridors and may schedule additional observations when the corridors intersect protected infrastructure, restricted zones, ports, chokepoints, or other high-value regions. This allows the system to direct new sensing-asset actions toward uncertain parts of the vessel's route rather than acquiring imagery uniformly over the entire region.

In some embodiments, the processing system may update a threat and fingerprint database using detections and image products associated with FIG. 15. The database update may include vessel fingerprints, morphological fingerprints, hyperspectral fingerprints, RF fingerprints, bounding boxes, segmentation masks, size estimates, heading estimates, velocity estimates, route segments, identity candidates, and confidence values. The processing system may later use those stored records to match the same vessel in new observation output or to identify similar vessel behavior. This supports iterative maritime situational awareness across later monitoring iterations.

In some embodiments, FIG. 15 may include an evidence-fusion workflow for generating an intelligence record. The processing system may combine a public-source report, satellite imagery, route points, geographic context, vessel-fingerprint data, AIS absence or inconsistency data, and RF intelligence data into a single intelligence record. The intelligence record may indicate a vessel presence, vessel identity, vessel route, vessel behavior, risk state, supporting-source list, confidence value, and recommended follow-up action. The processing system may provide the intelligence record to a user and may use the intelligence record to update a spatiotemporal risk map for future dynamic scheduling.

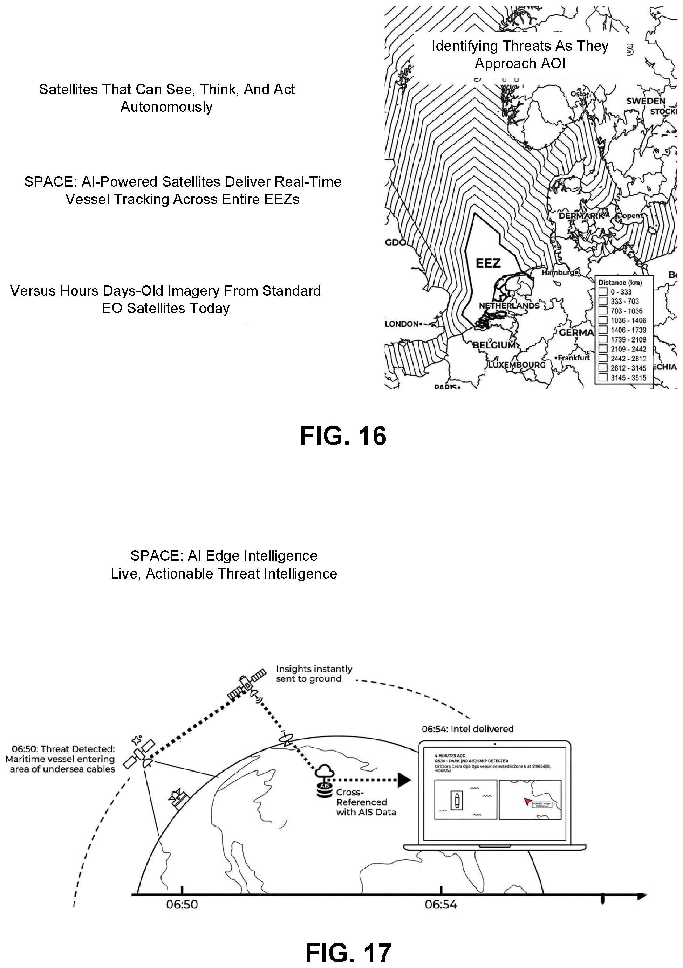

FIG. 16 illustrates an example maritime situational awareness workflow using onboard or edge processing by spaceborne sensing assets in accordance with some embodiments. The illustrated workflow contrasts delayed imagery-based monitoring with low-latency intelligence generation by sensing assets that acquire observation output, process the observation output onboard or at the edge, and transmit sensor-derived insight data to a ground processing system or user system. Although FIG. 16 refers to satellites, the same operations may be performed using other sensing assets, including high-altitude platforms, uncrewed aerial vehicles, uncrewed surface vehicles, coastal sensors, seabed sensors, acoustic sensors, or partner sensing assets.

In some embodiments, the processing system may generate a spatiotemporal risk map for a maritime geographic area that includes an exclusive economic zone, an area of interest, protected infrastructure, or another monitored region. The spatiotemporal risk map may represent risk values in spatiotemporal cells around the monitored region. The processing system may assign higher risk values to cells associated with vessels approaching the area of interest, vessels lacking AIS reporting, vessels having anomalous behavior, vessels near critical underwater infrastructure, vessels near restricted zones, or vessels matching a risk list or fingerprint database.

In some embodiments, the contour regions shown in FIG. 16 may represent distance bands, time-to-arrival bands, risk bands, or observation-priority bands around an area of interest. The processing system may calculate the bands from vessel location, vessel heading, vessel speed, route history, predicted vessel path, weather data, current data, asset availability, asset constraints, and prior fused maritime intelligence. The processing system may transform high-risk spatiotemporal cells within the bands into observation entries and may generate an enhanced observation schedule for those observation entries. The enhanced observation schedule may increase observation frequency or reduce delivery-latency requirements as a vessel approaches the area of interest.

In some embodiments, a spaceborne sensing asset may acquire sensor data for an observation entry and process the sensor data using an onboard processing system. The onboard processing system may perform vessel detection, vessel localization, vessel classification, vessel identification, wake detection, radio-frequency emitter detection, anomaly scoring, feature extraction, fingerprint generation, or confidence scoring. The onboard processing system may generate sensor-derived insight data without waiting for delivery of a full-scene image to a ground processing system. The sensor-derived insight data may include a vessel location, vessel class, vessel candidate identifier, risk value, detection confidence, acquisition time, sensing modality, and source-observation identifier.

In some embodiments, the sensing asset may transmit the sensor-derived insight data using a low-latency communications link. The low-latency communications link may include a ground-station link, a tactical downlink, an inter-satellite link, a direct-to-ground link, a relay link, or a provider network link. The transmitted data may include an insight packet, feature vector, thumbnail, bounding-box packet, cropped image product, or alert record. This reduces the time between acquisition and actionable intelligence relative to a workflow that downlinks full imagery and performs all processing after ground delivery.

In some embodiments, the processing system may receive sensor-derived insight data and cross-reference it with contextual maritime data. The contextual maritime data may include AIS data, vessel registry data, vessel-risk-list data, port-call data, route data, RF intelligence data, weather data, bathymetric data, public-source data, and prior-fused maritime intelligence. The processing system may generate current fused maritime intelligence that identifies a vessel presence, vessel absence, vessel identity, vessel behavior, dark-vessel state, spoofing state, anomaly state, or risk state. The processing system may provide the current fused maritime intelligence to a user and may update the spatiotemporal risk map for a subsequent monitoring iteration.

In some embodiments, FIG. 16 may also represent a system-level latency reduction. A conventional imagery workflow may depend on periodic acquisition, later downlink, ground processing, and later analyst review. The illustrated workflow may instead use risk-driven scheduling, onboard processing, and compact insight delivery to provide near-real-time vessel tracking across a monitored maritime region. The processing system may use the resulting intelligence to generate alerts, update vessel tracks, regenerate the enhanced observation schedule, and direct follow-up actions for sensing assets as threats approach the area of interest.

FIG. 17 illustrates an example low-latency maritime intelligence delivery workflow using edge intelligence in accordance with some embodiments. In the illustrated example, a sensing asset detects a maritime vessel entering an area associated with undersea cables at 06:50, transmits sensor-derived insight data to a ground processing system, the ground processing system cross-references the sensor-derived insight data with AIS data, and a user receives intelligence at 06:54. The times shown in FIG. 17 are examples, and other embodiments may use shorter or longer timing depending on asset availability, communications access, processing resources, delivery policy, sensing modality, and user requirements.

In some embodiments, the processing system may generate an observation entry for an area associated with undersea cables or other critical maritime infrastructure. The observation entry may include a spatial target, temporal window, risk value, sensing-modality preference, delivery-latency constraint, confidence threshold, and feature-of-interest identifier. The processing system may generate an enhanced observation schedule that assigns the observation entry to a sensing asset having onboard processing capability. The sensing asset may include a satellite, high-altitude platform, aircraft, uncrewed aerial vehicle, uncrewed surface vehicle, or other sensing platform.

In some embodiments, the sensing asset may acquire sensor data when the vessel enters or approaches the monitored infrastructure region. The onboard processing system may process the sensor data to detect the vessel and generate sensor-derived insight data. The sensor-derived insight data may include a detection location, acquisition time, bounding box, cropped image, vessel class, feature vector, confidence value, sensor identifier, and observation-output identifier. The onboard processing system may prioritize transmission of the sensor-derived insight data when the detected vessel intersects a protected-infrastructure region, risk-map cell, area of interest, or alert rule.

In some embodiments, the sensing asset may transmit the sensor-derived insight data to a ground processing system shortly after acquisition. The transmission may occur through a ground-station link, inter-satellite link, direct-to-ground link, tactical downlink, relay link, or provider network link. The sensing asset may transmit a compact insight packet instead of a full sensor-data product. This may reduce bandwidth use, downlink queue delay, ground-storage load, and time to insight availability.

In some embodiments, the ground processing system may cross-reference the sensor-derived insight data with AIS data and other contextual maritime data. The ground processing system may retrieve AIS messages within a spatial search window and temporal search window associated with the detected vessel. The ground processing system may compare the sensor-derived vessel location, size, heading, velocity, or class with AIS-reported vessel location, course, speed, heading, vessel type, and timestamp. When no matching AIS report exists, the ground processing system may generate a dark-vessel indication. When the AIS report conflicts with sensor-derived vessel information, the ground processing system may generate a spoofing indication or anomaly indication.

In some embodiments, the ground processing system may generate current fused maritime intelligence from the sensor-derived insight data and the contextual maritime data. The current fused maritime intelligence may include a vessel identifier, candidate vessel identifier, location, timestamp, infrastructure proximity, AIS match state, risk state, confidence value, supporting-source list, and recommended action. The ground processing system may transmit the current fused maritime intelligence to a user interface, application programming interface endpoint, alert channel, report system, or decision-support system. The user may receive a map display, alert record, image chip, vessel-track update, or recommended follow-up observation.

In some embodiments, the processing system may use the current fused maritime intelligence to update a spatiotemporal risk map. For example, the processing system may increase risk values for spatiotemporal cells near the detected vessel and undersea cables, reduce risk values for observed cells in which no vessel was detected, or redistribute risk values along a predicted vessel path. The processing system may generate new observation entries based on the updated spatiotemporal risk map and may regenerate the enhanced observation schedule for continued monitoring. In this manner, the low-latency insight delivery shown in FIG. 17 may drive a subsequent monitoring iteration rather than merely present a static alert.

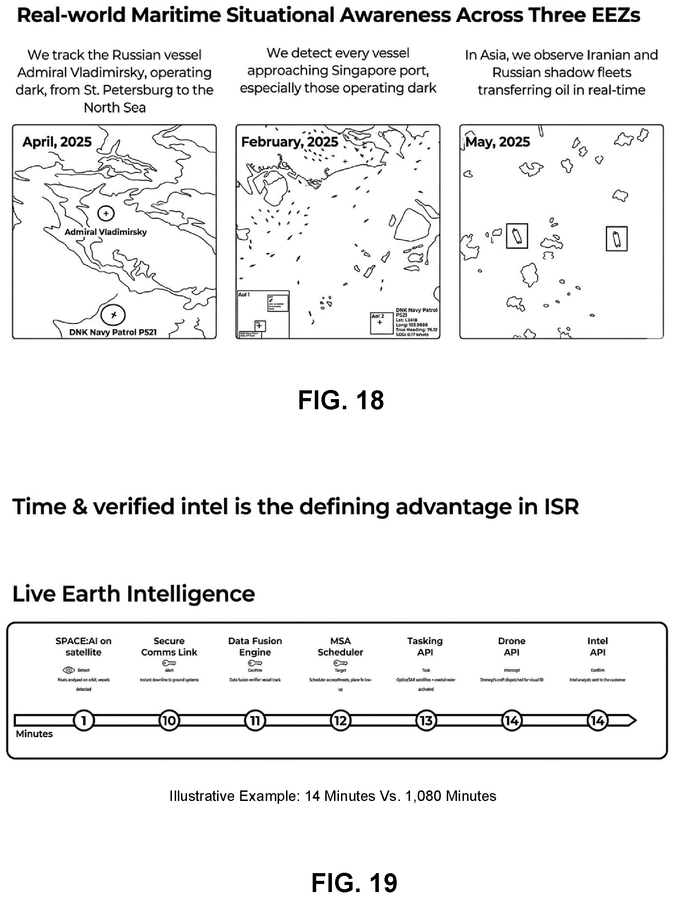

FIG. 18 illustrates example real-world maritime situational awareness operations across multiple exclusive economic zones in accordance with some embodiments. FIG. 18 shows three representative monitoring scenarios in different maritime geographic areas. Although the illustrated examples refer to particular regions, vessels, and dates, the same system operations may apply to any maritime geographic area, area of interest, exclusive economic zone, port region, offshore infrastructure region, shipping lane, chokepoint, restricted zone, or protected maritime region.

In some embodiments, the processing system may receive monitoring objectives for multiple maritime geographic areas and may generate a separate spatiotemporal risk map for each maritime geographic area. Each spatiotemporal risk map may include spatiotemporal cells having spatial coordinates, temporal coordinates, and risk values. The processing system may use configuration information, maritime risk-indicator data, asset-availability data, asset-constraint data, contextual maritime data, and prior fused maritime intelligence to generate or update the risk values. The processing system may transform selected spatiotemporal cells into observation entries and may generate an enhanced observation schedule for each maritime geographic area.

In some embodiments, the left example of FIG. 18 may represent tracking of a vessel of interest operating without reliable cooperative reporting. The processing system may receive a vessel identifier, public-source report, radio-frequency intelligence indication, AIS absence indication, prior fused maritime intelligence record, or user-provided watch-list entry for the vessel of interest. The processing system may generate one or more observation entries along a predicted route of the vessel of interest and may assign the observation entries to tasking actions or retrieval actions. The processing system may fuse observation output with contextual maritime data to generate current fused maritime intelligence that identifies the vessel presence, vessel identity, vessel behavior, route state, dark-vessel state, or risk state.

In some embodiments, the middle example of FIG. 18 may represent dense maritime monitoring near a port or other high-traffic maritime region. The processing system may receive observation output and contextual maritime data for a large number of vessels that approach or depart the port region. The processing system may detect vessels, classify vessels, estimate vessel states, identify vessels operating without AIS reporting, and generate vessel fingerprints or vessel tracks. The processing system may use a higher observation density or a shorter monitoring iteration in a high-traffic region to reduce missed events and to maintain current fused maritime intelligence for vessels near the port region.

In some embodiments, the right example of FIG. 18 may represent monitoring of a suspected ship-to-ship transfer or other maritime event of interest. The processing system may detect two or more vessels in proximity, compare vessel locations and time intervals, retrieve AIS data and vessel registry data, and evaluate whether the vessels satisfy an event rule. The event rule may include a proximity threshold, time-duration threshold, speed threshold, heading threshold, AIS-state condition, vessel-risk condition, or region condition. The processing system may generate an event record indicating a ship-to-ship transfer, rendezvous, loitering event, dark-vessel event, spoofing event, or other maritime event of interest.

In some embodiments, FIG. 18 illustrates that the maritime situational awareness system may operate across multiple concurrent monitoring missions. The processing system may maintain customer-specific risk maps, mission-specific risk maps, or region-specific risk maps and may combine those maps into a fused risk map when sensing assets are shared. The processing system may allocate sensing-asset capacity among the monitoring missions based on expected risk reduction, observation value, delivery latency, cost, asset availability, sensing modality, customer priority, and mission priority. The processing system may thereby direct limited sensing resources toward observation entries having higher operational value.

In some embodiments, the processing system may generate output products for each illustrated scenario. The output products may include map overlays, cropped imagery, thumbnails, vessel chips, vessel tracks, route predictions, event records, alert records, observability maps, dark-spot records, confidence values, source lists, and recommended follow-up actions. The processing system may provide the output products through a user interface, application programming interface, alert channel, report object, decision-support system, or automated response system. The output products may also be stored as current fused maritime intelligence for use in a later monitoring iteration.

In some embodiments, the processing system may update the spatiotemporal risk map after each illustrated scenario produces observation output or fused intelligence. For example, a confirmed vessel location may increase risk values along a predicted path, a negative observation may reduce risk values in observed cells, and an event detection may increase risk values near the event location or along future route hypotheses. The processing system may generate new observation entries from the updated spatiotemporal risk map and may regenerate the enhanced observation schedule. This closed-loop operation allows the system to move from detection to continued monitoring across multiple maritime geographic areas.

FIG. 19 illustrates an example time-sensitive live Earth intelligence workflow in accordance with some embodiments. FIG. 19 shows a representative timeline in which onboard processing, secure communications, data fusion, scheduling, tasking, drone control, and intelligence delivery operate as linked stages. The illustrated timing values are examples and may vary based on sensing asset type, communications access, processing resources, network availability, provider interface latency, delivery policy, and user requirements.

In some embodiments, a sensing asset may acquire sensor data and execute onboard processing early in the workflow. The onboard processing may include vessel detection, vessel localization, vessel classification, vessel identification, wake detection, radio-frequency emitter detection, anomaly scoring, fingerprint generation, confidence scoring, or generation of a compact insight packet. The compact insight packet may include a location, timestamp, confidence value, sensing-modality identifier, bounding box, cropped image, feature vector, candidate vessel identifier, risk value, or observation-output identifier. Onboard processing may reduce the amount of data that must be transmitted before the system can generate actionable intelligence.

In some embodiments, a secure communications link may transmit the compact insight packet or other observation output from the sensing asset to a ground processing system, relay, cloud service, or user system. The secure communications link may include a ground-station link, tactical downlink, inter-satellite link, direct-to-ground link, relay link, provider network link, encrypted network connection, or authenticated application programming interface. The processing system may store the received observation output in memory with acquisition time, delivery time, asset identifier, source identifier, sensing modality, geolocation metadata, and confidence metadata. The received observation output may then be routed to a data fusion engine.

In some embodiments, the data fusion engine may generate current fused maritime intelligence by transforming the observation output and contextual maritime data into an intelligence record. The contextual maritime data may include AIS data, RF intelligence data, vessel registry data, vessel ownership data, vessel class data, route data, port-call data, weather data, predicted weather data, bathymetry data, public-source data, risk-list data, fingerprint data, and prior fused maritime intelligence. The data fusion engine may correlate the observation output with contextual maritime data using spatial matching, temporal interpolation, source-confidence weighting, uncertainty modeling, fingerprint matching, and conflict-resolution rules. The intelligence record may indicate presence, absence, identity, behavior, anomaly state, spoofing state, dark-vessel state, event state, or risk state.

In some embodiments, the maritime situational awareness scheduler may receive the current fused maritime intelligence and may update a spatiotemporal risk map. The scheduler may transform selected spatiotemporal cells into observation entries and may generate an enhanced observation schedule using asset-availability data and asset-constraint data. The enhanced observation schedule may assign selected observation entries to scheduled observation actions, including tasking actions for taskable sensing assets and retrieval actions for non-tasked sensing assets. The scheduler may also generate an observability map, dark-spot record, alert record, or schedule-repair action when a high-risk region lacks timely observation coverage.

In some embodiments, a tasking application programming interface may transmit a scheduled observation action to a sensing-asset provider or asset-control system. The tasking application programming interface may submit a target coordinate, area geometry, time window, sensing modality, acquisition mode, resolution requirement, priority value, cost authorization, onboard-processing instruction, and delivery endpoint. The tasking application programming interface may also receive provider metadata, acceptance status, expected acquisition time, expected delivery time, footprint metadata, quality metadata, cost metadata, or observation-output links. This allows the system to convert fused intelligence into further sensing-asset control.

In some embodiments, a drone application programming interface may transmit a scheduled observation action or recommended action to a drone, uncrewed aerial vehicle, uncrewed surface vehicle, or other mobile sensing asset. The drone application programming interface may provide a route, waypoint set, target region, sensor mode, observation time, communications endpoint, and follow-up instruction. The processing system may use the drone application programming interface when satellite observation output indicates that closer inspection, persistent tracking, or lower-altitude sensing is useful. The drone application programming interface may return execution status, observation output, or limited feedback for subsequent fusion and risk-map updating.

In some embodiments, an intelligence application programming interface may deliver an intelligence product to a user system, command system, customer platform, or decision-support system. The intelligence product may include an intelligence record, alert record, map overlay, vessel-track update, route prediction, image product, thumbnail, confidence value, supporting-source list, recommended action, or follow-up schedule. The intelligence application programming interface may deliver the product in a structured message format such as a JavaScript Object Notation message, geospatial feature object, report object, or other machine-readable format. The delivered intelligence product may support automated downstream action or human review.

In some embodiments, FIG. 19 illustrates a latency advantage from coupling onboard processing with data fusion and dynamic scheduling. A conventional workflow may wait for full-scene imagery to be downlinked, stored, processed, reviewed, and forwarded before additional action occurs. The illustrated workflow may instead transmit compact sensor-derived insight data, fuse that data with contextual maritime data, update risk and scheduling logic, and transmit follow-up tasking or intelligence outputs within a shorter operational interval. The processing system may therefore reduce time to insight availability, reduce bandwidth use, reduce memory traffic, and reduce avoidable sensor-data processing for low-value portions of a scene.

In some embodiments, the "14 minutes versus 1,080 minutes" comparison in FIG. 19 may represent an illustrative performance comparison between a low-latency live intelligence workflow and a delayed conventional imagery workflow. The processing system may measure the live intelligence workflow from sensing-asset acquisition to intelligence delivery, tasking output, drone instruction, or user alert. The processing system may measure a conventional workflow from image acquisition to availability of verified intelligence using full-image downlink, repository availability, ground processing, manual review, and later dissemination. The measured values may be stored in a performance dataset and used to compare scheduler configurations, communications policies, onboard-processing policies, and delivery policies.

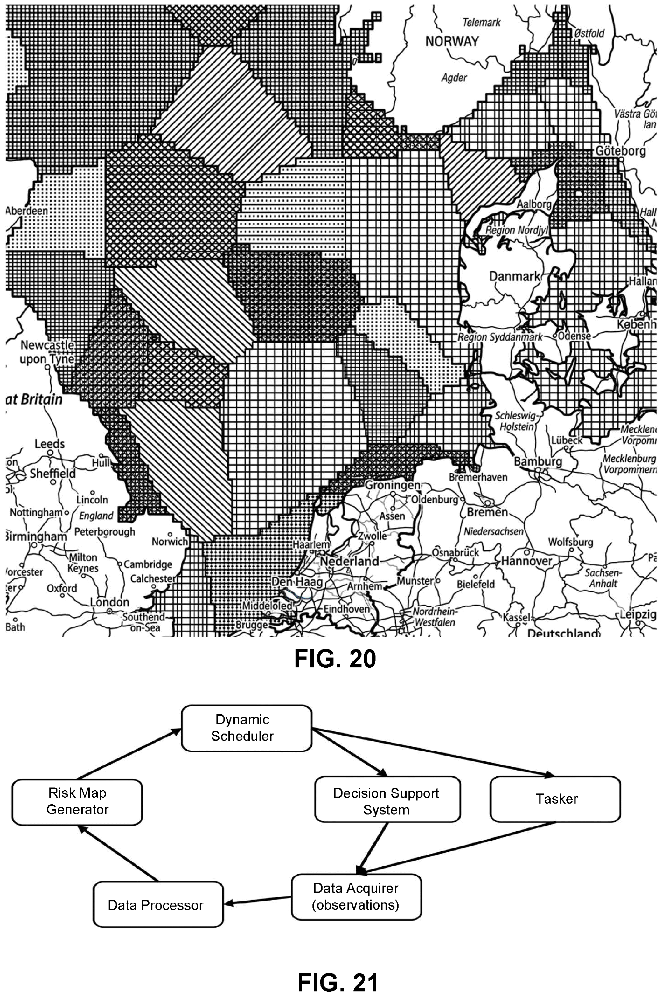

FIG. 20 illustrates example risk map for a maritime geographic area in accordance with some embodiments. In the illustrated example, the maritime geographic area includes portions of the North Sea and surrounding coastal regions. Although FIG. 20 illustrates the North Sea, the same map-generation operations may be applied to any ocean region, sea, exclusive economic zone, port region, offshore infrastructure region, restricted zone, shipping lane, chokepoint, or other maritime geographic area.

In some embodiments, the risk map of FIG. 20 may be a spatiotemporal risk map stored in memory as a grid, matrix, tensor, raster map, vector map, tile set, graph, table, polygon set, or other computer-readable data structure. The patterned regions in FIG. 20 may represent spatiotemporal cells, spatial regions, risk regions, observation-priority regions, confidence regions, observability regions, or other map elements generated by a processing system. Each region may include or correspond to a spatial coordinate, a temporal coordinate, a risk value, a confidence value, a source identifier, an observation-priority value, and one or more metadata fields.

In some embodiments, the processing system may generate the risk map using maritime monitoring inputs for a monitoring iteration. The maritime monitoring inputs may include configuration information, maritime risk-indicator data, asset-availability data, asset-constraint data, contextual maritime data, user-provided intelligence, and prior fused maritime intelligence. The maritime risk-indicator data may include automatic identification system data, radio-frequency intelligence data, weather data, predicted weather data, vessel registry data, vessel risk-list data, route data, port-call data, bathymetry data, current data, historical incident data, critical-infrastructure data, and public-source intelligence.

In some embodiments, the different patterns shown in FIG. 20 may indicate different risk values, risk classes, observation priorities, mission priorities, sensing-modality preferences, delivery-latency requirements, observability states, or customer-specific priorities. For example, one pattern may indicate a high-risk region associated with a predicted vessel route, another pattern may indicate a region near protected offshore infrastructure, another pattern may indicate a region with poor recent observability, and another pattern may indicate a region already covered by a planned acquisition. The processing system may encode such values in memory rather than merely displaying the patterns on a map.

In some embodiments, the processing system may generate the risk map by combining static risk components and dynamic risk components. Static risk components may include offshore energy infrastructure, pipelines, cables, port infrastructure, shipping lanes, territorial boundaries, exclusive economic zone boundaries, restricted zones, chokepoints, shorelines, bathymetry, and customer-defined high-value areas. Dynamic risk components may include vessel tracks, predicted vessel paths, AIS outages, spoofing indicators, radio-frequency detections, radar detections, acoustic detections, weather effects, route deviations, loitering behavior, port-departure indicators, and current fused maritime intelligence. The processing system may combine the components by adding, multiplying, weighting, normalizing, filtering, or otherwise transforming the component risk values into the risk map.

In some embodiments, the risk map of FIG. 20 may be used to generate observation demand for the dynamic scheduler. The processing system may select cells or regions from the risk map based on an absolute threshold, local maximum search, global maximum search, adaptive threshold, temporal-plane selection process, expected risk-reduction value, or customer-priority rule. The processing system may transform selected cells or selected regions into observation entries. Each observation entry may include a spatial target, time window, risk value, sensing-modality preference, resolution constraint, delivery-latency constraint, feature-of-interest identifier, confidence constraint, and policy constraint.

In some embodiments, the risk map may also support observability analysis. The processing system may compare the risk map with an enhanced observation schedule or an observability map to identify high-risk regions that lack timely or suitable observation coverage. The processing system may generate a dark-spot record when a high-risk region cannot be observed within a required time window, with a required sensing modality, or at a required confidence level. The processing system may use the dark-spot record to regenerate the enhanced observation schedule or to provide a decision-support output to a user.

In some embodiments, the risk map of FIG. 20 may be updated after observation output is acquired or retrieved. The processing system may extract sensor-derived insight data from observation output and may fuse the sensor-derived insight data with contextual maritime data to generate current fused maritime intelligence. The processing system may increase, decrease, preserve, or redistribute risk values in the risk map based on vessel presence, vessel absence, vessel identity, vessel behavior, route prediction, anomaly state, spoofing state, dark-vessel state, or event detection. The updated risk map may be used for a subsequent monitoring iteration and may drive later observation-entry generation and scheduling.

FIG. 21 illustrates an MSA system architecture that includes a risk-map generator, a dynamic scheduler, a decision-support system, a tasker, a data acquirer, and a data processor in accordance with some embodiments.

In some embodiments, the data processor may transform observations into sensor-derived insight data and current fused maritime intelligence. The data processor may perform preprocessing, geolocation, orthorectification, radiometric correction, cloud masking, speckle filtering, image registration, feature detection, vessel detection, vessel classification, vessel identification, wake detection, RF-emitter localization, acoustic-event extraction, and confidence scoring. The data processor may fuse the sensor-derived insight data with contextual maritime data such as AIS data, vessel-registry data, RF intelligence, route data, port-call data, weather data, public-source data, fingerprint data, and prior fused maritime intelligence. The resulting current fused maritime intelligence may indicate presence, absence, identity, behavior, anomaly state, spoofing state, dark-vessel state, event state, or risk state.

In some embodiments, the data processor may feed the current fused maritime intelligence back to the risk map generator. The risk map generator may use the current fused maritime intelligence to modify one or more risk values in the spatiotemporal risk map. A confirmed vessel detection may increase risk values along a predicted route. A negative observation may reduce risk values in observed cells. A missed observation may preserve or increase risk values in unobserved high-risk cells. An event detection may increase risk values near the event location or along future route hypotheses.

In some embodiments, FIG. 21 illustrates a closed-loop control architecture rather than a one-time data-analysis pipeline. The risk map generator determines where and when observation has value. The dynamic scheduler determines which sensing assets or data sources should satisfy that observation demand. The tasker and data acquirer cause or obtain observation output. The data processor converts the observation output into fused intelligence. The fused intelligence returns to the risk map generator and changes the next scheduling iteration.

In some embodiments, the architecture of FIG. 21 may support both automated operation and human-in-the-loop operation. Automated operation may occur when the dynamic scheduler provides scheduled observation actions directly to the tasker and the tasker submits asset-specific instructions without operator approval. Human-in-the-loop operation may occur when the dynamic scheduler provides schedule options to the decision support system and the tasker acts only after an operator decision. The same architecture may support mixed operation in which high-confidence or pre-authorized actions proceed automatically and higher-cost or restricted actions proceed through the decision support system.

Referring to FIG. 21, an example system architecture for iterative maritime situational awareness is illustrated in accordance with some embodiments. The architecture may include a risk map generator, a dynamic scheduler, a decision support system, a tasker, a data acquirer, and a data processor. Each illustrated component may be implemented as software executed by a processing system, as a hardware component, as a cloud service, as an edge service, as an onboard service, as a network-accessible module, or as a combination of such implementations.

In some embodiments, the risk map generator may generate a spatiotemporal risk map for a maritime geographic area. The risk map generator may receive configuration information, maritime risk-indicator data, contextual maritime data, asset-related data, user input, and prior fused maritime intelligence. The risk map generator may assign risk values to spatiotemporal cells based on vessel tracks, predicted vessel paths, AIS behavior, RF intelligence, protected infrastructure, weather, currents, bathymetry, historical events, port activity, route data, public-source intelligence, and prior observation results. The risk map generator may provide the spatiotemporal risk map to the dynamic scheduler.

In some embodiments, the dynamic scheduler may transform the spatiotemporal risk map into observation demand and scheduled observation actions. The dynamic scheduler may select high-risk spatiotemporal cells, generate observation entries, retrieve asset-availability data, retrieve asset-constraint data, and generate an enhanced observation schedule. The enhanced observation schedule may assign selected observation entries to tasking actions, retrieval actions, user-controlled-asset schedule actions, restricted-asset schedule actions, or decision-support actions. The dynamic scheduler may account for sensing modality, spatial coverage, tasking latency, observation latency, delivery latency, cost, weather suitability, asset availability, downlink availability, confidence, and expected risk reduction.

In some embodiments, the dynamic scheduler may provide schedule information to the decision support system and to the tasker. The decision support system may present the enhanced observation schedule, the risk map, an observability map, a dark-spot record, a recommended action, or a ranked set of alternatives to a user or operator. The user or operator may approve, reject, modify, or partially enact a scheduled observation action through the decision support system. The decision support system may also transmit operator decisions back into the scheduling loop so that the dynamic scheduler may update the enhanced observation schedule.

In some embodiments, the tasker may convert scheduled observation actions into asset-specific tasking instructions. The tasker may transmit instructions to taskable sensing assets, sensing-asset providers, owned-asset interfaces, partner-asset interfaces, ground-station interfaces, communications-relay interfaces, or other sensing-asset interfaces. The tasking instructions may include a target coordinate, area geometry, time window, sensing modality, acquisition mode, resolution requirement, priority value, cost authorization, onboard-processing instruction, delivery endpoint, or cancellation rule. The tasker may also receive provider metadata, acceptance status, rejection status, expected acquisition time, expected delivery time, footprint metadata, cost metadata, and execution-status feedback.

In some embodiments, the data acquirer may obtain observations according to the enhanced observation schedule. The data acquirer may receive newly acquired sensor data from taskable sensing assets, retrieve observation data from non-tasked sensing assets, pull repository data, obtain planned-acquisition data, receive user-controlled-asset feedback, or receive limited feedback from restricted sensing assets. The observations may include raw sensor data, processed sensor data, image data, synthetic-aperture-radar data, radio-frequency data, acoustic data, video data, onboard-extracted insight data, repository data, provider metadata, or user-provided observation data. The data acquirer may forward the observations to the data processor.

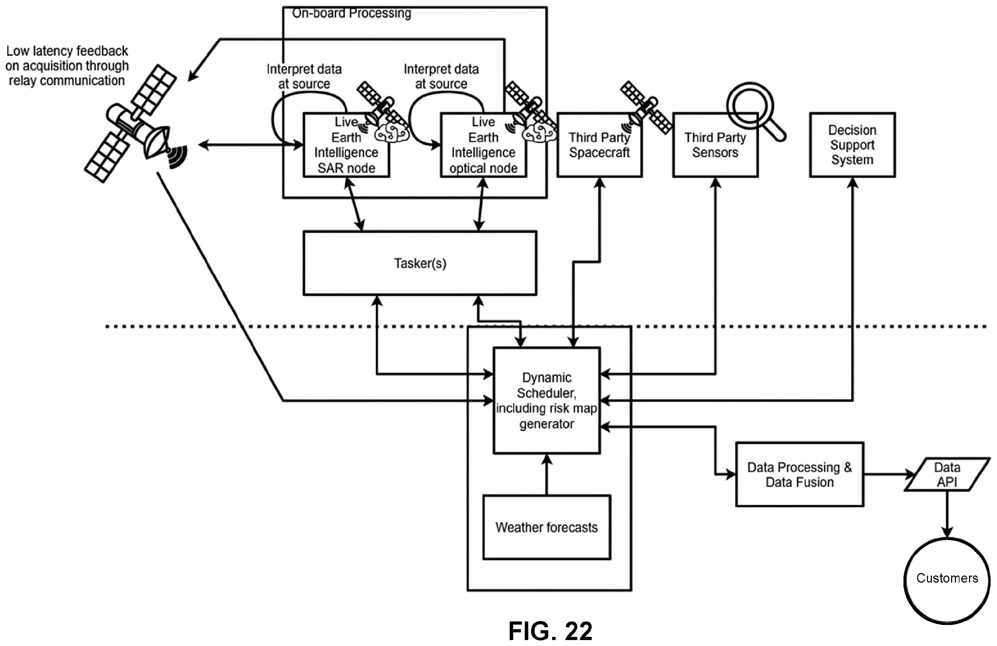

FIG. 22 illustrates an example distributed architecture for live maritime situational awareness is illustrated in accordance with some embodiments. The architecture may include onboard processing resources, one or more Live Earth Intelligence nodes, one or more taskers, a dynamic scheduler including a risk map generator, weather-forecast inputs, third-party spacecraft, third-party sensors, a decision support system, a data-processing and data-fusion module, a data application programming interface, and one or more customer systems. Each illustrated component may be implemented as hardware, software executed by a processing system, an onboard processor, an edge processor, a cloud service, a ground processing system, a network-accessible service, or a combination thereof.

In some embodiments, the onboard processing resources may be associated with one or more sensing assets, such as satellites, spacecraft, high-altitude platforms, uncrewed aerial vehicles, uncrewed surface vehicles, or other remote sensing assets. The onboard processing resources may acquire sensor data and interpret the sensor data at the source before full sensor data is delivered to a ground processing system. For example, an onboard processor may perform vessel detection, vessel localization, vessel classification, radio-frequency emitter detection, wake detection, anomaly scoring, fingerprint generation, feature extraction, confidence scoring, or generation of a compact sensor-derived insight packet. This source-side interpretation may reduce downlink bandwidth, reduce ground-processing load, and reduce time to insight availability.

In some embodiments, the Live Earth Intelligence SAR node and the Live Earth Intelligence optical node may represent onboard or edge processing nodes configured for different sensing modalities. The Live Earth Intelligence SAR node may process synthetic-aperture-radar sensor data to generate sensor-derived insight data under conditions such as darkness, cloud cover, or poor optical visibility. The Live Earth Intelligence optical node may process electro-optical, multispectral, hyperspectral, thermal, or video sensor data to generate sensor-derived insight data from optical observations. Each Live Earth Intelligence node may output a detection, location, confidence value, sensing-modality identifier, acquisition time, bounding box, cropped image, feature vector, fingerprint, or other observation output.

In some embodiments, a relay communication link may provide low-latency feedback on acquisition. The relay communication link may include an inter-satellite link, direct-to-ground link, tactical downlink, ground-station link, communications relay, or provider network link. The sensing asset may transmit sensor-derived insight data, provider metadata, acquisition confirmation, image thumbnail, bounding-box packet, or feature vector through the relay communication link before or instead of transmitting a full sensor-data product. The low-latency feedback may allow the dynamic scheduler to update a spatiotemporal risk map, repair a schedule, or generate a follow-up tasking action during the same monitoring iteration.

In some embodiments, the tasker or taskers may convert schedule outputs into executable tasking instructions for sensing assets. A tasker may receive scheduled observation actions from the dynamic scheduler and may generate asset-specific instructions for the Live Earth Intelligence SAR node, the Live Earth Intelligence optical node, third-party spacecraft, third-party sensors, or other sensing assets. The tasking instructions may include a target coordinate, area geometry, time window, sensing modality, acquisition mode, resolution requirement, pointing parameter, roll angle, pitch angle, yaw angle, onboard-processing instruction, priority value, cost authorization, cancellation rule, and delivery endpoint. The tasker may also receive acquisition status, provider metadata, or limited feedback from the sensing assets.

In some embodiments, the dynamic scheduler including the risk map generator may operate as the scheduling and risk-prediction core of the architecture. The dynamic scheduler may receive configuration information, maritime risk-indicator data, asset-availability data, asset-constraint data, weather forecasts, observation output, contextual maritime data, decision-support inputs, and prior fused maritime intelligence. The risk map generator may generate a spatiotemporal risk map for a maritime geographic area. The dynamic scheduler may transform selected spatiotemporal cells of the spatiotemporal risk map into observation entries and may transform the observation entries into an enhanced observation schedule.

In some embodiments, the weather-forecast input may provide environmental data for risk-map generation and scheduling. The weather-forecast input may include cloud-cover data, wind data, sea-state data, precipitation data, visibility data, illumination data, atmospheric data, current data, and predicted weather data. The dynamic scheduler may use the weather-forecast input to select sensing modalities, reject low-quality optical acquisition opportunities, prioritize synthetic-aperture-radar observation opportunities, estimate expected image quality, or regenerate an enhanced observation schedule. Weather-aware scheduling may reduce low-value acquisitions that would be degraded by environmental conditions.

In some embodiments, the third-party spacecraft and third-party sensors may provide additional sensing-asset capacity outside the system owner's direct asset pool. Third-party spacecraft may include commercial electro-optical satellites, synthetic-aperture-radar satellites, radio-frequency collection satellites, hyperspectral satellites, multispectral satellites, or other orbital sensing assets. Third-party sensors may include ground sensors, coastal sensors, port cameras, acoustic sensors, seabed sensors, buoys, high-altitude platforms, drones, uncrewed surface vehicles, or data repositories. The dynamic scheduler may assign observation entries to third-party assets when those assets provide suitable availability, sensing modality, cost, coverage, confidence, or delivery latency.

In some embodiments, the decision support system may receive risk maps, observability maps, enhanced observation schedules, dark-spot records, intelligence records, alert records, and recommended actions from the dynamic scheduler or data-fusion module. A user or operator may use the decision support system to approve, reject, modify, or prioritize scheduled observation actions. The decision support system may also provide monitoring objectives, user preferences, tasking permissions, budget constraints, sensing-modality constraints, or operator decisions back to the dynamic scheduler. This supports human-in-the-loop control for high-cost tasking, restricted assets, sensitive missions, or low-confidence events.

In some embodiments, the data-processing and data-fusion module may receive observation output from onboard processing nodes, third-party spacecraft, third-party sensors, repositories, and other external data sources. The data-processing and data-fusion module may perform preprocessing, geolocation, orthorectification, cloud masking, speckle filtering, feature detection, vessel detection, vessel classification, vessel identification, radio-frequency emitter localization, acoustic-event extraction, fingerprint matching, AIS matching, and confidence scoring. The module may fuse sensor-derived insight data with contextual maritime data, including AIS data, vessel-registry data, vessel-risk-list data, route data, port-call data, weather data, bathymetry data, public-source data, radio-frequency intelligence data, and prior fused maritime intelligence.

In some embodiments, the data-processing and data-fusion module may generate current fused maritime intelligence. The current fused maritime intelligence may include an intelligence record, alert record, vessel-track update, route prediction, presence indication, absence indication, identity indication, behavior indication, anomaly indication, spoofing indication, dark-vessel indication, risk-state indication, confidence value, supporting-source list, and recommended action. The data-processing and data-fusion module may transmit the current fused maritime intelligence to the dynamic scheduler so that the risk map generator may generate an updated spatiotemporal risk map for a subsequent monitoring iteration. The same current fused maritime intelligence may also be routed to customer systems through the data application programming interface.

In some embodiments, the data application programming interface may deliver intelligence products to one or more customer systems. The data application programming interface may transmit structured messages, geospatial features, map overlays, image products, thumbnails, alert records, route predictions, vessel-track updates, observability maps, dark-spot records, schedule recommendations, and confidence values. The data application programming interface may use authenticated network communication and may support customer-specific filtering, mission-specific formatting, service-level constraints, and access-control rules. The customer systems may receive live maritime intelligence without direct access to raw sensor data or internal scheduling data.

In some embodiments, the dotted line in FIG. 22 may represent a logical or physical boundary between asset-side resources and ground-side or cloud-side resources. Asset-side resources may include onboard processing resources, Live Earth Intelligence nodes, and sensing assets. Ground-side or cloud-side resources may include the dynamic scheduler, risk map generator, weather-forecast services, data-processing and data-fusion module, data application programming interface, and customer systems. In other embodiments, the boundary may represent a communications boundary, security boundary, provider boundary, network boundary, jurisdictional boundary, or deployment boundary.

In some embodiments, the architecture of FIG. 22 may support a closed-loop control process for maritime sensing assets. The dynamic scheduler may cause a tasker to task a sensing asset. The sensing asset may acquire sensor data and perform onboard processing. The sensing asset may return low-latency observation output through a relay communication link. The data-processing and data-fusion module may generate current fused maritime intelligence. The risk map generator may update the spatiotemporal risk map based on the current fused maritime intelligence. The dynamic scheduler may then generate a new enhanced observation schedule based on the updated spatiotemporal risk map.

In some embodiments, the architecture of FIG. 22 may improve system performance by shifting selected processing closer to the sensing asset. Onboard or edge processing may reduce transmission of full-scene sensor data when compact insight data is sufficient. The dynamic scheduler may reduce unnecessary tasking by comparing observation entries with available third-party observations and non-tasked observation data. The data-processing and data-fusion module may reduce repeated processing by storing fused intelligence and feeding that intelligence back into risk-map generation. The combined architecture may reduce bandwidth use, reduce memory traffic, reduce scheduling latency, reduce delivery latency, and improve responsiveness of sensing-asset control.

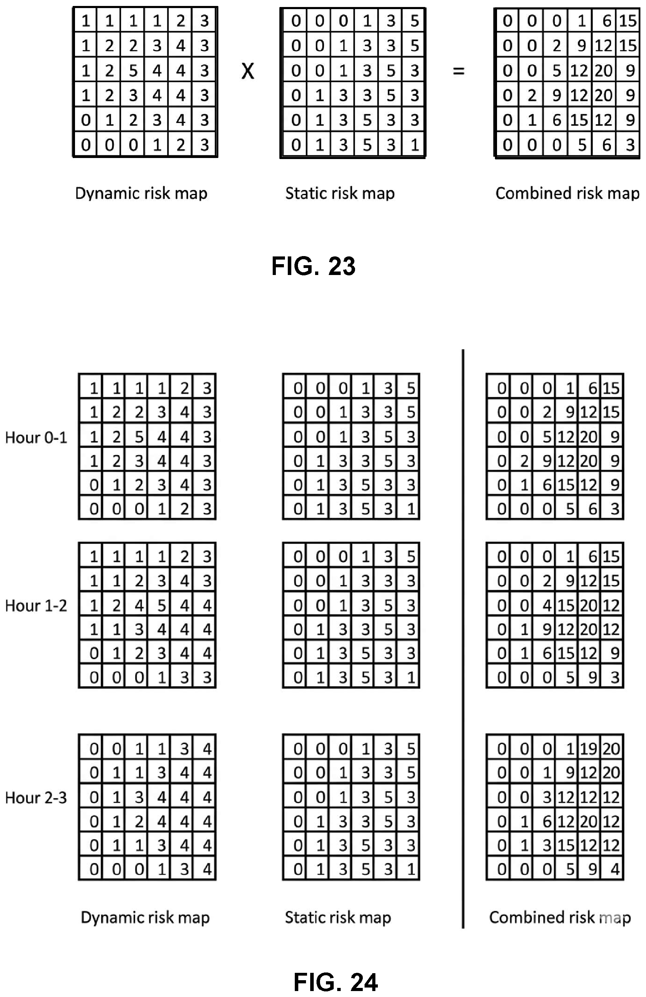

FIG. 23 illustrates an example method for generating a combined risk map from a dynamic risk map and a static risk map in accordance with some embodiments. The dynamic risk map may represent time-varying likelihood, activity, or observation priority associated with one or more moving maritime features of interest. The static risk map may represent relatively fixed or slowly changing impact, vulnerability, or priority associated with a maritime geographic area. The combined risk map may be generated by combining corresponding cells of the dynamic risk map and the static risk map.

In some embodiments, each map shown in FIG. 23 may be stored in memory as a computer-readable grid, matrix, tensor slice, raster, table, tile set, or other data structure. Each cell may correspond to a location, region, or tile within the maritime geographic area. Each cell may include a spatial coordinate, a temporal coordinate or temporal-plane identifier, a risk value, a confidence value, and one or more source identifiers. Although the maps in FIG. 23 are shown as regular grids, the processing system may use irregular cells, variable-resolution cells, polygonal regions, graph nodes, or geospatial tiles.

In some embodiments, the dynamic risk map may be generated from time-varying maritime monitoring inputs. The time-varying maritime monitoring inputs may include vessel tracks, predicted vessel paths, AIS data, AIS outages, radio-frequency detections, radar detections, acoustic detections, recent satellite detections, weather data, current data, route deviations, loitering indicators, port-departure indicators, anomaly scores, and prior fused maritime intelligence. A higher value in a cell of the dynamic risk map may indicate a higher likelihood that a maritime feature of interest or maritime event of interest is located in, will enter, or will affect the corresponding region during a relevant time window.

In some embodiments, the static risk map may be generated from fixed or slowly changing maritime risk-indicator data. The fixed or slowly changing maritime risk-indicator data may include critical underwater infrastructure, offshore energy infrastructure, subsea cables, pipelines, port infrastructure, shipping lanes, chokepoints, restricted zones, maritime boundaries, protected regions, bathymetry, historical incident locations, and customer-defined high-value regions. A higher value in a cell of the static risk map may indicate greater impact, sensitivity, importance, vulnerability, or monitoring priority for the corresponding region.

In some embodiments, the processing system may generate the combined risk map by applying an element-wise operation to corresponding cells of the dynamic risk map and the static risk map. In the illustrated example, corresponding cell values are multiplied so that a cell having both high dynamic risk and high static risk receives a higher combined risk value. In other embodiments, the processing system may add, average, weight, normalize, threshold, convolve, aggregate, or otherwise transform the dynamic risk map and the static risk map to generate the combined risk map. The processing system may also resample, align, reproject, or interpolate one map before combining the maps when the maps have different spatial resolutions, temporal resolutions, coordinate systems, or cell geometries.

In some embodiments, the combined risk map may identify regions where moving maritime risk intersects with high-value or vulnerable maritime regions. For example, a predicted vessel path may have moderate dynamic risk in multiple cells, while a protected infrastructure corridor may have high static risk in fewer cells. The combined risk map may assign the highest combined risk values to cells where the predicted vessel path overlaps or approaches the protected infrastructure corridor. This allows the processing system to prioritize observation entries that are more valuable than observation entries selected from either the dynamic risk map or the static risk map alone.

In some embodiments, the processing system may use the combined risk map to generate observation entries for an enhanced observation schedule. The processing system may select cells in the combined risk map using an absolute threshold, local maximum search, global maximum search, adaptive threshold, expected risk-reduction value, confidence value, customer priority, or policy rule. The processing system may transform the selected cells into observation entries that include spatial targets, temporal windows, risk values, sensing-modality preferences, resolution constraints, delivery-latency constraints, and feature-of-interest identifiers. The enhanced observation schedule may then assign those observation entries to tasking actions or retrieval actions.

In some embodiments, the combined risk map may also support user display, observability analysis, and schedule repair. The processing system may compare the combined risk map with an observability map to identify high-risk cells that lack timely scheduled observation coverage. The processing system may generate a dark-spot record for a high-risk cell when no suitable sensing asset or repository source can satisfy the cell within a required time window. The processing system may later update the dynamic risk map, static risk map, or combined risk map based on observation output and current fused maritime intelligence.

FIG. 24 illustrates an example method for generating time-indexed combined risk maps from dynamic risk maps and static risk maps in accordance with some embodiments. FIG. 24 illustrates three temporal windows, including hour 0-1, hour 1-2, and hour 2-3. For each temporal window, the processing system may generate or retrieve a dynamic risk map, combine the dynamic risk map with a static risk map, and generate a corresponding combined risk map. The resulting set of combined risk maps may form a spatiotemporal risk map with spatial dimensions and a temporal dimension.

In some embodiments, the dynamic risk map may change between temporal windows because maritime features of interest move over time. For example, a vessel of interest may have a predicted path that shifts from one region to another between hour 0-1, hour 1-2, and hour 2-3. The processing system may update the dynamic risk map for each temporal window using course, speed, heading, AIS data, radio-frequency detections, radar detections, acoustic detections, weather data, current data, route history, vessel-class data, and prior fused maritime intelligence. The changing dynamic risk maps allow the processing system to represent where a vessel or event is expected to be at different times.

In some embodiments, the static risk map may remain the same across the temporal windows shown in FIG. 24. The static risk map may represent persistent maritime context, such as critical underwater infrastructure, port regions, shipping lanes, restricted regions, offshore infrastructure, chokepoints, or customer-defined high-value regions. In other embodiments, the processing system may update the static risk map between temporal windows when a nominally static condition changes, such as a temporary exclusion zone, infrastructure outage, port closure, temporary mission region, or updated customer priority. The static risk map provides the impact or priority layer against which time-varying maritime risk is evaluated.

In some embodiments, the processing system may generate each combined risk map by multiplying corresponding cells of the dynamic risk map and the static risk map for the associated temporal window. In other embodiments, the processing system may generate each combined risk map by adding, weighting, aggregating, normalizing, thresholding, or otherwise transforming the corresponding cell values. The processing system may maintain the resulting combined risk maps as temporal planes of a spatiotemporal risk map. Each spatiotemporal cell may include a spatial coordinate, a temporal coordinate, and a combined risk value.

In some embodiments, the combined risk map for hour 0-1 may identify high-risk regions where the dynamic risk for the first temporal window overlaps high static priority. The combined risk map for hour 1-2 may identify a different set of high-risk regions as the predicted vessel path or event likelihood shifts. The combined risk map for hour 2-3 may identify still further regions as the maritime feature of interest approaches, leaves, or passes through a high-value region. Thus, the processing system may select not only where to observe but also when to observe.

In some embodiments, the processing system may generate observation entries from the time-indexed combined risk maps. An observation entry may identify a selected spatiotemporal cell, spatial target, temporal window, risk value, sensing-modality preference, delivery-latency constraint, confidence threshold, and feature-of-interest identifier. The dynamic scheduler may use those observation entries to generate an enhanced observation schedule that places scheduled observation actions in the correct temporal windows. This allows the processing system to avoid scheduling an acquisition after the predicted risk has moved to another region.

In some embodiments, the time-indexed combined risk maps may support route prediction, reacquisition, and persistent monitoring. For example, when a vessel is predicted to move across a protected infrastructure region over multiple hours, the processing system may generate observation entries at successive positions along the predicted path. The enhanced observation schedule may assign those entries to different sensing assets based on asset availability, sensing modality, weather suitability, cost, acquisition time, and delivery time. The processing system may thereby coordinate a sequence of observations that follows the vessel or event through time.

In some embodiments, the processing system may update the maps shown in FIG. 24 after receiving observation output. When observation output confirms a vessel at a predicted location, the processing system may increase risk values along the confirmed or revised path for later temporal windows. When observation output indicates absence from an expected location, the processing system may reduce risk values in observed cells and preserve or increase risk values along alternative route hypotheses. When a scheduled observation action fails or no observation output arrives within a required time window, the processing system may generate a dark-spot record and regenerate the enhanced observation schedule.

In some embodiments, the processing system may use the time-indexed combined risk maps to reduce unnecessary sensing-asset use. The processing system may avoid tasking a sensing asset for a low combined risk cell even when the dynamic risk map shows possible vessel presence. The processing system may also avoid tasking a sensing asset for a high static risk cell when the dynamic risk map indicates no likely maritime feature of interest during the relevant temporal window. By combining spatial priority with temporal risk, the processing system may direct tasking actions and retrieval actions toward observations with greater expected risk reduction.

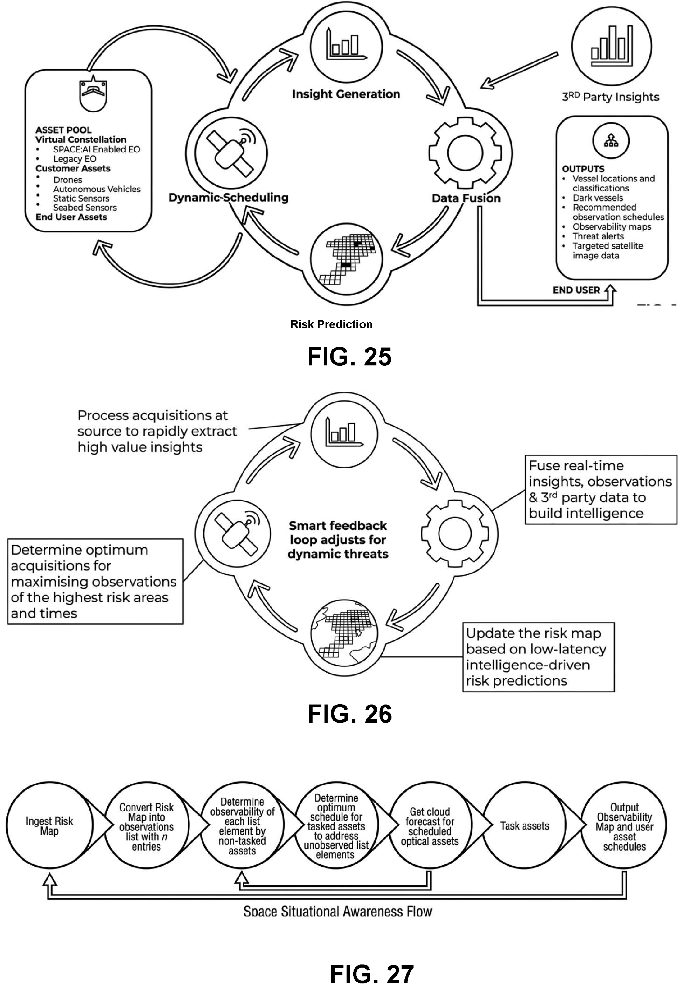

FIG. 25 illustrates an example closed-loop architecture for maritime situational awareness is illustrated in accordance with some embodiments. The architecture may include an asset pool, a dynamic-scheduling stage, an insight-generation stage, a data-fusion stage, a risk-prediction stage, one or more third-party insight sources, and one or more end-user output channels. Each illustrated stage may be implemented by a processing system, by a distributed computing system, by an onboard processing system, by an edge processing system, by a cloud processing system, or by a combination of such systems.

In some embodiments, the asset pool may include a virtual constellation, customer assets, and end-user assets. The virtual constellation may include spaceborne sensing assets, such as AI-enabled Earth-observation assets, legacy Earth-observation assets, synthetic-aperture-radar assets, radio-frequency collection assets, multispectral assets, hyperspectral assets, or other remote-sensing assets. Customer assets may include drones, autonomous vehicles, static sensors, seabed sensors, coastal sensors, port cameras, acoustic sensors, or other sensing assets. End-user assets may include user-controlled sensing assets, sovereign sensing assets, restricted sensing assets, or operator-controlled observation resources.

In some embodiments, the dynamic-scheduling stage may transform observation demand into scheduled observation actions for the asset pool. The dynamic-scheduling stage may receive a spatiotemporal risk map, asset-availability data, asset-constraint data, configuration information, weather data, prior fused maritime intelligence, and user policies. The dynamic-scheduling stage may generate an enhanced observation schedule that assigns selected observation entries to tasking actions, retrieval actions, user-controlled-asset schedule actions, restricted-asset schedule actions, or decision-support actions. The dynamic-scheduling stage may select sensing assets based on risk value, expected risk reduction, sensing modality, spatial coverage, delivery latency, tasking latency, cost, weather suitability, and asset availability.

In some embodiments, the insight-generation stage may transform observation output from the asset pool into sensor-derived insight data. The insight-generation stage may operate onboard a sensing asset, at an edge processing node, at a ground processing node, or in a cloud processing system. The insight-generation stage may perform vessel detection, vessel localization, vessel classification, vessel identification, wake detection, radio-frequency emitter localization, anomaly scoring, fingerprint generation, image-chip generation, thumbnail generation, confidence scoring, or absence determination. This stage may reduce the amount of raw sensor data that must be transmitted or processed by later stages.

In some embodiments, the data-fusion stage may generate current fused maritime intelligence from sensor-derived insight data and contextual maritime data. The contextual maritime data may include automatic identification system data, vessel-registry data, radio-frequency intelligence data, route data, port-call data, weather data, bathymetry data, public-source data, risk-list data, third-party insights, and prior fused maritime intelligence. The data-fusion stage may align data by time and location, weight data by source confidence, correlate detections across sensing modalities, match fingerprints to databases, and resolve conflicts among sources. The current fused maritime intelligence may indicate vessel presence, vessel absence, vessel identity, vessel behavior, dark-vessel state, spoofing state, anomaly state, event state, risk state, and confidence.

In some embodiments, third-party insights may be provided to the data-fusion stage. Third-party insights may include public-source reports, commercial intelligence products, partner sensor results, weather products, vessel-risk products, sanctions data, port-activity data, radio-frequency intelligence products, or other contextual maritime data. The data-fusion stage may combine third-party insights with observation output produced by the asset pool to generate a more complete intelligence record. The fused intelligence may be used for user outputs and may also feed the risk-prediction stage.

In some embodiments, the risk-prediction stage may generate or update a spatiotemporal risk map from current fused maritime intelligence. The spatiotemporal risk map may include spatiotemporal cells having spatial coordinates, temporal coordinates, and risk values. The risk-prediction stage may increase, decrease, preserve, or redistribute risk values based on vessel presence, vessel absence, vessel identity, vessel behavior, event detection, dark-vessel indication, spoofing indication, anomaly score, path prediction, or observability gap. The updated spatiotemporal risk map may feed the dynamic-scheduling stage so that later scheduled observation actions reflect the current intelligence state.

In some embodiments, FIG. 25 illustrates outputs that may be delivered to an end user. The outputs may include vessel locations and classifications, dark-vessel indications, recommended observation schedules, observability maps, threat alerts, and targeted satellite image data. The outputs may be transmitted through a user interface, application programming interface, alert channel, report object, decision-support system, or automated response system. The same outputs may also be stored as current fused maritime intelligence for a subsequent monitoring iteration.

In some embodiments, the arrows in FIG. 25 represent an iterative feedback loop. The dynamic-scheduling stage controls or requests observations from the asset pool. The insight-generation stage extracts high-value sensor-derived insight data from the resulting observation output. The data-fusion stage combines the sensor-derived insight data with third-party insights and contextual maritime data. The risk-prediction stage updates the spatiotemporal risk map. The dynamic-scheduling stage then uses the updated spatiotemporal risk map to generate a later enhanced observation schedule.

FIG. 26 illustrates an example smart feedback loop for adjusting maritime sensing operations in response to dynamic threats in accordance with some embodiments. The loop may include dynamic scheduling, insight generation, data fusion, and risk prediction. Each stage may be executed by one or more processors in a maritime situational awareness system. The loop may operate continuously, periodically, on demand, or in response to a monitoring trigger.

In some embodiments, the dynamic-scheduling stage may determine optimum acquisitions for increasing observations of high-risk areas and high-risk times. The processing system may receive a spatiotemporal risk map and may transform selected high-risk spatiotemporal cells into observation entries. The processing system may generate an enhanced observation schedule by assigning selected observation entries to scheduled observation actions based on asset-availability data, asset-constraint data, cost, sensing modality, weather suitability, delivery latency, tasking latency, and expected risk reduction. The enhanced observation schedule may include tasking actions for taskable sensing assets and retrieval actions for non-tasked sensing assets.

In some embodiments, the insight-generation stage may process acquisitions at the source to rapidly extract high-value insights. For example, an onboard processing system or edge processing system may process sensor data on a satellite, spacecraft, drone, autonomous vehicle, seabed sensor, acoustic sensor, or other sensing asset. The onboard or edge processing system may generate compact sensor-derived insight data, such as a vessel location, bounding box, cropped image, feature vector, vessel class, risk value, confidence value, or alert indicator. Source-side processing may reduce downlink volume and may reduce delay between acquisition and intelligence generation.

In some embodiments, the data-fusion stage may fuse real-time insights, observations, and third-party data to build current fused maritime intelligence. The data-fusion stage may receive sensor-derived insight data, raw or processed observation output, automatic identification system data, radio-frequency intelligence data, vessel-registry data, public-source data, weather data, route data, port-call data, fingerprint data, and prior fused maritime intelligence. The data-fusion stage may correlate observations, match detected vessels with reported vessels, detect AIS absence, detect spoofing, identify events, assign confidence values, and generate intelligence records. The current fused maritime intelligence may be output to users and may also feed the risk-prediction stage.

In some embodiments, the risk-prediction stage may update a spatiotemporal risk map based on low-latency intelligence-driven risk predictions. The processing system may update risk values for observed cells, unobserved cells, predicted-route cells, event-proximity cells, and protected-infrastructure cells. A confirmed detection may increase risk values along a predicted route. A negative observation may reduce risk values for observed cells. A failed observation or unobserved high-risk region may preserve or increase risk values and may generate a dark-spot record. An event detection may increase risk values near the event location and along future route hypotheses.

In some embodiments, the smart feedback loop may adjust for dynamic threats by using the output of one stage as an input to another stage. A newly detected dark vessel may cause the data-fusion stage to generate a dark-vessel indication. The risk-prediction stage may use the dark-vessel indication to increase risk values along a predicted route. The dynamic-scheduling stage may generate new observation entries for those cells and may task a sensing asset for reacquisition. The insight-generation stage may process the reacquisition and return new sensor-derived insight data to the loop.

In some embodiments, the loop shown in FIG. 26 may improve operational performance of the maritime situational awareness system. The system may avoid uniform collection across low-value regions by focusing scheduled observation actions on high-risk spatiotemporal cells. The system may avoid delayed full-scene workflows by processing selected acquisitions at the source. The system may reduce duplicate tasking by fusing real-time observations with third-party data before generating the next schedule. The system may reduce scheduling latency and bandwidth use while improving the timeliness of maritime intelligence delivered to a user.

Referring to FIG. 27, an example space situational awareness flow for converting a risk map into scheduled observations and observability outputs is illustrated in accordance with some embodiments. Although FIG. 27 refers to space situational awareness, the same flow may be applied to maritime situational awareness, Earth observation, infrastructure monitoring, border monitoring, environmental monitoring, or any sensing-asset orchestration problem in which risk-driven observation demand is matched to available sensing assets. The flow may be performed by a processing system that executes a risk-map generator, dynamic scheduler, tasker, data acquirer, data processor, or decision-support module.

In some embodiments, the processing system may ingest a risk map. The risk map may be a spatiotemporal risk map stored in memory as a grid, matrix, tensor, tile set, graph, table, raster map, vector map, or other computer-readable data structure. The risk map may include spatiotemporal cells having spatial coordinates, temporal coordinates, risk values, confidence values, source identifiers, and priority metadata. The processing system may receive the risk map from a risk-prediction stage or may generate the risk map from configuration information, risk-indicator data, contextual data, and prior fused intelligence.

In some embodiments, the processing system may convert the risk map into an observation list having n entries. The processing system may select spatiotemporal cells from the risk map using an absolute threshold, local maximum search, global maximum search, adaptive threshold, temporal-plane selection process, expected risk-reduction value, customer priority, or policy rule. The processing system may transform each selected spatiotemporal cell into an observation entry. Each observation entry may include a spatial target, temporal window, risk value, feature-of-interest identifier, sensing-modality preference, resolution constraint, confidence constraint, and delivery-latency constraint.

In some embodiments, the processing system may determine observability of each observation-list element by non-tasked assets. Non-tasked assets may include historical repositories, planned acquisitions, public data sources, commercial data feeds, weather sources, automatic-identification-system sources, radio-frequency intelligence repositories, partner data products, or other sources that provide observation data without a new tasking action. The processing system may compare each observation entry with non-tasked observation opportunities based on spatial overlap, temporal overlap, sensing modality, resolution, quality, delivery latency, cost, and confidence. The processing system may assign an observation entry to a retrieval action when a non-tasked asset satisfies the observation entry.

In some embodiments, the processing system may determine an optimum schedule for tasked assets to address unobserved observation-list elements. The processing system may identify observation entries not satisfied by non-tasked assets and may compare those entries with candidate observation opportunities for taskable sensing assets. The processing system may generate an enhanced observation schedule based on asset-availability data, asset-constraint data, tasking latency, acquisition latency, delivery latency, sensing modality, spatial coverage, expected image quality, cost, and expected risk reduction. The enhanced observation schedule may assign unobserved observation-list elements to tasking actions for taskable sensing assets.

In some embodiments, the processing system may obtain a cloud forecast for scheduled optical assets. The cloud forecast may include cloud-cover probability, precipitation probability, visibility data, atmospheric data, sunlight availability, weather forecast data, nowcasting data, and expected optical image-quality indicators. The processing system may use the cloud forecast to accept, reject, rescore, or reschedule optical acquisitions. When cloud forecast data indicates that an optical acquisition is unlikely to produce useful observation output, the processing system may select a different optical opportunity, switch to a synthetic-aperture-radar asset, use a radio-frequency collection asset, or generate a dark-spot record.

In some embodiments, the processing system may task assets according to the enhanced observation schedule. The processing system may generate asset-specific tasking instructions for satellites, spacecraft, high-altitude platforms, drones, autonomous vehicles, seabed sensors, acoustic sensors, coastal sensors, port cameras, partner assets, user-controlled assets, or other sensing assets. A tasking instruction may include a target coordinate, area geometry, temporal window, sensing modality, acquisition mode, resolution requirement, priority value, cost authorization, onboard-processing instruction, delivery endpoint, and cancellation rule. The processing system may transmit the tasking instruction through a sensing-asset interface, provider interface, tasking application programming interface, operator interface, or decision-support interface.

In some embodiments, the processing system may output an observability map and user asset schedules. The observability map may represent where and when observations are scheduled, where and when observation output is expected, which observation entries are satisfied by non-tasked assets, which observation entries are assigned to tasking actions, and which high-risk observation entries remain unobserved. User asset schedules may include recommended actions for user-controlled sensing assets, sovereign sensing assets, restricted sensing assets, or end-user resources. The processing system may provide the observability map and user asset schedules through a user interface, application programming interface, dashboard, alert channel, or decision-support system.

In some embodiments, the flow of FIG. 27 may repeat after observation output is obtained. The processing system may extract sensor-derived insight data, retrieve contextual data, generate current fused intelligence, and update the risk map. The updated risk map may be ingested at the start of a subsequent execution of the flow. This feedback allows the system to adjust observation demand, non-tasked retrievals, tasked acquisitions, weather-aware scheduling, and user asset schedules as risk and asset availability change over time.

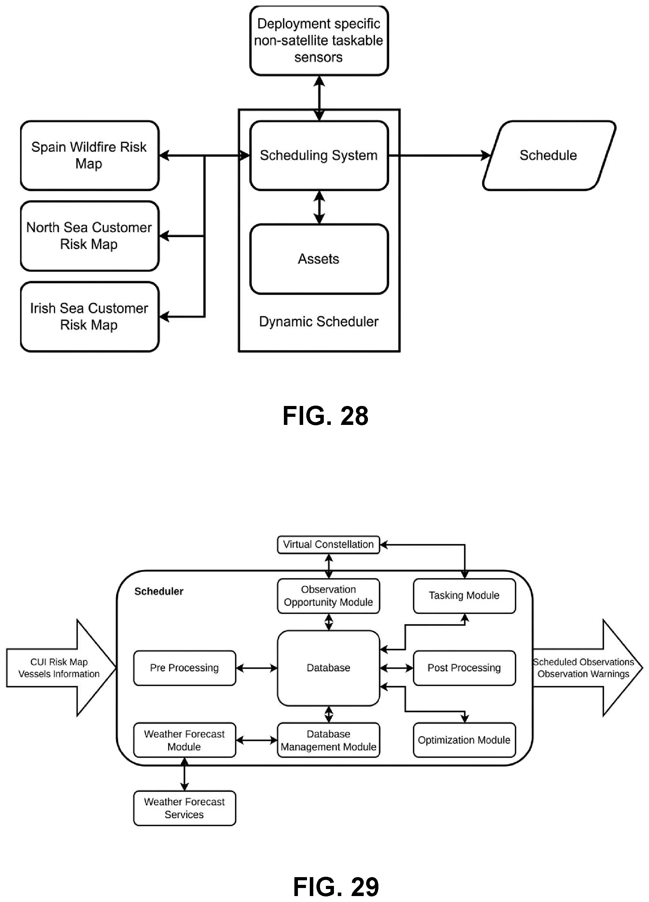

FIG. 28 illustrates an example dynamic-scheduler configuration for coordinating multiple risk maps and multiple asset categories is illustrated in accordance with some embodiments. The dynamic scheduler may include a scheduling system and an asset data structure. The scheduling system may receive one or more risk maps, retrieve or maintain asset-availability data and asset-constraint data for available assets, and generate a schedule that assigns selected observation entries to scheduled observation actions. Although FIG. 28 illustrates a Spain wildfire risk map, a North Sea customer risk map, and an Irish Sea customer risk map, the same configuration may be used with any customer-specific risk map, mission-specific risk map, geography-specific risk map, or application-specific risk map.

In some embodiments, each risk map shown in FIG. 28 may be a spatiotemporal risk map stored in memory. Each spatiotemporal risk map may include spatiotemporal cells having spatial coordinates, temporal coordinates, and risk values. The Spain wildfire risk map may represent terrestrial risk values for wildfire monitoring, while the North Sea customer risk map and the Irish Sea customer risk map may represent maritime risk values for vessel monitoring, infrastructure monitoring, exclusive economic zone monitoring, port monitoring, or event monitoring. The dynamic scheduler may process those different risk maps through the same scheduling architecture when the risk maps use compatible observation-entry formats.

In some embodiments, the scheduling system may convert each received risk map into observation entries. The scheduling system may select spatiotemporal cells using thresholds, local maximum searches, global maximum searches, adaptive thresholds, expected risk-reduction values, customer-priority values, mission-priority values, or service-level requirements. The scheduling system may transform each selected spatiotemporal cell into an observation entry that includes a spatial target, temporal window, risk value, sensing-modality preference, resolution constraint, delivery-latency constraint, and customer identifier. This allows the dynamic scheduler to compare observation demand across different geographies and different customers.

In some embodiments, the asset data structure may store information for satellite assets, non-satellite taskable sensors, customer assets, owned assets, partner assets, restricted assets, and repository sources. Asset information may include asset identifiers, sensing modalities, availability windows, spatial coverage, swath width, resolution, pointing limits, tasking latency, acquisition latency, delivery latency, cost, weather sensitivity, communications availability, user permissions, and provider constraints. The scheduling system may retrieve the asset information from memory, from asset-provider interfaces, from customer systems, from virtual-constellation services, or from external scheduling services.

In some embodiments, the deployment-specific non-satellite taskable sensors shown in FIG. 28 may include drones, aircraft, high-altitude platforms, uncrewed surface vehicles, seabed sensors, acoustic sensors, port cameras, coastal radars, ground sensors, buoys, or other region-specific sensing assets. The dynamic scheduler may treat such sensors as taskable sensing assets when the system has permission to generate tasking actions or schedule recommendations for those sensors. The dynamic scheduler may also treat such sensors as user-controlled sensing assets when a user or operator must approve or enact the scheduled observation action.

In some embodiments, the scheduling system may generate a single schedule from multiple risk maps. The scheduling system may weight risk values by customer priority, mission priority, service-level requirement, geographic priority, asset permission, cost policy, or expected risk reduction. The scheduling system may merge overlapping observation entries when different customers or missions require observation of the same region during the same temporal window. The scheduling system may thereby reduce duplicate acquisitions and improve use of shared sensing assets.

In some embodiments, the scheduling system may generate separate schedules for different customers, missions, geographies, or asset pools. For example, the scheduling system may generate one schedule for North Sea vessel monitoring, another schedule for Irish Sea critical infrastructure monitoring, and another schedule for Spain wildfire monitoring. The schedules may share asset capacity when asset permissions allow sharing. The schedules may remain separated when customer policies, jurisdictional rules, data-access restrictions, or asset-control permissions require separation.

In some embodiments, the schedule output shown in FIG. 28 may include scheduled observation actions, tasking actions, retrieval actions, user-controlled-asset schedule actions, restricted-asset schedule actions, and decision-support actions. A scheduled observation action may identify an asset, observation entry, target region, acquisition time, delivery time, sensing modality, cost, priority, confidence value, and delivery endpoint. The schedule output may be transmitted to a tasker, a decision support system, a user interface, an application programming interface, a data-acquisition module, or an automated response system. The schedule output may also be stored in an operational data store for later audit, performance analysis, and risk-map updating.

In some embodiments, FIG. 28 illustrates that the dynamic scheduler may operate as a general risk-driven observation scheduler rather than as a scheduler limited to a single asset class or a single geography. The same scheduler may receive risk maps for maritime monitoring, wildfire monitoring, infrastructure monitoring, border monitoring, environmental monitoring, or other monitoring missions. The same scheduler may transform risk values into observation entries and may assign those observation entries to feasible assets using asset availability and asset constraints. This general architecture allows deployment-specific assets and customer-specific risk maps to be incorporated without changing the core scheduling process.

FIG. 29 illustrates an example scheduler architecture for generating scheduled observations and observation warnings in accordance with some embodiments. The scheduler may receive a critical-underwater-infrastructure risk map and vessel information as input and may output scheduled observations and observation warnings. The scheduler may include a preprocessing module, observation-opportunity module, tasking module, post-processing module, database, weather-forecast module, database-management module, and optimization module. Each module may be implemented as software executed by a processing system, as a cloud service, as an edge service, as an onboard service, as a hardware component, or as a combination of such implementations.

In some embodiments, the critical-underwater-infrastructure risk map may represent static or slowly changing risk associated with subsea cables, pipelines, offshore energy infrastructure, seabed sensors, restricted regions, exclusion zones, or other protected maritime infrastructure. The vessel information may represent dynamic risk associated with vessel positions, vessel tracks, vessel routes, predicted vessel paths, AIS status, AIS outages, RF detections, vessel registry data, risk-list data, or prior fused maritime intelligence. The preprocessing module may receive the critical-underwater-infrastructure risk map and vessel information and may normalize those inputs into a common spatiotemporal reference frame. The preprocessing module may align coordinates, timestamps, temporal windows, risk values, confidence values, source identifiers, and customer-specific metadata.

In some embodiments, the preprocessing module may generate or update a spatiotemporal risk map from the critical-underwater-infrastructure risk map and vessel information. For example, the preprocessing module may combine static risk values associated with infrastructure vulnerability and dynamic risk values associated with vessel movement or behavior. The preprocessing module may generate higher risk values for spatiotemporal cells where a vessel path intersects, approaches, or overlaps a protected infrastructure region. The preprocessing module may store the resulting spatiotemporal risk map in the database for use by the optimization module and the observation-opportunity module.

In some embodiments, the database may store scheduler inputs, intermediate data structures, and scheduler outputs. The database may store risk maps, vessel information, observation entries, observation opportunities, asset-availability data, asset-constraint data, weather data, cost-policy data, prior schedules, tasking instructions, provider responses, observation warnings, scheduled observations, and current fused maritime intelligence. The database may allow modules within the scheduler to share a common state during a monitoring iteration. The database may also maintain records for later schedule repair, audit, performance comparison, and subsequent risk-map generation.

In some embodiments, the database-management module may manage creation, retrieval, update, and deletion of scheduler data in the database. The database-management module may index risk maps by geography, time, customer, feature of interest, event of interest, and monitoring iteration. The database-management module may update asset state after a tasking action, retrieval action, provider response, acquisition confirmation, delivery event, failed observation, or operator decision. The database-management module may provide updated state data to the optimization module before the scheduler generates or repairs an enhanced observation schedule.

In some embodiments, the observation-opportunity module may generate candidate observation opportunities for a virtual constellation. The virtual constellation may include taskable sensing assets, non-tasked sensing assets, user-controlled sensing assets, restricted sensing assets, owned assets, partner assets, commercial repositories, public repositories, and third-party data services. The observation-opportunity module may generate each candidate observation opportunity from asset-availability data and asset-constraint data. Each candidate observation opportunity may include an asset identifier, sensing modality, footprint, candidate acquisition time, expected delivery time, resolution, cost, expected success probability, tasking lead time, retrieval lead time, and confidence value.

In some embodiments, the virtual constellation shown in FIG. 29 may provide asset information to the observation-opportunity module and may receive tasking instructions from the tasking module. The virtual constellation may include electro-optical satellites, synthetic-aperture-radar satellites, radio-frequency collection satellites, high-altitude platforms, drones, uncrewed surface vehicles, seabed sensors, acoustic sensors, coastal sensors, port cameras, and data repositories. The scheduler may select among those assets based on the observation entries, candidate observation opportunities, weather forecasts, cost constraints, sensing modality, delivery latency, and expected risk reduction. The virtual-constellation representation allows heterogeneous assets to be scheduled through a common scheduler interface.

In some embodiments, the weather-forecast module may retrieve weather data from weather-forecast services. The weather data may include cloud-cover probability, precipitation probability, wind data, sea-state data, visibility data, sunlight data, atmospheric data, current data, and predicted weather data. The weather-forecast module may provide weather data to the database-management module and to the optimization module. The optimization module may use the weather data to select sensing modalities, avoid degraded optical acquisitions, prioritize synthetic-aperture-radar acquisitions, adjust expected success probabilities, and generate observation warnings when weather prevents suitable observation.

In some embodiments, the optimization module may generate an enhanced observation schedule from observation entries, observation opportunities, weather data, asset-availability data, asset-constraint data, and scheduling policies. The optimization module may score candidate assignments using expected risk reduction, observation value, footprint overlap, temporal-window match, modality fit, cost, delivery latency, tasking latency, duplicate-observation reduction, source confidence, and weather suitability. The optimization module may apply a greedy algorithm, mixed-integer linear-programming algorithm, dynamic-programming algorithm, tabu-search algorithm, genetic algorithm, metaheuristic algorithm, reinforcement-learning policy, rule-based process, or hybrid optimization process. The optimization module may output selected assignments to the tasking module and may store the enhanced observation schedule in the database.

In some embodiments, the tasking module may convert selected assignments into executable tasking instructions or retrieval instructions. A tasking instruction may include a target coordinate, area geometry, time window, sensing modality, acquisition mode, resolution requirement, pointing parameter, priority value, cost authorization, onboard-processing instruction, cancellation rule, and delivery endpoint. A retrieval instruction may include a repository identifier, geographic search window, temporal search window, modality filter, resolution filter, metadata filter, quality threshold, and delivery endpoint. The tasking module may transmit those instructions to the virtual constellation, third-party providers, owned assets, partner assets, repositories, or user-controlled asset interfaces.

In some embodiments, the post-processing module may evaluate scheduler results after tasking instructions or retrieval instructions have been issued. The post-processing module may receive provider metadata, acceptance status, rejection status, expected acquisition time, expected delivery time, footprint metadata, quality metadata, cost metadata, execution-status feedback, observation-output links, or limited feedback. The post-processing module may compare those results with the original observation entries and may identify unsatisfied observation demand. The post-processing module may generate observation warnings when scheduled observations are rejected, delayed, low quality, weather degraded, outside a required footprint, outside a required temporal window, or otherwise unable to satisfy observation demand.

In some embodiments, the scheduled observations output may include the enhanced observation schedule and associated execution information. The output may identify selected observation entries, assigned assets, scheduled observation actions, expected acquisition times, expected delivery times, sensing modalities, expected footprints, expected costs, confidence values, and provider-response states. The scheduled observations output may be transmitted to a decision support system, tasker, data-acquisition module, user interface, customer application programming interface, or automated response system. The scheduled observations output may also be stored in the database for subsequent monitoring iterations.

In some embodiments, the observation warnings output may identify high-risk observation entries that lack suitable observation coverage. An observation warning may correspond to a dark-spot record, failed tasking action, rejected provider request, unsuitable weather condition, unavailable sensing modality, excessive delivery latency, excessive cost, missing repository data, or insufficient confidence. The scheduler may transmit observation warnings to a user interface, decision support system, schedule-repair process, dynamic scheduler, or risk-map update process. The processing system may use observation warnings to preserve or increase risk values for unobserved high-risk spatiotemporal cells and to generate new observation entries for later monitoring iterations.

In some embodiments, FIG. 29 illustrates a complete scheduler loop from risk-map input to schedule output. The preprocessing module prepares risk and vessel inputs. The observation-opportunity module identifies what the virtual constellation may observe. The weather-forecast module supplies environmental constraints. The optimization module selects assignments between observation entries and observation opportunities. The tasking module issues tasking or retrieval instructions. The post-processing module evaluates whether the resulting scheduled observations satisfy the observation demand. The database and database-management module maintain the scheduler state across the loop.

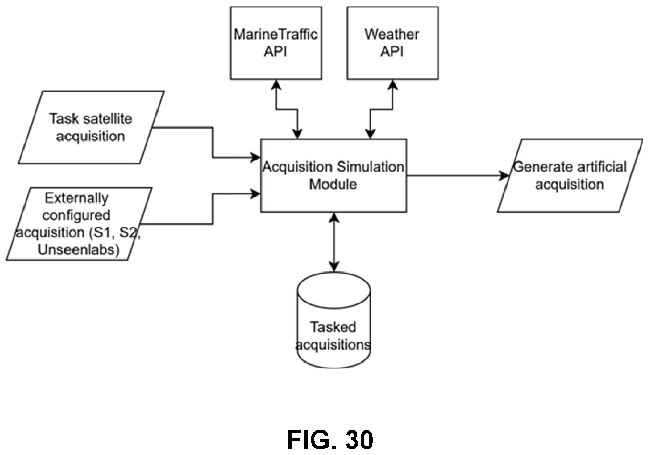

FIG. 30 illustrates an example acquisition simulation architecture is illustrated in accordance with some embodiments. The architecture may include an acquisition simulation module that receives a task satellite acquisition request, receives an externally configured acquisition request, queries vessel-traffic data through a vessel-traffic application programming interface, queries weather data through a weather application programming interface, accesses a tasked-acquisitions data store, and generates an artificial acquisition. The acquisition simulation module may be executed by a simulation processing system, a dynamic scheduler, a cloud processing system, a ground processing system, or another processing system in a maritime situational awareness system.

In some embodiments, the task satellite acquisition request may represent a scheduled observation action generated by a dynamic scheduler. The task satellite acquisition request may include an observation-entry identifier, target coordinate, area geometry, time window, sensing modality, resolution requirement, expected footprint, expected acquisition time, expected delivery time, provider identifier, asset identifier, cost authorization, and delivery endpoint. Rather than transmitting the task satellite acquisition request directly to a live sensing-asset provider, the processing system may route the task satellite acquisition request to the acquisition simulation module. This allows the system to evaluate a scheduled observation action without incurring actual acquisition cost or consuming live sensing-asset capacity.

In some embodiments, the externally configured acquisition request may represent an acquisition definition received from a user, provider model, test harness, or configuration file. The externally configured acquisition request may identify one or more external data sources, such as Sentinel-1, Sentinel-2, radio-frequency collection sources, commercial satellite sources, public satellite sources, or other observation sources. The externally configured acquisition request may include provider-specific metadata, orbital parameters, collection windows, footprints, sensing modality, expected resolution, cloud-cover limits, or historical acquisition identifiers. This input allows the acquisition simulation module to test dynamic-scheduler behavior against existing, planned, or hypothetical acquisition sources.

In some embodiments, the vessel-traffic application programming interface may provide vessel locations, vessel tracks, vessel identities, vessel classes, reported speeds, reported headings, reported courses, reported destinations, and automatic-identification-system data. The acquisition simulation module may query the vessel-traffic application programming interface using a geographic search window and temporal search window associated with a proposed acquisition. The acquisition simulation module may compare vessel positions or vessel tracks with a simulated acquisition footprint. The comparison may indicate whether a target vessel, vessel of interest, dark-vessel candidate, or maritime event of interest would likely fall within the simulated acquisition.

In some embodiments, the weather application programming interface may provide environmental data for a proposed acquisition. The weather data may include cloud-cover probability, precipitation probability, visibility data, illumination data, wind data, sea-state data, atmospheric data, current data, and weather forecast data. The acquisition simulation module may use the weather data to estimate whether a proposed optical acquisition would produce usable observation output. The acquisition simulation module may also use the weather data to compare optical acquisition opportunities with synthetic-aperture-radar, radio-frequency, acoustic, or other sensing modalities.

In some embodiments, the tasked-acquisitions data store may store prior tasking requests, simulated tasking requests, provider metadata, expected footprints, actual footprints, acquisition times, delivery times, sensing modalities, costs, provider responses, observation-output identifiers, and simulation results. The acquisition simulation module may retrieve records from the tasked-acquisitions data store to avoid duplicate simulated acquisitions, to reuse prior simulation results, or to compare a proposed acquisition with historical acquisition performance. The acquisition simulation module may also write new simulation results into the tasked-acquisitions data store for later scheduler evaluation, audit, training, or performance analysis.

In some embodiments, the acquisition simulation module may generate an artificial acquisition from the proposed acquisition request, vessel-traffic data, weather data, asset metadata, and prior tasked-acquisition records. The artificial acquisition may include a simulated sensor footprint, simulated acquisition time, simulated delivery time, simulated image-quality value, simulated target-capture result, simulated observation-output metadata, simulated cost, simulated confidence value, and simulated failure mode. The artificial acquisition may also include a synthetic image, thumbnail, feature list, vessel-detection record, route-intersection record, or event-detection record. The artificial acquisition may be formatted so that downstream data-processing and data-fusion modules process it in the same manner as real observation output.

In some embodiments, the acquisition simulation module may determine whether the artificial acquisition captures a maritime feature of interest. For example, the acquisition simulation module may project an expected satellite footprint onto a maritime geographic area during a proposed acquisition window and may retrieve vessel positions for the same region and time. The acquisition simulation module may calculate whether one or more vessel positions fall within the projected footprint after accounting for geolocation uncertainty, temporal uncertainty, vessel speed, vessel heading, and acquisition timing. The acquisition simulation module may output a capture probability, miss probability, geometric distance to target, expected risk reduction, and reason code.

In some embodiments, the artificial acquisition may be used to test a dynamic scheduler. The simulation processing system may run one or more scheduler configurations and may route each generated task satellite acquisition request to the acquisition simulation module. The acquisition simulation module may generate artificial acquisitions for each scheduler configuration and may produce a performance dataset. The performance dataset may include target-capture rate, capture probability, schedule feasibility, cost, latency, duplicate-acquisition rate, asset-utilization rate, weather-failure rate, dark-spot rate, unobserved-risk rate, and, when labeled reference data are available, validation metrics derived from comparison with the labeled reference data. The processing system may use the performance dataset to compare scheduler configurations or tune scheduling parameters.

In some embodiments, the acquisition simulation module may support training or validation of scheduling policies. The simulation processing system may generate simulated monitoring iterations in which risk maps, vessel positions, weather conditions, and asset availability change over time. The dynamic scheduler may generate scheduled observation actions for the simulated monitoring iterations. The acquisition simulation module may generate artificial acquisitions and simulated observation outputs for those scheduled observation actions. The resulting performance dataset may be used to train a machine-learning scheduling policy, adjust objective-function weights, validate a heuristic scheduler, or select an operational scheduler configuration.

In some embodiments, the acquisition simulation module may also support customer demonstrations, mission planning, virtual-constellation design, and cost estimation. A user may define a maritime geographic area, monitoring objective, sensing-asset pool, risk-map model, and budget constraint. The processing system may generate simulated scheduled observation actions and may use the acquisition simulation module to estimate observation coverage, likely vessel capture, expected latency, expected cost, and expected dark-spot rate. The results may be provided to a user as a schedule report, observability map, performance dataset, acquisition timeline, or recommended virtual-constellation configuration.

In some embodiments, FIG. 30 illustrates a way to evaluate acquisition decisions before live deployment. The acquisition simulation module may receive the same categories of inputs used for operational tasking, simulate the physical and environmental constraints of acquisition, and output artificial acquisitions that mimic real observation output. The artificial acquisitions may then pass through the same insight-generation, data-fusion, and risk-map update processes used by the operational system. This preserves the closed-loop structure of the maritime situational awareness system while reducing live tasking cost, provider load, and risk of inefficient asset use.

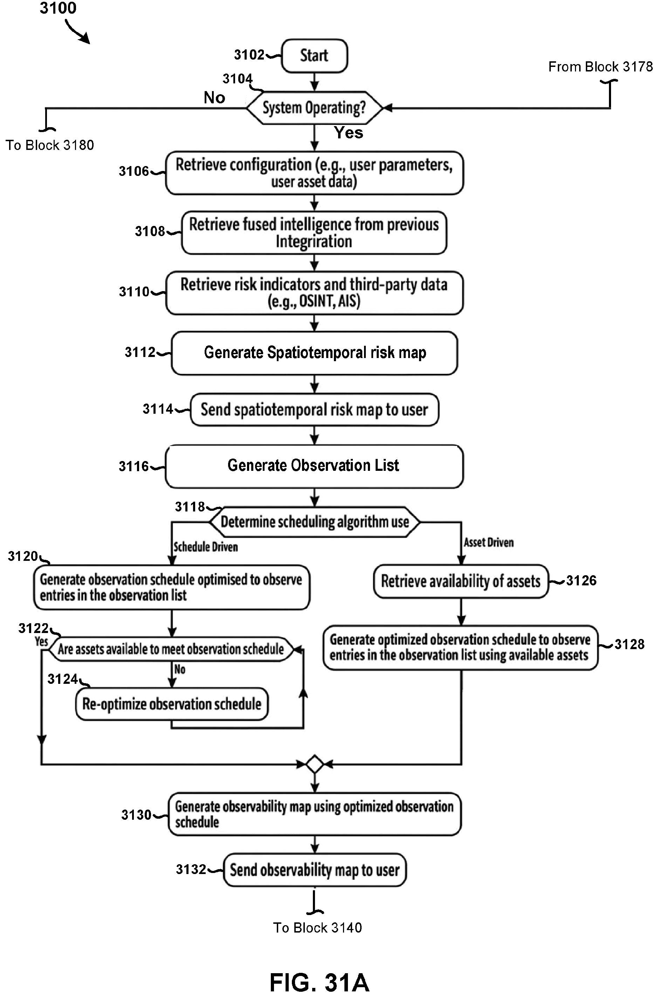

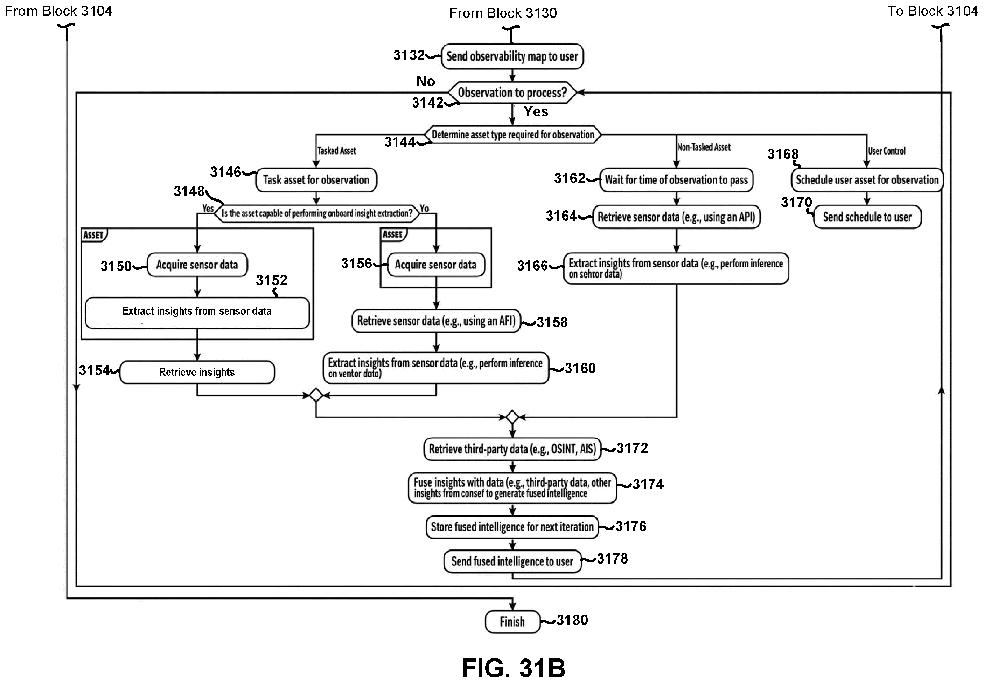

FIGs. 31A and 31B illustrates a method 3100 for controlling sensing assets to generate iterative maritime situational awareness for a maritime geographic area in accordance with some embodiments.

In block 3102, a processor in a maritime situational awareness system may start method 3100. For example, the processor may initialize a monitoring-iteration identifier, load system state from an operational data store, open one or more sensing-asset interfaces, and retrieve configuration pointers for a maritime geographic area.

In block 3104, a processor in the maritime situational awareness system may determine whether the maritime situational awareness system is operating. For example, the processor may check a service-state flag, operator authorization, mission activation status, maintenance status, network availability, budget availability, and access rights for external data sources and sensing-asset interfaces. When the system is operating, method 3100 may proceed to block 3106, and when the system is not operating, method 3100 may proceed to block 3180.

In block 3106, a processor in the maritime situational awareness system may retrieve configuration information for a current monitoring iteration. For example, the processor may retrieve user parameters, user asset data, area-of-interest boundaries, monitoring objectives, latency constraints, cost constraints, sensing-modality preferences, feature-of-interest definitions, event-of-interest definitions, tasking permissions, and delivery endpoints from a configuration database or user interface. The configuration information defines the operational scope and constraints used by later risk-map and scheduling operations.

In block 3108, a processor in the maritime situational awareness system may retrieve prior fused maritime intelligence from a preceding monitoring iteration. For example, the processor may query an operational data store for intelligence records, vessel tracks, event records, risk states, confidence values, prior alerts, prior observations, missed observations, dark-spot records, and previous schedule outcomes associated with the maritime geographic area. The prior fused maritime intelligence allows the current monitoring iteration to build on earlier observations rather than restart from static assumptions.

In block 3110, a processor in the maritime situational awareness system may retrieve maritime risk-indicator data and third-party data. For example, the processor may retrieve automatic identification system data, open-source intelligence data, radio-frequency intelligence data, weather data, predicted weather data, vessel-registry data, vessel-risk-list data, port-call data, route data, bathymetry data, current data, critical-infrastructure data, public-source reports, and partner-intelligence data through external data-source interfaces. These data inputs provide current and contextual signals for estimating maritime risk and observation value.

In block 3112, a processor in the maritime situational awareness system may generate a spatiotemporal risk map using the configuration information, the prior fused maritime intelligence, the maritime risk-indicator data, and the third-party data. For example, the processor may normalize the inputs into a common coordinate reference frame and temporal reference frame, assign risk values to spatiotemporal cells, combine static risk components with dynamic risk components, and store the resulting spatiotemporal risk map in memory. The spatiotemporal risk map provides a computer-readable representation of where and when observation would have value.

In block 3114, a processor in the maritime situational awareness system may send the spatiotemporal risk map to a user or user system. For example, the processor may transmit a map overlay, geospatial feature object, heat-map layer, risk-table object, application programming interface message, or dashboard object that represents risk values, temporal windows, source identifiers, and confidence values for selected spatiotemporal cells. The transmitted risk map allows a user to inspect the basis for scheduled observation actions and operational priorities.

In block 3116, a processor in the maritime situational awareness system may generate observation-list entries using the spatiotemporal risk map. For example, the processor may select spatiotemporal cells using an absolute risk threshold, global maximum search, local maximum search, adaptive threshold, temporal-plane search, expected risk-reduction value, customer-priority value, or policy rule. The processor may transform each selected spatiotemporal cell into an observation entry that includes a spatial target, temporal window, risk value, sensing-modality preference, resolution constraint, delivery-latency constraint, feature-of-interest identifier, and confidence constraint.

In block 3118, a processor in the maritime situational awareness system may determine which scheduling algorithm to use for the observation-list entries. For example, the processor may select a schedule-driven algorithm when observation demand should define a desired schedule before asset feasibility is checked, or may select an asset-driven algorithm when available assets should define feasible observation opportunities before observation entries are assigned. The selection allows the same system to operate across missions with different asset constraints, data-provider constraints, latency constraints, and user-control requirements.

In block 3120, a processor in the maritime situational awareness system may generate an observation schedule optimized to observe entries in the observation list using a schedule-driven algorithm. For example, the processor may order observation entries by risk value, time window, expected risk reduction, customer priority, and delivery-latency constraint, and may create a desired observation schedule before confirming that available sensing assets can satisfy that schedule. This schedule-driven path expresses desired monitoring coverage before the processor resolves feasibility with available assets.

In block 3122, a processor in the maritime situational awareness system may determine whether available sensing assets can meet the observation schedule. For example, the processor may compare the desired observation schedule with asset-availability data, asset-constraint data, sensing modalities, spatial footprints, tasking latencies, acquisition times, delivery times, weather constraints, cost constraints, downlink availability, and provider-interface constraints. When assets can meet the observation schedule, method 3100 may continue toward observability-map generation, and when assets cannot meet the observation schedule, method 3100 may proceed to block 3124.

In block 3124, a processor in the maritime situational awareness system may reoptimize the observation schedule. For example, the processor may relax a temporal window, substitute a sensing modality, switch from an electro-optical asset to a synthetic-aperture-radar asset, replace a tasking action with a retrieval action, reduce duplicate observations, defer a lower-risk observation entry, or generate a dark-spot record for an unsatisfied high-risk observation entry. Reoptimization allows the schedule to remain technically feasible while preserving high-value observation coverage.

In block 3126, a processor in the maritime situational awareness system may retrieve availability of assets for an asset-driven scheduling algorithm. For example, the processor may query owned-asset interfaces, partner-asset interfaces, third-party provider interfaces, repository interfaces, orbital-data sources, constellation-planning systems, ground-station schedules, user-controlled-asset calendars, and restricted-asset feedback channels. The retrieved availability data may identify candidate observation opportunities before the processor assigns observation entries to scheduled observation actions.

In block 3128, a processor in the maritime situational awareness system may generate an enhanced observation schedule to observe entries in the observation list using available assets. For example, the processor may match observation entries to candidate observation opportunities using footprint overlap, temporal-window compatibility, sensing-modality compatibility, delivery-latency compatibility, expected image quality, cost, expected success probability, confidence value, and expected risk reduction. The enhanced observation schedule may assign selected observation entries to tasking actions for taskable sensing assets or retrieval actions for non-tasked sensing assets.

In block 3130, a processor in the maritime situational awareness system may generate an observability map using the enhanced observation schedule. For example, the processor may project each scheduled observation action into a spatiotemporal map and encode expected acquisition time, expected delivery time, expected insight-availability time, sensing modality, asset identifier, confidence value, and coverage footprint for each scheduled observation action. The observability map identifies which high-risk areas and times will be observed and which high-risk areas and times remain unobserved.

In block 3132, a processor in the maritime situational awareness system may send the observability map to a user or user system. For example, the processor may transmit a map layer, schedule table, application programming interface message, dashboard object, alert object, or dark-spot report that identifies scheduled coverage, unscheduled coverage, expected delivery times, and observation warnings. This output allows the user to understand what the sensing-asset network can and cannot observe during the current monitoring iteration.

In block 3142, a processor in the maritime situational awareness system may determine whether an observation remains to be processed in the enhanced observation schedule. For example, the processor may query the operational data store for scheduled observation actions having a pending status, accepted status, acquired status, delivered status, or ready-for-processing status and may compare those statuses with observation-entry identifiers. When no observation remains to be processed, method 3100 may return to block 3104 for a later monitoring iteration, and when an observation remains to be processed, method 3100 may proceed to block 3144.

In block 3144, a processor in the maritime situational awareness system may determine an asset type required for the observation. For example, the processor may inspect the scheduled observation action and classify the associated asset as a taskable sensing asset, non-tasked sensing asset, user-controlled sensing asset, restricted sensing asset, onboard-processing-capable asset, or non-onboard-processing-capable asset. The asset-type determination routes each observation through a processing path that matches the control authority and data-delivery capability of the selected asset.

In block 3146, a processor in the maritime situational awareness system may task an asset for observation when the selected asset is a taskable sensing asset. For example, the processor may generate an asset-specific tasking instruction that includes an asset identifier, target coordinate, area geometry, time window, sensing modality, acquisition mode, resolution constraint, pointing parameter, priority value, cost authorization, onboard-processing instruction, cancellation rule, and delivery endpoint. The tasking instruction causes a new acquisition or onboard processing operation for an observation entry that requires active collection.

In block 3148, a processor in the maritime situational awareness system may determine whether the taskable sensing asset can perform onboard insight extraction. For example, the processor may check asset-constraint data, onboard-processor capability data, model-availability data, application-availability data, power-state data, memory-state data, communications-state data, and provider-permission data for the selected asset. When the asset can perform onboard insight extraction, method 3100 may use an onboard-insight path, and when the asset cannot perform onboard insight extraction, method 3100 may use a sensor-data retrieval path.

In block 3150, a processor in an onboard processing system of the taskable sensing asset may acquire sensor data for the observation. For example, the processor may control an electro-optical sensor, synthetic-aperture-radar sensor, radio-frequency sensor, acoustic sensor, thermal sensor, hyperspectral sensor, multispectral sensor, camera, radar, or other sensor according to the tasking instruction. The sensor data may include acquisition time, geolocation metadata, sensor attitude metadata, calibration metadata, sensing-modality metadata, and source-observation identifiers.

In block 3152, a processor in the onboard processing system of the taskable sensing asset may extract insights from the sensor data. For example, the processor may apply an onboard AI model, computer-vision algorithm, object detector, vessel detector, classifier, segmentation model, wake detector, radio-frequency emitter detector, anomaly scorer, fingerprint generator, or confidence-scoring routine to the sensor data. Onboard extraction reduces the amount of sensor data that must be downlinked before the maritime situational awareness system can generate fused intelligence.

In block 3154, a processor in the maritime situational awareness system may retrieve the onboard-extracted insights from the taskable sensing asset. For example, the processor may call a sensing-asset application programming interface, ground-station interface, inter-satellite-link relay, direct-to-ground link, provider endpoint, message queue, or communications-relay interface to obtain an insight packet. The insight packet may include a vessel location, bounding box, cropped image, feature vector, vessel class, candidate identifier, confidence value, sensing-modality identifier, acquisition time, and source-observation identifier.

In block 3156, a processor in a taskable sensing asset may acquire sensor data when onboard insight extraction is not used. For example, the processor may execute the tasking instruction and collect an image, image tile set, synthetic-aperture-radar product, radio-frequency product, acoustic product, video segment, or other sensor-data product. The sensor data may be stored onboard, transmitted to a ground station, transmitted to a provider system, or made available through a repository endpoint.

In block 3158, a processor in the maritime situational awareness system may retrieve sensor data from the taskable sensing asset or a provider system. For example, the processor may call a provider application programming interface, repository interface, ground-station interface, file-transfer endpoint, message queue, or communications-relay interface using an observation-output identifier, provider identifier, acquisition time, target region, and authentication token. The retrieved sensor data allows ground or cloud processing to perform insight extraction when the selected asset does not perform onboard inference.

In block 3160, a processor in the maritime situational awareness system may extract insights from the retrieved sensor data. For example, the processor may perform georeferencing, orthorectification, radiometric correction, speckle filtering, cloud masking, image registration, calibration, tiling, temporal alignment, feature detection, vessel localization, vessel classification, vessel identification, wake detection, radio-frequency emitter localization, acoustic-event extraction, anomaly scoring, and confidence scoring. The extracted insights convert raw or processed sensor data into structured observation information suitable for data fusion.

In block 3162, a processor in the maritime situational awareness system may wait for a time of observation to pass when the selected asset is a non-tasked sensing asset. For example, the processor may monitor a planned acquisition feed, repository publication schedule, provider availability feed, public data-release schedule, AIS update interval, RFINT repository update interval, weather-product update interval, or other source-specific delivery schedule. This path allows the system to use existing or planned observation data without issuing a new tasking action.

In block 3164, a processor in the maritime situational awareness system may retrieve sensor data from the non-tasked sensing asset after the time of observation has passed. For example, the processor may query a repository using a geographic search window, temporal search window, sensing-modality filter, resolution filter, cloud-cover filter, quality threshold, provider identifier, collection identifier, and delivery endpoint. The repository may provide historical imagery, planned imagery, radio-frequency intelligence data, AIS data, weather data, acoustic data, port-camera data, or other observation data.

In block 3166, a processor in the maritime situational awareness system may extract insights from the sensor data retrieved from the non-tasked sensing asset. For example, the processor may run the retrieved data through the same insight-generation pipeline used for tasked sensor data, including preprocessing, feature detection, vessel detection, vessel localization, classification, fingerprint generation, anomaly detection, absence determination, and confidence scoring. Using a common insight-generation format allows non-tasked data and tasked data to be fused in the same intelligence workflow.

In block 3168, a processor in the maritime situational awareness system may schedule a user-controlled sensing asset for observation. For example, the processor may generate a recommended observation schedule for a user-operated vessel, drone, aircraft, buoy, coastal sensor, port camera, seabed sensor, acoustic sensor, ground radar, or other customer asset. The recommended observation schedule may include a target region, route, waypoint set, observation time, sensing modality, collection parameters, expected risk reduction, and feedback format.

In block 3170, a processor in the maritime situational awareness system may send the user-controlled asset schedule to a user or operator. For example, the processor may transmit the recommended observation schedule through a user interface, application programming interface, decision-support system, email message, dashboard notification, command system, or asset-operator interface.

In block 3172, a processor in the maritime situational awareness system may retrieve third-party data for use with the extracted insights. For example, the processor may retrieve automatic identification system data, open-source intelligence data, radio-frequency intelligence data, vessel-registry data, vessel-risk-list data, route data, port-call data, manifest data, weather data, bathymetry data, current data, public-source data, and partner-intelligence data for a spatial search window and temporal search window associated with the observation.

In block 3174, a processor in the maritime situational awareness system may fuse insights with data to generate current fused maritime intelligence. For example, the processor may align the extracted insights and third-party data by time, location, uncertainty, and source confidence and may perform AIS matching, vessel-registry matching, fingerprint matching, route comparison, RFINT correlation, event-rule evaluation, anomaly scoring, and conflict resolution. The current fused maritime intelligence may indicate presence, absence, identity, behavior, dark-vessel state, spoofing state, event state, anomaly state, confidence value, or risk state for a maritime feature of interest or maritime event of interest.

In block 3176, a processor in the maritime situational awareness system may store the current fused maritime intelligence for a next monitoring iteration. For example, the processor may write intelligence records, vessel tracks, event records, risk-state updates, confidence values, supporting-source identifiers, schedule outcomes, dark-spot records, and observation-output references into an operational data store with a monitoring-iteration identifier. The stored current fused maritime intelligence may become prior fused maritime intelligence when method 3100 returns to the next execution of block 3108.

In block 3178, a processor in the maritime situational awareness system may send the current fused maritime intelligence to a user or user system. For example, the processor may transmit an alert record, intelligence record, map overlay, vessel-track update, predicted-route object, thumbnail, image chip, observability update, recommended action, or application programming interface message. After transmission, the processor may return method 3100 to block 3104 so that the system can determine whether to continue with a subsequent monitoring iteration.

In block 3180, a processor in the maritime situational awareness system may finish method 3100. For example, the processor may close the monitoring-iteration record, persist final schedule state, store unprocessed-observation status, close or pause sensing-asset interfaces, record provider responses, and generate an audit record. Method 3100 may finish when the system is not operating, when a monitoring objective is complete, when a user terminates monitoring, when a budget constraint prevents further monitoring, or when no further observation processing is authorized.

Various embodiments include methods of controlling sensing assets to generate iterative maritime situational awareness for a maritime geographic area, the method which may include receiving maritime monitoring inputs for a current monitoring iteration, the maritime monitoring inputs which may include configuration information for the maritime geographic area, maritime risk-indicator data from one or more external data sources, asset-availability data for a plurality of sensing assets, asset-constraint data for the plurality of sensing assets, and prior fused maritime intelligence generated during a preceding monitoring iteration, generating, from the maritime monitoring inputs, a spatiotemporal risk map which may include a plurality of spatiotemporal cells for the maritime geographic area, each spatiotemporal cell of the plurality of spatiotemporal cells which may include a spatial coordinate, a temporal coordinate, and a risk value, generating, from the spatiotemporal risk map, a plurality of observation entries by transforming selected spatiotemporal cells of the plurality of spatiotemporal cells into the plurality of observation entries based on the risk values, each observation entry of the plurality of observation entries identifying a corresponding selected spatiotemporal cell of the selected spatiotemporal cells, generating an enhanced observation schedule by transforming the plurality of observation entries, the asset-availability data, and the asset-constraint data into assignments of selected observation entries of the plurality of observation entries to respective scheduled observation actions, each scheduled observation action of the respective scheduled observation actions which may include a tasking action for a taskable sensing asset of the plurality of sensing assets or a retrieval action for observation data from a non-tasked sensing asset of the plurality of sensing assets, causing, through one or more sensing-asset interfaces, execution of the respective scheduled observation actions in accordance with the enhanced observation schedule, obtaining, through the one or more sensing-asset interfaces, observation output for the selected observation entries, the observation output which may include sensor data or sensor-derived insight data, retrieving contextual maritime data from the one or more external data sources for the selected observation entries, generating current fused maritime intelligence by transforming the observation output and the contextual maritime data into an intelligence record, the intelligence record indicating a presence, an absence, an identity, a behavior, or a risk state of a maritime feature of interest or a maritime event of interest, and generating an updated spatiotemporal risk map for a subsequent monitoring iteration from the spatiotemporal risk map and the current fused maritime intelligence, the updated spatiotemporal risk map which may include a modified risk value for at least one spatiotemporal cell of the plurality of spatiotemporal cells.

Some embodiments may further include receiving the configuration information as one or more of an area-of-interest boundary, a monitoring objective, a feature-of-interest definition, a latency requirement, a budget constraint, a sensing-modality requirement, a tasking permission, a user preference, or a user-controlled asset definition. Some embodiments may further include receiving the maritime risk-indicator data as one or more of automatic identification system data, radio-frequency intelligence data, weather data, predicted weather data, vessel-registry data, vessel-risk-list data, route data, port-call data, manifest data, bathymetry data, current data, historical incident data, social-media data, or critical-infrastructure data. Some embodiments may further include receiving the asset-constraint data as one or more of sensing modality, spatial coverage, swath width, ground sample distance, resolution, pointing constraint, tasking latency, observation latency, delivery latency, weather sensitivity, sunlight requirement, onboard-processing capability, communications availability, downlink availability, cost, budget limit, tasking policy, usage permission, or cancellation rule. Some embodiments may further include normalizing the maritime monitoring inputs into a common spatiotemporal reference frame before generating the spatiotemporal risk map.

Some embodiments may further include generating a static risk component from fixed maritime features within the maritime geographic area, generating a dynamic risk component from moving maritime features within the maritime geographic area, and generating the spatiotemporal risk map by combining the static risk component and the dynamic risk component. Some embodiments may further include generating the static risk component from one or more of underwater infrastructure, offshore energy infrastructure, port infrastructure, shipping lanes, chokepoints, maritime boundaries, restricted zones, or customer-defined high-value regions. Some embodiments may further include generating the dynamic risk component from one or more of predicted vessel locations, observed vessel locations, vessel tracks, route deviations, radio-frequency detections, radar detections, acoustic detections, weather effects, current effects, port-departure indicators, or anomaly indicators.

Some embodiments may further include generating one or more predicted future vessel paths for a vessel of interest from one or more of course, speed, heading, automatic identification system data, historical track data, weather data, bathymetry data, route data, or vessel-class data, and assigning one or more risk values to one or more spatiotemporal cells of the plurality of spatiotemporal cells based on the one or more predicted future vessel paths. Some embodiments may further include generating an anomaly score for a vessel of interest from one or more of a route deviation, a speed change, a heading change, a loitering pattern, an automatic-identification-system outage, an unexpected proximity event, or a mismatch between sensor-derived vessel information and reported vessel information, and modifying at least one risk value of the plurality of spatiotemporal cells based on the anomaly score. Some embodiments may further include generating the spatiotemporal risk map by weighting and combining a plurality of risk maps associated with different risk sources, different customers, different missions, different sensing modalities, or different temporal horizons. Some embodiments may further include selecting the selected spatiotemporal cells using one or more of an absolute risk threshold, a global maximum search, a local maximum search, an adaptive threshold, a temporal-plane selection process, a spatial-separation constraint, a temporal-separation constraint, or an expected risk-reduction value.

Some embodiments may further include generating each observation entry of the plurality of observation entries to include an observation-entry identifier, a spatial target, a temporal window, a risk value, a sensing-modality preference, a resolution requirement, a delivery-latency requirement, and a feature-of-interest identifier. Some embodiments may further include merging overlapping observation entries of the plurality of observation entries based on spatial overlap, temporal overlap, modality compatibility, feature-of-interest commonality, customer-permission compatibility, or delivery-latency compatibility. Some embodiments may further include suppressing an observation entry of the plurality of observation entries from the enhanced observation schedule based on recent observation output satisfying a risk, timeliness, modality, quality, or delivery constraint for the observation entry. Some embodiments may further include retrieving the asset-availability data from one or more of an asset-owner interface, an asset-operator interface, a constellation-planning interface, a repository-search interface, a user-provided calendar, an orbital-propagation data source, or a sensing-asset schedule database.

Some embodiments may further include generating candidate observation opportunities for the plurality of sensing assets from the asset-availability data and the asset-constraint data, each candidate observation opportunity of the candidate observation opportunities which may include an asset identifier, a candidate observation time, a candidate delivery time, a footprint, a modality, a cost, and an expected success probability. Some embodiments may further include generating the enhanced observation schedule by selecting from the candidate observation opportunities according to an objective function that uses one or more of expected risk reduction, expected observation value, coverage of high-risk cells, cost, delivery latency, duplicate-observation reduction, confidence, modality suitability, or feature-of-interest observability. Some embodiments may further include generating a desired observation schedule from the plurality of observation entries, determining that available sensing assets represented by the asset-availability data cannot satisfy the desired observation schedule, and regenerating the enhanced observation schedule by relaxing a timing constraint, substituting a sensing modality, selecting a lower-risk observation entry, replacing a tasking action with a retrieval action, or generating an unobserved-risk indication.

Some embodiments may further include generating candidate observation opportunities from the asset-availability data before assigning the selected observation entries to the respective scheduled observation actions, and selecting the selected observation entries based on compatibility between the plurality of observation entries and the candidate observation opportunities. Some embodiments may further include receiving an execution-change signal identifying a weather change, a provider rejection, a budget change, a sensing-asset status change, a delivery-latency change, a new high-risk observation entry, or a changed vessel prediction, and regenerating at least a portion of the enhanced observation schedule based on the execution-change signal. Some embodiments may further include generating, from the enhanced observation schedule, an observability map representing scheduled observation coverage for the maritime geographic area during one or more temporal windows. Some embodiments may further include generating the observability map to represent one or more of expected acquisition time, expected delivery time, expected insight-availability time, expected sensing modality, expected confidence, or expected feature-of-interest observability.

Some embodiments may further include identifying an unobserved high-risk spatiotemporal cell from a comparison of the spatiotemporal risk map and the observability map, and generating a dark-spot record for the unobserved high-risk spatiotemporal cell. Some embodiments may further include generating an asset-specific tasking instruction for the taskable sensing asset, the asset-specific tasking instruction which may include a target coordinate, an area geometry, a time window, a sensing modality, an acquisition mode, a resolution requirement, a priority, a cost authorization, and a delivery endpoint, and transmitting, through the one or more sensing-asset interfaces, the asset-specific tasking instruction to an asset-control interface for the taskable sensing asset. Some embodiments may further include generating a retrieval query for the non-tasked sensing asset, the retrieval query which may include a geographic query, a temporal query, a modality filter, a resolution filter, a metadata filter, and a delivery endpoint, and transmitting, through the one or more sensing-asset interfaces, the retrieval query to a repository interface for the non-tasked sensing asset.

Some embodiments may further include receiving the asset-availability data for a user-controlled sensing asset of the plurality of sensing assets, and causing execution of at least one scheduled observation action of the respective scheduled observation actions by transmitting a recommended observation schedule to an operator interface for the user-controlled sensing asset. Some embodiments may further include receiving limited feedback from a restricted sensing asset of the plurality of sensing assets, and generating the updated spatiotemporal risk map using the limited feedback without receiving raw sensor data from the restricted sensing asset. Some embodiments may further include translating at least one scheduled observation action of the respective scheduled observation actions into a provider-specific request format required by a provider interface, the provider-specific request format which may include one or more of a point target, an area target, a wide time window, a narrow time window, a provisional feasibility request, a final tasking request, or an email-format request.

Some embodiments may further include generating a provisional tasking request for the taskable sensing asset, receiving provider metadata for the provisional tasking request, evaluating the provider metadata against the selected observation entries, and cancelling the provisional tasking request based on a mismatch between the provider metadata and the selected observation entries. In some embodiments, the just-in-time tasking update may include a pointing-parameter update for selecting a final observation footprint within a previously scheduled or reserved acquisition opportunity, in which the pointing-parameter update may include a roll-angle update, a pitch-angle update, a yaw-angle update, or a combination thereof. Some embodiments may further include transmitting, through the one or more sensing-asset interfaces, an onboard-processing instruction to a taskable sensing asset of the plurality of sensing assets, and obtaining, through the one or more sensing-asset interfaces, the sensor-derived insight data in the observation output, the sensor-derived insight data being produced before delivery to the processing system.

Some embodiments may further include obtaining the sensor-derived insight data through one or more of a ground-station link, a tactical downlink, an inter-satellite link, a direct-to-ground link, or a low-latency communications link. Some embodiments may further include extracting the sensor-derived insight data from the sensor data in the observation output. Some embodiments may further include extracting the sensor-derived insight data by performing one or more of vessel detection, vessel localization, vessel segmentation, vessel classification, vessel identification, vessel-size estimation, vessel-heading estimation, vessel-speed estimation, wake detection, thermal-trail detection, exhaust detection, radio-frequency emitter localization, acoustic-event extraction, or port-activity extraction.

Some embodiments may further include retrieving the contextual maritime data within a spatial search window and a temporal search window associated with the selected observation entries, and aligning the contextual maritime data with the observation output through temporal interpolation, spatial interpolation, coordinate transformation, uncertainty modeling, source-confidence weighting, stale-data filtering, or duplicate-message removal. Some embodiments may further include matching sensor-derived vessel information in the observation output with automatic-identification-system vessel information in the contextual maritime data, and generating the current fused maritime intelligence based on a matching score between the sensor-derived vessel information and the automatic-identification-system vessel information. Some embodiments may further include interpolating one or more automatic-identification-system vessel positions to an acquisition time associated with the observation output, comparing the one or more automatic-identification-system vessel positions with one or more sensor-derived vessel positions in the observation output, and generating the matching score from the comparison.

Some embodiments may further include refining a geolocation estimate for the observation output using a plurality of matching scores between sensor-derived vessel information and automatic-identification-system vessel information, and regenerating at least one intelligence record of the current fused maritime intelligence using the refined geolocation estimate. Some embodiments may further include generating a dark-vessel indication based on a sensor-derived vessel detection in the observation output lacking a matching automatic-identification-system vessel report in the contextual maritime data. Some embodiments may further include generating a spoofing indication based on a mismatch between sensor-derived vessel information in the observation output and automatic-identification-system vessel information in the contextual maritime data.

Some embodiments may further include generating a maritime event indication from the current fused maritime intelligence, the maritime event indication identifying one or more of a ship-to-ship transfer, a route deviation, a loitering event, a proximity event near critical infrastructure, a sanctioned-vessel event, a port-activity event, or an unauthorized-zone event. Some embodiments may further include decreasing the modified risk value in the updated spatiotemporal risk map based on absence of the maritime feature of interest or the maritime event of interest from an observed spatiotemporal cell, and increasing another risk value in the updated spatiotemporal risk map based on a detected location, a detected trajectory, or a predicted trajectory of the maritime feature of interest or the maritime event of interest. Some embodiments may further include preserving a risk value for an unobserved spatiotemporal cell of the plurality of spatiotemporal cells based on failure to obtain observation output for the unobserved spatiotemporal cell within a required time window, and increasing a priority for a future observation entry associated with the unobserved spatiotemporal cell.

Some embodiments may further include generating an alert record based on the current fused maritime intelligence, the alert record which may include an alert type, a location, a time, a confidence value, a supporting-source identifier, and a recommended action, and transmitting the alert record to a user interface, an application programming interface endpoint, an email system, a decision-support system, or an automated response system. Some embodiments may further include generating a decision-support output which may include the enhanced observation schedule, an observability map, a dark-spot record, the current fused maritime intelligence, or the updated spatiotemporal risk map, and receiving an operator decision approving, rejecting, modifying, or partially enacting at least one scheduled observation action of the respective scheduled observation actions. Some embodiments may further include receiving customer-specific monitoring inputs for a plurality of customers, generating customer-specific risk maps for the plurality of customers, and generating the spatiotemporal risk map by weighting and combining the customer-specific risk maps according to customer priorities, service-level requirements, budget constraints, or mission priorities.

Some embodiments may further include generating a shared observation entry based on overlapping spatiotemporal risk in two or more customer-specific risk maps of the customer-specific risk maps, and assigning the shared observation entry to one scheduled observation action of the respective scheduled observation actions. Some embodiments may further include recording the maritime monitoring inputs, the spatiotemporal risk map, the plurality of observation entries, the enhanced observation schedule, the respective scheduled observation actions, the observation output, the contextual maritime data, the current fused maritime intelligence, and the updated spatiotemporal risk map in an operational data store. Some embodiments may further include linking records in the operational data store by one or more of a monitoring-iteration identifier, an observation-entry identifier, a scheduled-observation-action identifier, an asset identifier, a feature-of-interest identifier, an event-of-interest identifier, a customer identifier, or a timestamp.

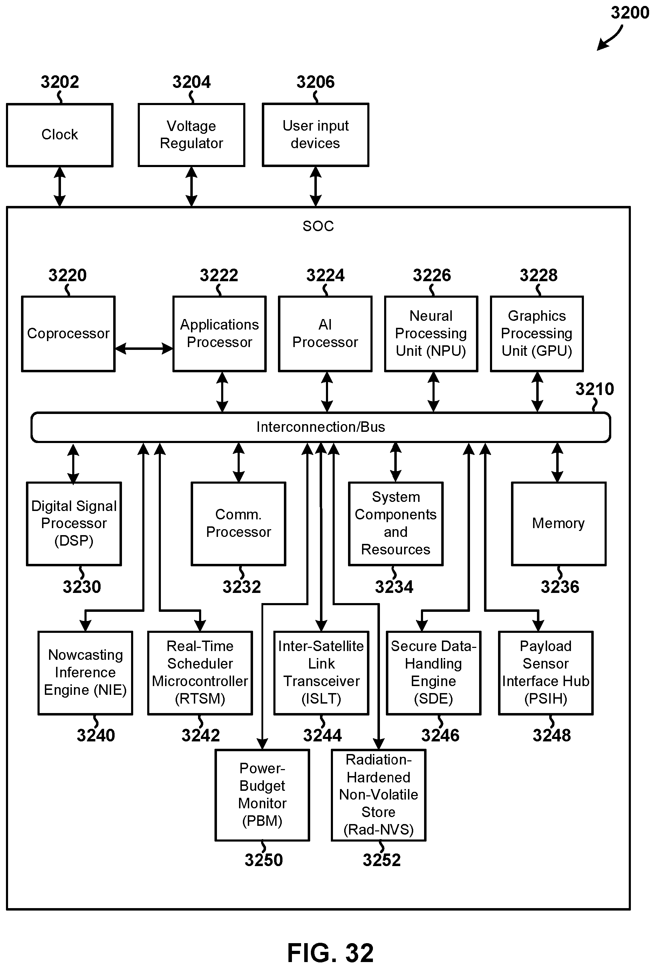

Various embodiments may be implemented in single-processor or multiprocessor computing systems, including a system-on-chip (SoC), a system-in-package (SiP), an onboard spacecraft computer, an edge computing device, a ground-station computer, a cloud server, or a distributed processing system. FIG. 32 illustrates an example SoC 3200 architecture suitable for use in a sensing asset, communications relay, edge node, ground node, or other computing device configured to support maritime situational awareness operations. In some embodiments, SoC 3200 may execute onboard insight extraction, observation-output packaging, secure transmission, dynamic scheduling, risk-map updating, sensing-asset control, weather- or space-weather-informed task ranking, command-packet processing, quality-metric reporting, or low-latency feedback operations.

In the example illustrated in FIG. 32, SoC 3200 includes a clock 3202, a voltage regulator 3204, control input interfaces 3206, an interconnection or bus 3210, a coprocessor 3220, an applications processor 3222, an AI processor 3224, a neural processing unit (NPU) 3226, a graphics processing unit (GPU) 3228, a digital signal processor (DSP) 3230, a communications processor 3232, system components and resources 3234, memory 3236, a nowcasting inference engine (NIE) 3240, a real-time observation scheduler microcontroller (RTSM) 3242, an inter-satellite or direct-to-ground transceiver 3244, a secure data-handling engine 3246, a payload sensor interface hub 3248, a power-budget monitor 3250, and a radiation-hardened nonvolatile store 3252. In some embodiments, SoC 3200 may also include a risk-map engine, a command-packet execution engine, a quality-metric generator, a hazard-evaluation engine, a link-margin evaluation engine, and an observation-output packaging engine (not illustrated separately in FIG. 32). The processors and components may communicate through interconnection or bus 3210, which may include a network-on-chip, crossbar, peripheral bus, shared memory fabric, direct-memory-access fabric, or other data-transfer architecture.

In some embodiments, one or more processors in SoC 3200 may execute processor-executable instructions to perform arithmetic operations, logical operations, control operations, input-output operations, inference operations, scheduling operations, and data-fusion operations. The applications processor 3222 may coordinate high-level mission logic for a monitoring iteration, including receiving observation entries, managing tasking instructions, controlling payload interfaces, and routing observation output. The AI processor 3224 and neural processing unit 3226 may execute trained models for vessel detection, vessel classification, vessel localization, anomaly scoring, fingerprint generation, cloud screening, sea-state interpretation, or onboard extraction of sensor-derived insight data. The coprocessor 3220, graphics processing unit 3228, and digital signal processor 3230 may accelerate image preprocessing, synthetic-aperture-radar preprocessing, radio-frequency processing, spectral processing, geometric transformation, compression, and map-tile manipulation.

The clock 3202 may generate one or more timing references for synchronized acquisition, inference, packet generation, tasking-window execution, communications scheduling, and timestamping of observation output. The voltage regulator 3204 may provide regulated voltage domains for processors, payload interfaces, memory, communications circuitry, and accelerator blocks within SoC 3200. The control input interfaces 3206 may receive encoded control signals, mission updates, tasking updates, operator commands, provider commands, or user-controlled asset inputs through electrical, serial, radio, optical, or network interfaces. The interconnection or bus 3210 may transfer sensor data, risk-map tiles, observation entries, schedule tables, tasking instructions, insight packets, contextual maritime data, and control messages among the components of SoC 3200.

The applications processor 3222 may execute an operating system, runtime environment, or mission application that coordinates the other components of SoC 3200. For example, the applications processor 3222 may retrieve an enhanced observation schedule from memory 3236, issue a sensor command through payload sensor interface hub 3248, invoke neural processing unit 3226 to detect maritime features, request communications resources from communications processor 3232, and store an onboard-extracted insight packet in radiation-hardened nonvolatile store 3252. In some embodiments, the applications processor 3222 may also manage state transitions for a monitoring iteration, such as acquisition pending, acquisition complete, inference complete, packet queued, packet transmitted, and feedback received.

The AI processor 3224 and neural processing unit 3226 may accelerate machine-learning inference for maritime observation output. For example, AI processor 3224 or neural processing unit 3226 may process electro-optical imagery, synthetic-aperture-radar data, hyperspectral data, multispectral data, thermal data, radio-frequency data, acoustic data, or video data. The inference output may include a vessel detection, bounding box, segmentation mask, vessel class, vessel size estimate, heading estimate, speed estimate, wake indicator, radio-frequency emitter indicator, anomaly score, fingerprint, confidence value, or absence determination. The inference output may be used by the observation-output packaging engine 3256 to generate a compact insight packet for low-latency transmission.

The graphics processing unit 3228 may accelerate raster operations, image-tile operations, geometric transformations, map overlays, visualization preprocessing, and parallel array operations. In some embodiments, graphics processing unit 3228 may support generation or manipulation of risk-map tiles, observability-map tiles, geospatial image chips, annotated thumbnails, confidence maps, segmentation overlays, or other data products. The digital signal processor 3230 may filter sensor samples, perform transforms, estimate signal characteristics, compress payload data, process radio-frequency observations, process acoustic observations, or extract signal features for fusion with other maritime data. These accelerators may reduce processing latency and power consumption for onboard or edge insight extraction.

The communications processor 3232 may manage packet routing, baseband processing, waveform control, error-correction coding, retransmission policies, and communications scheduling for links to ground systems, relay assets, partner assets, user systems, or other spacecraft. The inter-satellite or direct-to-ground transceiver 3244 may transmit observation output, sensor-derived insight data, acquisition confirmations, provider metadata, tasking updates, and low-latency feedback through an inter-satellite link, direct-to-ground link, ground-station link, tactical downlink, relay link, or provider network link. In some embodiments, communications processor 3232 and transceiver 3244 may prioritize compact insight packets over full-scene sensor data when a delivery-latency constraint applies.

The system components and resources 3234 may coordinate peripheral bridging, reset control, interrupt control, oscillator control, direct-memory access, watchdog monitoring, thermal monitoring, and mixed-signal housekeeping for SoC 3200. The memory 3236 may store executable instructions, sensor data, processed sensor data, model parameters, risk-map tiles, observation entries, enhanced observation schedules, asset-constraint data, asset-availability data, tasking instructions, onboard-extracted insight packets, contextual maritime data, cryptographic material, and state data for a monitoring iteration. The radiation-hardened nonvolatile store 3252 may retain model binaries, schedule archives, fingerprint data, risk-map snapshots, boot images, security metadata, and recovery data across power interruption or radiation events.

The nowcasting inference engine 3240 may generate environmental or acquisition-quality predictions used by onboard or edge scheduling operations. For example, nowcasting inference engine 3240 may receive cloud data, illumination data, sea-state data, atmospheric data, wind data, current data, sensor-quality data, or recent observation metadata and may output near-term prediction tiles for candidate observation windows. The real-time observation scheduler microcontroller 3242 may use the prediction tiles, observation entries, asset-state data, power state, memory state, communications state, and tasking deadlines to select or adjust acquisition operations. In some embodiments, the real-time observation scheduler microcontroller 3242 may issue just-in-time tasking updates, sensor-activation commands, onboard-processing commands, or communications-priority commands before an acquisition window.

In some embodiments, nowcasting inference engine 3240 and real-time observation scheduler microcontroller 3242 may support weather- and space-weather-informed onboard scheduling. The nowcasting inference engine 3240 may receive weather tiles, space-weather tiles, radiation telemetry, thermal telemetry, cloud data, illumination data, sea-state data, atmospheric data, wind data, current data, sensor-quality data, recent observation metadata, or ground-generated minute-scale nowcasts and may output near-term prediction tiles for candidate observation windows, communications windows, protective-mode windows, or orbital access windows. The real-time observation scheduler microcontroller 3242 may use the prediction tiles, observation entries, command packets, time tags, asset-state data, power state, memory state, communications state, hazard probability, link-margin values, and tasking deadlines to select, adjust, defer, prune, or execute acquisition operations, communications operations, onboard-processing operations, or protective operations. In some embodiments, the real-time observation scheduler microcontroller 3242 may merge a selected task from a time-tagged command packet into an onboard timeline and may coordinate attitude maneuvers, payload operations, sensor operations, communications operations, safe-mode operations, protective-mode operations, and quality-metric reporting within deterministic real-time constraints.

The secure data-handling engine 3246 may protect tasking instructions, observation output, customer data, cryptographic keys, model binaries, and transmitted insight packets. For example, secure data-handling engine 3246 may perform authenticated encryption, decryption, signature verification, key exchange, secure boot verification, access-control enforcement, memory-region protection, and tamper-event logging. The secure data-handling engine 3246 may also enforce data-sharing rules for restricted sensing assets, user-controlled assets, partner assets, or customer-specific outputs. This allows SoC 3200 to support sensitive maritime situational awareness missions while controlling access to raw sensor data and fused maritime intelligence.

The payload sensor interface hub 3248 may interface with one or more sensors or payloads of a sensing asset. For example, payload sensor interface hub 3248 may receive data streams from an electro-optical camera, synthetic-aperture-radar payload, radio-frequency receiver, hyperspectral sensor, multispectral sensor, thermal sensor, acoustic sensor, radar, navigation sensor, timing sensor, or attitude sensor. The payload sensor interface hub 3248 may gate sensor clocks, trigger acquisition, buffer sensor data, attach acquisition metadata, perform quality checks, and route selected sensor data to AI processor 3224, neural processing unit 3226, digital signal processor 3230, memory 3236, or observation-output packaging engine 3256. In some embodiments, payload sensor interface hub 3248 may reject, downsample, crop, or reprioritize low-quality sensor data based on schedule requirements or quality thresholds.

The power-budget monitor 3250 may monitor power resources for sensing, processing, storage, and communications operations. For example, power-budget monitor 3250 may sample solar-array output, battery state of charge, load current, thermal state, processor utilization, payload power draw, and communications power draw. The power-budget monitor 3250 may provide an energy-margin value to real-time observation scheduler microcontroller 3242 so that scheduled observation actions do not exceed an available power budget. In some embodiments, the real-time observation scheduler microcontroller 3242 may defer full-scene downlink, select compact insight-packet delivery, reduce inference precision, skip a low-priority acquisition, or switch sensing modes in response to the energy-margin value.

Some embodiments may include a risk-map engine configured to generate, update, or store a local risk-map representation for onboard or edge decision-making. For example, risk-map engine may receive spatiotemporal risk-map tiles, observation entries, predicted route data, feature-of-interest data, weather tiles, asset-state data, or prior fused maritime intelligence from a ground processing system. The risk-map engine may select a high-risk spatiotemporal cell, update an onboard priority value after a detection, or provide an acquisition-priority input to real-time observation scheduler microcontroller 3242. In some embodiments, risk-map engine may maintain a reduced risk-map representation rather than a full maritime-region risk map to conserve memory.

Some embodiments may include an observation-output packaging engine configured to generate compact observation-output products for low-latency transmission. For example, observation-output packaging engine may combine a detection result, bounding box, cropped image, segmentation mask, feature vector, fingerprint, confidence value, acquisition time, location, sensing-modality identifier, sensor identifier, and source-observation identifier into an onboard-extracted insight packet. The observation-output packaging engine may also generate a thumbnail, image chip, compressed pixel set, encrypted payload, or application-programming-interface-ready message. In some embodiments, observation-output packaging engine may reduce downlink volume by transmitting the insight packet before or instead of a full sensor-data product.

In some embodiments, SoC 3200 may implement the onboard portion of the closed-loop maritime situational awareness process. The real-time observation scheduler microcontroller 3242 may receive a scheduled observation action. The payload sensor interface hub 3248 may trigger a sensor acquisition. The AI processor 3224 or neural processing unit 3226 may extract sensor-derived insight data from the sensor data. The observation-output packaging engine 3256 may generate an insight packet. The inter-satellite or direct-to-ground transceiver 3244 may transmit the insight packet to a ground processing system. The ground processing system may fuse the insight packet with contextual maritime data and may update a spatiotemporal risk map for a subsequent monitoring iteration.

In some embodiments, SoC 3200 may implement a ground, edge, or relay portion of the closed-loop maritime situational awareness process. For example, SoC 3200 may receive observation output from one or more sensing assets, extract sensor-derived insight data, retrieve contextual maritime data, generate current fused maritime intelligence, generate an updated spatiotemporal risk map, generate observation entries, and generate or assist generation of an enhanced observation schedule. SoC 3200 may also translate scheduled observation actions into provider-specific tasking requests, repository queries, user-controlled asset schedules, or restricted-asset feedback requests. Thus, the same architecture may support onboard processing, edge processing, ground processing, cloud processing, or distributed processing.

For the sake of clarity and ease of presentation, the methods discussed in this application are presented as separate embodiments. While each method is delineated for illustrative purposes, it should be clear to those skilled in the art that various combinations or omissions of these methods, blocks, operations, etc. could be used to achieve a desired result or a specific outcome. It should also be understood that the descriptions herein do not preclude the integration or adaptation of different embodiments of the methods, blocks, operations, etc. from producing a modified or alternative result or solution. The presentation of individual methods, blocks, operations, etc. should not be interpreted as mutually exclusive, limiting, or as being required unless expressly recited as such in the claims.

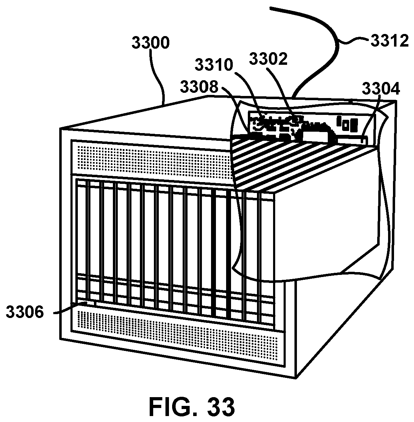

All or portions of some embodiments may be implemented in the cloud or on commercially available computing devices, such as the server computing device 3300 illustrated in FIG. 33. The server computing device 3300 may include a system-on-chip 3200 or one or more processors 3302 coupled to memory 3304, storage devices or storage interfaces 3306, network access ports 3308, a network interface controller 3310, and a communication network connection 3312. The server computing device 3300 may execute a risk map generator, a dynamic scheduler, an insight generation stage, a data fusion stage, an operational data store, a decision support system, a simulation processing system, a data application programming interface, or any combination thereof. The server computing device 3300 may communicate through the communication network connection 3312 with sensing assets, asset-provider interfaces, repository interfaces, weather services, automatic-identification-system data sources, radio-frequency intelligence sources, customer systems, and user interfaces.

The processor 3302 may be any programmable processor, server processor, multicore processor, graphics processor, accelerator, field-programmable gate array, application-specific integrated circuit, or other processing device configured by processor-executable instructions to perform operations described herein. For example, the processor 3302 may receive maritime monitoring inputs, generate a spatiotemporal risk map, generate observation entries, generate an enhanced observation schedule, transmit tasking actions or retrieval actions, obtain observation output, generate current fused maritime intelligence, and generate an updated spatiotemporal risk map. The memory 3304 may store executable instructions, risk maps, observation entries, asset-availability data, asset-constraint data, enhanced observation schedules, observation output, contextual maritime data, current fused maritime intelligence, prior fused maritime intelligence, observability maps, dark-spot records, alert records, and audit records. The storage devices or storage interfaces 3306 may store historical observation output, vessel fingerprints, threat fingerprints, provider metadata, scheduler performance data, customer policies, and other persistent data used across monitoring iterations.

The network access ports 3308 and network interface controller 3310 may support wired or wireless data communication between the server computing device 3300 and other components of the maritime situational awareness system. For example, the network interface controller 3310 may transmit provider-specific tasking requests to sensing-asset interfaces and may receive observation output, provider responses, limited feedback, weather data, automatic-identification-system data, radio-frequency intelligence data, public-source intelligence, or customer instructions through the communication network connection 3312. In some embodiments, the server computing device 3300 may operate as a ground processing system, cloud processing system, relay processing system, or edge processing system. In some embodiments, multiple server computing devices 3300 may operate together to distribute dynamic scheduling, data fusion, risk-map updating, simulation, user-interface generation, and data application programming interface operations.

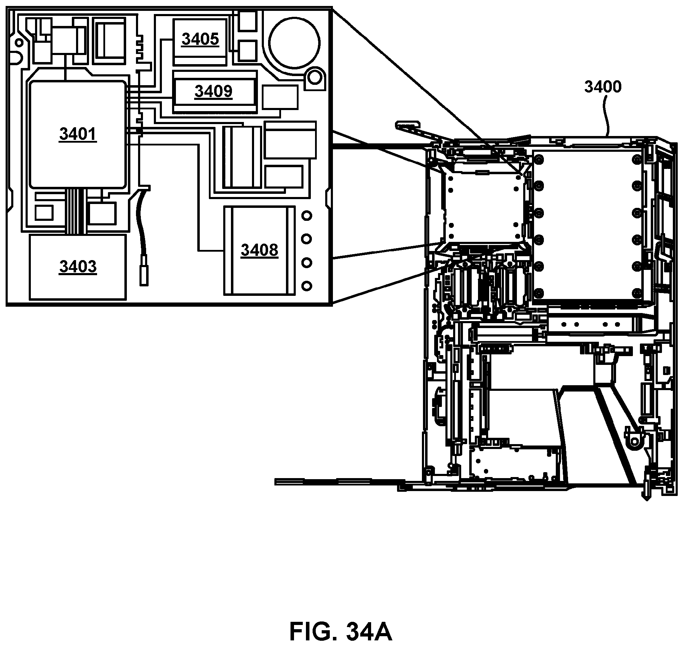

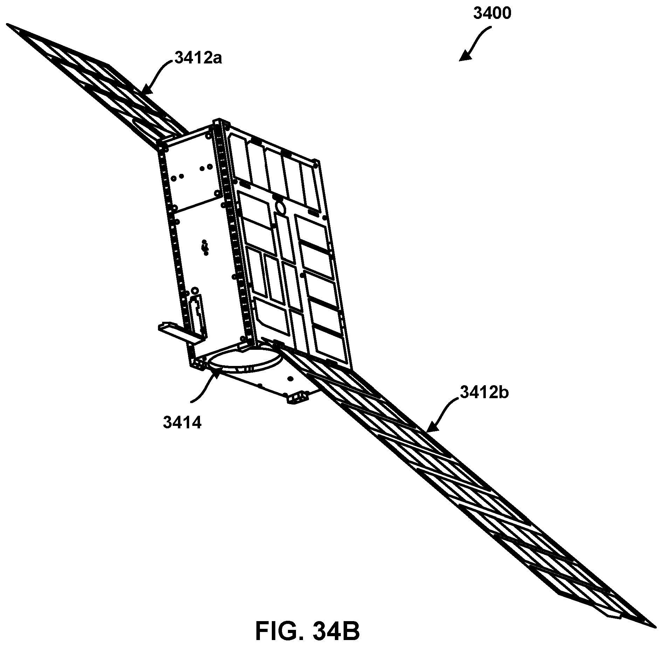

Various embodiments may be implemented on one or more spacecraft, such as the spacecraft 3400 illustrated in FIGS. 34A and 34B. The spacecraft 3400 may be a CubeSat, small satellite, hosted payload, Earth-observation satellite, synthetic-aperture-radar satellite, radio-frequency collection satellite, multispectral satellite, hyperspectral satellite, or other orbital sensing asset. As illustrated in FIG. 34A, the spacecraft 3400 may include a processor 3401 coupled to memory 3403, communication circuitry or a transceiver 3405, a payload or sensor interface 3408, and system-control or attitude-control circuitry 3409. The spacecraft 3400 may use those components to acquire sensor data, perform onboard insight extraction, package observation output, and transmit low-latency maritime intelligence to a ground processing system or relay system.

The processor 3401 may execute spacecraft control logic, payload-control logic, onboard-processing logic, communications logic, or mission logic for a monitoring iteration. For example, the processor 3401 may receive a scheduled observation action, control a payload through the payload or sensor interface 3408, receive sensor data, execute a vessel-detection or feature-extraction routine, generate sensor-derived insight data, and store an onboard-extracted insight packet in the memory 3403. The memory 3403 may include volatile memory and nonvolatile memory for storing executable instructions, sensor data, model parameters, observation entries, tasking instructions, risk-map tiles, sensor-derived insight data, provider metadata, and transmission queues. The communication circuitry or transceiver 3405 may transmit sensor-derived insight data, thumbnails, cropped images, feature vectors, acquisition confirmations, and other observation output through a ground-station link, direct-to-ground link, inter-satellite link, tactical downlink, relay link, or provider network link.

The payload or sensor interface 3408 may couple the processor 3401 to one or more payloads or sensors on the spacecraft 3400. For example, the payload or sensor interface 3408 may interface with an electro-optical camera, synthetic-aperture-radar payload, radio-frequency receiver, multispectral sensor, hyperspectral sensor, thermal sensor, timing sensor, navigation sensor, or attitude sensor. The system-control or attitude-control circuitry 3409 may support pointing, timing, orbit-state handling, payload activation, and acquisition-window execution for a scheduled observation action. In some embodiments, the processor 3401 may use the system-control or attitude-control circuitry 3409 to align the payload with a target coordinate or area geometry associated with an observation entry.

As illustrated in FIG. 34B, the spacecraft 3400 may include solar panels 3412a and 3412b and a payload aperture or camera 3414. The solar panels 3412a and 3412b may provide electrical power for sensing, onboard processing, storage, attitude control, and communications operations. The payload aperture or camera 3414 may acquire image data or other sensor data for a maritime geographic area according to a scheduled observation action. The spacecraft 3400 may process the acquired data onboard to generate sensor-derived insight data, such as a vessel detection, vessel location, bounding box, cropped image, vessel classification, fingerprint, confidence value, or dark-vessel indication.

In some embodiments, the spacecraft 3400 may implement an onboard portion of the closed-loop maritime situational awareness system. For example, the spacecraft 3400 may receive a tasking action from a dynamic scheduler, acquire sensor data for an observation entry, perform onboard insight extraction using the processor 3401 or an onboard accelerator, transmit an onboard-extracted insight packet through the communication circuitry or transceiver 3405, and store associated metadata in memory 3403. A ground processing system, such as the server computing device 3300, may receive the onboard-extracted insight packet, retrieve contextual maritime data, generate current fused maritime intelligence, and update a spatiotemporal risk map for a subsequent monitoring iteration. The same architecture may also support full sensor-data downlink when onboard insight extraction is unavailable or when a user requests raw or processed sensor data.

The processors discussed in this application may be any programmable microprocessor, microcomputer, or a combination of multiple processor chips configured by software instructions (applications) to perform diverse functions, including those of the various embodiments described herein. Servers often include multiple processors, with dedicated processors for specific tasks such as managing cloud computing operations, data analytics, or wireless communication functions. Software applications may be stored in the internal memory before being accessed and executed by the processor. Modern processors may include extensive internal memory, often augmented with fast access cache memory, to efficiently store and process application software instructions.

As used in this application, terminology such as "component," "module," "system," etc., is intended to encompass a computer-related entity. These entities may involve, among other possibilities, hardware, firmware, a blend of hardware and software, software alone, or software in an operational state. As examples, a component may encompass a running process on a processor, the processor itself, an object, an executable file, a thread of execution, a program, or a computing device. To illustrate further, both an application operating on a computing device and the computing device itself may be designated as a component. A component might be situated within a single process or thread of execution or could be distributed across multiple processors or cores. In addition, these components may operate based on various non-volatile computer-readable media that store diverse instructions and/or data structures. Communication between components may take place through local or remote processes, function, or procedure calls, electronic signaling, data packet exchanges, memory interactions, among other known methods of network, computer, processor, or process-related communications.

A variety of memory types and technologies, both currently available and anticipated for future development, may be incorporated into systems and computing devices that implement the various embodiments. These memory technologies may include non-volatile random-access memories (NVRAM) such as magnetoresistive RAM (MRAM), resistive random-access memory (ReRAM or RRAM), phase-change memory (PCM, PC-RAM, or PRAM), ferroelectric RAM (FRAM), spin-transfer torque magnetoresistive RAM (STT-MRAM), and three-dimensional cross point (3D XPoint) memory. Non-volatile or read-only memory (ROM) technologies may also be included, such as programmable read-only memory (PROM), field programmable read-only memory (FPROM), and one-time programmable non-volatile memory (OTP NVM). Volatile random-access memory (RAM) technologies may further be utilized, including dynamic random-access memory (DRAM), double data rate synchronous dynamic random-access memory (DDR SDRAM), static random-access memory (SRAM), and pseudostatic random-access memory (PSRAM). Additionally, systems and computing devices implementing these embodiments may use solid-state non-volatile storage mediums, such as FLASH memory. The aforementioned memory technologies may store instructions, programs, control signals, and/or data for use in computing devices, system-on-chip (SoC) components, or other electronic systems. Any references to specific memory types, interfaces, standards, or technologies are provided for illustrative purposes and do not limit the claims to any particular memory system or technology unless explicitly recited in the claim language.

The foregoing method descriptions and the process flow diagrams are provided merely as illustrative examples and are not intended to require or imply that the blocks of the various aspects must be performed in the order presented. As may be appreciated by one of skill in the art the order of steps in the foregoing aspects may be performed in any order. Words such as "thereafter," "then," "next," etc. are not intended to limit the order of the blocks, these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithmic steps described in connection with the aspects disclosed herein may be implemented as electronic hardware, computer software, or combinations of both. To clearly illustrate the interchangeability of hardware and software, various components, blocks, modules, circuits, and steps have been described in terms of their functionality. Whether such functionality is implemented as hardware or software may depend on the specific application and the design constraints of the overall system. Skilled artisans may implement the described functionality in different ways for each particular application, and such implementation decisions should not be interpreted as limiting or altering the scope of the claims unless explicitly recited in the claim language.

The hardware used to implement the various illustrative logics, logical blocks, modules, and circuits described in connection with the embodiments disclosed herein may include or be performed by a general-purpose processor, a digital signal processor (DSP), an application-specific integrated circuit (ASIC), a field-programmable gate array (FPGA), a graphics processing unit (GPU), a tensor processing unit (TPU), or other programmable logic devices, discrete gate or transistor logic, discrete hardware components, or any combination thereof, designed to perform the functions described. A general-purpose processor may be a microprocessor, or alternatively, it may be any conventional processor, controller, microcontroller, or state machine. A processor may also be implemented as a combination of computing devices, such as a DSP combined with a microprocessor, multiple microprocessors, one or more microprocessors used in conjunction with a DSP core, a GPU, or AI accelerators such as TPUs. Alternatively, some operations or methods may be performed by circuitry designed specifically for a given function.

In one or more embodiments, the functions described may be implemented in hardware, software, firmware, or any combination thereof. If implemented in software, the functions may be stored as one or more instructions or code on a non-transitory computer-readable medium or non-transitory processor-readable medium. The operations of a method or algorithm disclosed herein may be embodied in a processor-executable software module that resides on a non-transitory computer-readable or processor-readable storage medium. Non-transitory computer-readable or processor-readable storage media include any storage media that may be accessed by a computer or processor. By way of example, but not limitation, such non-transitory computer-readable or processor-readable media may include RAM, ROM, EEPROM, flash memory, SSDs, NVMe drives, 3D NAND flash, magnetic storage, optical storage, network-attached storage, object storage, cloud-based storage resources, or any other medium capable of storing program code in the form of instructions or data structures that may be accessed by a computer. Cloud-based storage solutions, including infrastructure-as-a-service platforms, may provide scalable and distributed options for storing and accessing program code. Stored program code, data structures, and execution records may be protected or verified using conventional data-integrity, authentication, encryption, redundancy, access-control, versioning, or audit-log mechanisms. In addition, the operations of a method or algorithm may reside as one or more sets of instructions or code on a non-transitory processor-readable or computer-readable medium, which may be incorporated into a computer program product. AI and ML-improved hardware accelerators, such as GPUs, TPUs, neural-processing units, and other dedicated processing units, may be used to execute complex algorithms described herein.

The preceding description of the disclosed aspects is provided to enable any person skilled in the art to make or use the claims. Various modifications to these aspects may be apparent to those skilled in the art, and the generic principles defined herein may be applied to other aspects without departing from the scope of the claims. Thus, the present disclosure is not intended to be limited to the aspects shown herein but is to be accorded the widest scope consistent with the following claims and the principles and novel features disclosed herein.

## Claims

1. A computer-implemented method performed by a processing system for controlling sensing assets to generate iterative maritime situational awareness for a maritime geographic area, the method comprising:
generating, from maritime monitoring inputs, a spatiotemporal risk map comprising a plurality of spatiotemporal cells for the maritime geographic area;
generating, from the spatiotemporal risk map, a plurality of observation entries by transforming selected spatiotemporal cells of the plurality of spatiotemporal cells into the plurality of observation entries based on risk values associated with the selected spatiotemporal cells;
generating an enhanced observation schedule by transforming the plurality of observation entries, asset-availability data for a plurality of sensing assets, and asset-constraint data for the plurality of sensing assets into assignments of selected observation entries of the plurality of observation entries to respective scheduled observation actions; and
causing execution of the respective scheduled observation actions in accordance with the enhanced observation schedule.

2. The computer-implemented method of claim 1, further comprising receiving the maritime monitoring inputs for a current monitoring iteration, wherein the received maritime monitoring inputs comprise at least one or more of configuration information for the maritime geographic area, maritime risk-indicator data from one or more external data sources, the asset-availability data for the plurality of sensing assets, the asset-constraint data for the plurality of sensing assets, and prior fused maritime intelligence generated during a preceding monitoring iteration.

3. The computer-implemented method of claim 1, wherein:
each spatiotemporal cell of the plurality of spatiotemporal cells includes at least one or more a spatial coordinate, a temporal coordinate, and a risk value;
each observation entry of the plurality of observation entries identifies a corresponding selected spatiotemporal cell of the selected spatiotemporal cells; and
each scheduled observation action of the respective scheduled observation actions comprises:
a tasking action for a taskable sensing asset of the plurality of sensing assets; or
a retrieval action for observation data from a non-tasked sensing asset of the plurality of sensing assets.

4. The computer-implemented method of claim 1, further comprising:
obtaining, through one or more sensing-asset interfaces, observation output for the selected observation entries;
retrieving contextual maritime data from one or more external data sources for the selected observation entries;
generating current fused maritime intelligence by transforming the observation output and the contextual maritime data into an intelligence record; and
generating an updated spatiotemporal risk map for a subsequent monitoring iteration from the spatiotemporal risk map and the current fused maritime intelligence.

5. The computer-implemented method of claim 4, further comprising:
retrieving the contextual maritime data within a spatial search window and a temporal search window associated with the selected observation entries; and
aligning the contextual maritime data with the observation output through temporal interpolation, spatial interpolation, coordinate transformation, uncertainty modeling, source-confidence weighting, stale-data filtering, or duplicate-message removal.

6. The computer-implemented method of claim 4, further comprising:
matching sensor-derived vessel information included in the observation output with automatic-identification-system vessel information included in the contextual maritime data; and
generating the current fused maritime intelligence based on a matching score between the sensor-derived vessel information and the automatic-identification-system vessel information.

7. The computer-implemented method of claim 6, further comprising:
refining a geolocation estimate for the observation output using a plurality of matching scores between sensor-derived vessel information and automatic-identification-system vessel information; and
regenerating at least one intelligence record of the one or more intelligence records using the refined geolocation estimate.

8. The computer-implemented method of claim 6, further comprising generating a dark-vessel indication based on a sensor-derived vessel detection in the observation output lacking a matching automatic-identification-system vessel report in the contextual maritime data, optionally the computer implemented method further comprising generating a spoofing indication based on a mismatch between sensor-derived vessel information in the observation output and automatic-identification-system vessel information in the contextual maritime data.

9. The computer-implemented method of claim 1, further comprising:
generating one or more predicted future vessel paths for a vessel of interest from one or more of course, speed, heading, automatic-identification-system data, historical track data, weather data, bathymetry data, route data, or vessel-class data; and
assigning one or more risk values to one or more spatiotemporal cells of the plurality of spatiotemporal cells based on the one or more predicted future vessel paths.

10. The computer-implemented method of claim 1, further comprising:
generating an anomaly score for a vessel of interest from at least one or more of a route deviation, a speed change, a heading change, a loitering pattern, an automatic-identification-system outage, an unexpected proximity event, and a mismatch between sensor-derived vessel information and reported vessel information; and
modifying at least one risk value of the plurality of spatiotemporal cells based on the anomaly score.

11. The computer-implemented method of claim 1, further comprising merging overlapping observation entries of the plurality of observation entries based on at least one or more of spatial overlap, temporal overlap, modality compatibility, feature-of-interest commonality, customer-permission compatibility, and delivery-latency compatibility.

12. The computer-implemented method of claim **1,** further comprising generating candidate observation opportunities for the plurality of sensing assets from the asset-availability data and the asset-constraint data, each candidate observation opportunity of the candidate observation opportunities comprising at least one or more of an asset identifier, a candidate observation time, a candidate delivery time, a footprint, a modality, a cost, and an expected success probability, optionally, the computer implemented method further comprising generating the enhanced observation schedule by selecting from the candidate observation opportunities according to an objective function that uses at least one or more of expected risk reduction, expected observation value, coverage of high-risk cells, cost, delivery latency, duplicate-observation reduction, confidence, modality suitability, and feature-of-interest observability.

13. The computer-implemented method of claim 1, further comprising:
receiving an execution-change signal identifying at least one or more of a weather change, a provider rejection, a budget change, a sensing-asset status change, a delivery-latency change, a new high-risk observation entry, and a changed vessel prediction; and
regenerating at least a portion of the enhanced observation schedule based on the execution-change signal.

14. A computing system, comprising:
a processing system comprising at least one or more processors configured to perform the method of any one of claims 1 to 13.

15. A non-transitory processor-readable medium having stored thereon processor-executable instructions configured to cause a processing system in a computing device to perform the method of any one of claims 1 to 13.
